(19) Europäisches Patentamt
European Patent Office
Office européen des brevets

(11) **EP 4 192 257 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **21758619.7**

(22) Anmeldetag: **28.07.2021**

(51) Internationale Patentklassifikation (IPC):
**A23G 9/32** *(2006.01)* **A23G 9/34** *(2006.01)*
**A23G 9/42** *(2006.01)* **A23L 29/231** *(2016.01)*

(52) Gemeinsame Patentklassifikation (CPC):
**A23G 9/34; A23G 9/32; A23G 9/42; A23L 29/231**

(86) Internationale Anmeldenummer:
**PCT/EP2021/071133**

(87) Internationale Veröffentlichungsnummer:
**WO 2022/028979 (10.02.2022 Gazette 2022/06)**

(54) **PEKTINHALTIGE PFLANZENFASERZUSAMMENSETZUNG FÜR SPEISEEIS AUF PFLANZLICHER BASIS**

PECTIN-CONTAINING PLANT FIBER COMPOSITION FOR PLANT-BASED ICE CREAM

COMPOSITION DE FIBRE VÉGÉTALE CONTENANT DE LA PECTINE POUR CRÈME GLACÉE À BASE DE PLANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2020 DE 102020120483**

(43) Veröffentlichungstag der Anmeldung:
**14.06.2023 Patentblatt 2023/24**

(73) Patentinhaber: **Herbstreith & Fox GmbH & Co. KG Pektin-Fabriken**
**75305 Neuenbürg (DE)**

(72) Erfinder: **MARTIN, Philipp**
**14542 Werder (Havel) (DE)**

(74) Vertreter: **Viering, Jentschura & Partner mbB Patent- und Rechtsanwälte**
**Hamborner Straße 53**
**40472 Düsseldorf (DE)**

(56) Entgegenhaltungen:
**WO-A1-00/40098 WO-A1-2009/075851**
**WO-A2-2019/048715 CN-A- 102 823 657**
**CN-A- 110 973 415 JP-A- 2016 106 587**
**US-A- 5 641 533 US-A1- 2011 268 860**
**US-A1- 2013 230 631 US-A1- 2018 192 667**
**US-B2- 6 706 306**

**Beschreibung**

Die vorliegende Erfindung betrifft die Verwendung einer Zusammensetzung zur Herstellung von Speiseeis, die Pflanzenfaser, niederverestertes, bevorzugt amidiertes, lösliches Pektin und hochverestertes lösliches Pektin umfasst. Des Weiteren betrifft die Erfindung Speiseeis, das die erfindungsgemäß verwendete Zusammensetzung enthält, sowie ein Verfahren zur Herstellung des Speiseeises.

**Hintergrund der Erfindung**

Speiseeis und andere Lebensmittel, die bei Temperaturen unter dem Gefrierpunkt von Wasser gelagert werden und für den direkt anschließenden Verzehr gedacht sind, müssen besonderen Anforderungen genügen. So soll Speiseeis bei höheren Temperaturen nicht sofort schmelzen und sich trotzdem angenehm cremig im Mund anfühlen. Das Speiseeis muss zudem bei regelmäßigem Wiedereinfrieren eine bestmöglich gleichbleibende Qualität aufweisen und muss oft über lange Lagerzeiträume stabil bleiben.

Der wichtigste Qualitätsparameter für Speiseeis ist die Textur. Das Speiseeis sollte sich glatt anfühlen, was dadurch erzielt wird, dass die im Speiseeis enthaltenen festen Partikel so klein sind, dass sie vom Konsumenten sensorisch nicht wahrgenommen werden. Weist das Speiseeis hingegen feste Partikel einer spürbaren Größe auf, so führt dies regelmäßig zu einem negativen Geschmackserlebnis, bei dem das Speiseeis als rau, eisig und/oder sandig wahrgenommen wird. Bei den festen Partikeln einer spürbaren Größe handelt es sich üblicherweise um Eiskristalle ab einem Kristalldurchmesser von 55 $\mu$m.

Die Größe der Eiskristalle im Speiseeis und ähnlichen gefrorenen Lebensmitteln kann durch eine Vielzahl an Faktoren beeinflusst werden. Durch partielles Schmelzen der Eiskristalle und anschließendes Wiederausfrieren des Wassers wachsen die Eiskristalle im Laufe der Lagerung an. Dieser Effekt ist bei einer inhomogenen Eismatrix besonders stark ausgeprägt, da aufgrund von Wasserdampfpartialdruckunterschieden innerhalb der Eismatrix kleinere Wassermoleküle zu größeren diffundieren und so zum Wachstum der Eiskristalle beitragen (Ostwald-Reifung). Ein weiterer beobachtbarer Effekt, der zum Eiskristallwachstum beim Rekristallisieren führt, ist das Zusammenwachsen von zwei oder mehreren kleineren Kristallen zu einem größeren Kristall (Koaleszenz). Faktoren, die das Wachstum der Eiskristalle im Laufe der Lagerung von Speiseeis und anderen gefrorenen bzw. stark gekühlten Lebensmitteln besonders beeinflussen, sind der Temperaturgradient bei der Herstellung des Lebensmittels, die Lagerungstemperatur und insbesondere die Temperaturschwankungen bei der Lagerung, der Gefrierpunkt des Wassers im Lebensmittel, die Menge an eingeschlagener Luft (Lufteinschlag), der Wasseranteil und die Viskosität der ungefrorenen Serumphase.

Ein weiteres wichtiges Qualitätsmerkmal von Speiseeis und anderen gefrorenen Lebensmitteln ist das Abschmelzverhalten beziehungsweise die Formstabilität. Das Abschmelzverhalten von Speiseeis hängt wesentlich von der Rezeptur- und den Prozessparametern ab, wobei insbesondere die Viskosität des Speiseeises, der Anteil an Fett und insbesondere an destabilisiertem Fett, die Eiskristallmorphologie, der Aufschlag (das Unterschlagen von Luft oder Stickstoff in die Eismasse), der Zuckergehalt, der Wasseranteil sowie der Gefrierpunkt das Abschmelzverhalten beeinflussen. Schmilzt das Speiseeis zu schnell ab, so kommt es zur Ausbildung einer Soße und das Speiseeis tropft, was als unangenehm wahrgenommen wird. Schmilzt das Speiseeis hingegen zu langsam, kann dies den Verzehr des Speiseeises negativ beeinflussen und zu einem eisigen Geschmackseindruck führen. Durch den Trend zur Reduktion von Fett, Luft und Zucker im Speiseeis wird das Einstellen eines optimalen Abschmelzverhaltens weiter erschwert.

Um eine gute Textur und gleichzeitig ein gutes Abschmelzverhalten beziehungsweise eine hohe Formstabilität zu erzielen, werden Stabilisierungssysteme eingesetzt, die flüssiges Wasser binden und die Serumviskosität der ungefrorenen Phase erhöhen. An diese Stabilisierungssysteme werden hohe Anforderungen gesetzt. Zum einen müssen die Stabilisierungssysteme die Textur und das Abschmelzverhalten beziehungsweise die Formstabilität verbessern. Zum anderen müssen sich die Stabilisierungssysteme gut einarbeiten lassen, geschmacksneutral sein, einen geringen Kaloriengehalt aufweisen, eine hohe Temperaturstabilität aufweisen sowie lagerstabil und möglichst preiswert sein. Ein weiterer Faktor, der in den vergangenen Jahren zunehmend an Bedeutung gewonnen hat, ist das Clean Labelling. Bei Clean Labelling geht es darum, möglichst auf kennzeichnungspflichtige Inhaltsstoffe mit sogenannten E-Nummern zu verzichten. Verbraucher achten verstärkt auf die Inhaltsstoffe von Lebensmitteln und wünschen sich zunehmend einen möglichst geringen Anteil an kennzeichnungspflichtigen Inhaltsstoffen wie Farbstoffe, Konservierungsstoffe, Aromen und Geschmacksverstärker. Folglich sollten die Stabilisierungssysteme möglichst wenige unterschiedliche kennzeichnungspflichtige Bestandteile enthalten.

Als Stabilisierungssysteme von Speiseeis werden gängigerweise Hydrokolloide wie Johannisbrotkernmehl (E410), Guarkernmehl (E412), Natriumalginat (E401), Carboxymethylcellulose (E466-468), Xanthan (E415), Carrageen (E407), Gelatine oder native Stärken eingesetzt. Besonders üblich ist hierbei der Einsatz einer Kombination von Johannisbrotkernmehl und Guarkernmehl zur Stabilisierung von Speiseeis.

Mit den heutzutage gängigen Stabilisierungssystemen für Speiseeis und ähnliche gefrorene Lebensmittel ist es allerdings noch nicht möglich, ein optimales Verhältnis aus angenehmer Textur, hoher Formstabilität und gutem Abschmelzverhalten zu erzielen.

Die Druckschrift CN 110 973 415 A betrifft ein Multifasergetränk mit Zitronengeschmack und ein Verfahren zu dessen Herstellung. Das Multifasergetränk umfasst. Das Getränk umfasst Citrusfaser, hochverestertes Pektin und niederverestertes Pektin.

Die Druckschrift US 2018/0192667 A1 betrifft ein fettreduziertes gefrorenes Lebensmittel umfassend entweder Citrusfasern und niederverestertes Pektin oder Citrusfaser und hochverestertes Pektin.

Die Druckschrift CN 102 823 657 A betrifft ein angesäuertes vegetarisches Getränk und lehrt Getränke, die hochverestertes Pektin, niederverestertes Pektin und mikrokristalline Cellulose enthalten, wobei die mikrokristalline Cellulose eine reine Cellulosefaser darstellt.

Die Druckschrift WO 00/40098 A1 betrifft eine Pektin-Zusammensetzung zur Fettreduktion oder zur Verwendung als Emulgator umfassend kreuzvernetztes Pektin.

Die Druckschrift US 6,706,306 B2 betrifft die Herstellung eines backstabilen Pektin-basierten pastösen Lebensmittels, wobei das Pektin u.a. mit Apfelpulver oder mikrokristalliner Zellulose kombiniert werden kann. Die mikrokristalline Cellulose stellt eine reine Cellulosefaser dar.

Die Druckschrift US 5,641,533 A betrifft die Herstellung einer fettfreien oder fettreduzierten Mayonnaise umfassend niederverestertes Pektin, wobei das niederveresterte Pektin mit anderen Stabilisatoren wie hochverestertem Pektin oder mikrokristalliner Zellulose gemischt werden kann. Die mikrokristalline Cellulose stellt eine reine Cellulosefaser dar.

Die Druckschrift JP 2016-106587 A betrifft eine Cellulose-Komplex enthaltende Eiscreme-Zusammensetzung und lehrt die Verwendung einer kristallinen Zellulose, wobei die kristalline Cellulose eine reine Cellulosefaser darstellt.

Die Druckschrift US 2013/0230631 A betrifft eine Pulvermischung, die ein schnell-lösliches Pektin mit definierten Ionengehalten aufweist, wobei das schnell-lösliche Pektin entweder aus hochverestertem Pektin oder aus niederverestertem Pektin hergestellt wird.

Die Druckschrift WO 2009/075851 A1 betrifft trockene Gemische, enthaltend Fasern aus Citruspulpe und mindestens eine Komponente, die aus der Gruppe ausgewählt ist, die aus Hydrokolloiden, Lipiden, Kohlenhydraten und Proteinen besteht.

Die Druckschrift WO 2019/048715 A1 betrifft Zusammensetzungen die aktivierte pektinhaltige Biomassen enthalten. Der Anteil an wasserlöslichem Pektin in diesen Biomassen beträgt 39 - 45 Gew.%.

Die Druckschrift US 2011/0268860 A betrifft Milchprodukte, die hochraffinierte Cellulosefasern enthalten, wobei diese Fasern durch die Anwesenheit nichtlöslicher Polymere wie Cellulose, modifizierte Cellulose, derivatisierte Cellulose, Hemicellulose oder Lignin charakterisiert sind.

Die vorliegende Erfindung stellt sich somit die Aufgabe, eine Zusammensetzung bereitzustellen, die sich zur Stabilisierung von Speiseeis eignet und die den Stand der Technik verbessert oder ihm eine Alternative bietet.

Diese Aufgabe wird gelöst durch die Verwendung der Zusammensetzung nach Anspruch 1, das Speiseeis nach Anspruch 12 und das Verfahren zur Herstellung des Speiseeises nach Anspruch 15.

Bevorzugte Ausgestaltungen der Erfindung finden sich in den abhängigen Ansprüchen und werden nachfolgend erläutert.

## Zusammenfassung der Erfindung

Die Erfindung betrifft die Verwendung einer Zusammensetzung zur Herstellung von Speiseeis, niederkalorischem Speiseeis, pflanzlichem Speiseeis, oder von Speiseeis mit Insektenprotein, wobei die Zusammensetzung eine Pflanzenfaser mit einem Gehalt an wasserlöslichem Pektin von zwischen 2 und 10 Gew.%, ein niederverestertes lösliches Pektin mit einem Veresterungsgrad von weniger als 50%, ein hochverestertes lösliches Pektin mit einem Veresterungsgrad von mindestens 50% und optional Zucker umfasst.

Überraschenderweise hat sich gezeigt, dass sich mit der Verwendung einer solchen Zusammensetzung Speiseeis stabilisieren lassen. Nicht Teil der Erfindung ist die Verwendung einer solchen Zusammensetzung für andere gefrorene, zum direkten Verzehr geeignete Lebensmittel. Wird die erfindungsgemäß verwendete Zusammensetzung zur Stabilisierung von Speiseeis oder anderen gefrorenen, zum direkten Verzehr geeigneten Lebensmitteln eingesetzt, so wird eine verbesserte Lagerstabilität bei guter Kontrolle über die Eiskristallgröße erzielt.

Mit der erfindungsgemäß verwendeten Zusammensetzung wird die Abschmelzgeschwindigkeit von Speiseeis gesenkt, sodass das Speiseeis auch bei sommerlichen Temperaturen an der Luft stabil bleibt und trotzdem angenehm zergeht beim Verzehr.

Ein weiterer Vorteil der erfindungsgemäß verwendeten Zusammensetzung besteht darin, dass sie in größeren Mengen im Speiseeis vorliegen kann als im Stand der Technik beschriebene Stabilisierungssysteme ohne einen negativen Einfluss auf die Sensorik des Speiseeises zu haben.

Mit der erfindungsgemäß verwendeten Zusammensetzung kann zudem eine optimale Geschmacks- und Aromafreisetzungen erreicht werden.

Sämtliche Bestandteile der erfindungsgemäß verwendeten Zusammensetzung sind aus Pflanzen und bevorzugt aus Früchten gewonnen und stellen somit natürliche Inhaltsstoffe mit bekannten positiven Eigenschaften dar. Zudem stellt die erfindungsgemäß verwendete Zusammensetzung auf diese Weise ein veganes Halberzeugnis dar.

Sowohl Pflanzenfasern als auch Pektine sind in der Lebensmittelindustrie etabliert und akzeptiert, so dass entsprechende Zusammensetzungen ohne langwierige Zulassungsverfahren sofort und auch international zum Einsatz kommen können.

Die oben aufgeführten Grundkomponenten werden üblicherweise aus pflanzlichen Verarbeitungsrückständen wie Citrus- oder Apfeltrester gewonnen. Diese liegen in ausreichender Menge vor und bieten eine nachhaltige und ökologisch sinnvolle Quelle für die vorliegenden Grundkomponenten. Beachtlicherweise können sowohl die Pflanzenfaser als auch das Pektin aus ein und derselben Rohstoffquelle gewonnen werden. So kann beispielsweise aus Citrustrester sowohl Citrusfaser als auch Citruspektin mit verschiedenen Veresterungsgraden gewonnen werden. Entsprechend kann auch aus Apfeltrester sowohl Apfelfaser als auch Apfelpektin mit verschiedenen Veresterungsgraden gewonnen werden.

Die vorliegend verwendete Zusammensetzung hat das Potential einer verbesserten Verbraucherakzeptanz, da natürliche pflanzenbasierte Produkte eingesetzt werden.

Aufgrund der guten Kompatibilität der unterschiedlichen Bestandteile der erfindungsgemäß verwendeten Zusammensetzung wird auf diese Weise ein homogenes und besonders gleichmäßiges Produkt erhalten.

Ohne an eine bestimmte wissenschaftliche Theorie gebunden sein zu wollen, scheint die überraschende stabilisierende Wirkung der erfindungsgemäß verwendeten Zusammensetzung darauf zurückzuführen zu sein, dass durch die Kombination an löslichen Pektinen und unlöslicher Pflanzenfaser eine hohe Serumviskosität der ungefrorenen Serumphase im gefrorenen Lebensmittel erzielt wird, durch die die Bewegung von Eiskristallen zueinander verlangsamt wird. Auf diese Weise wird das Wachstum von Eiskristallen in der während der Lagerung permanent stattfindenden Rekristallisierungsphase verlangsamt. Die unlösliche Pflanzenfaser setzt sich zudem punktuell zwischen die Eiskristalle und verhindert dadurch das Zusammenwachsen zu größeren Eiskristallen (Koaleszenz). Es wird angenommen, dass die unlöslichen Pflanzenfasern zudem sterische Hindernisse aufbauen, die das Abschmelzen verlangsamen. Gleichzeitig werden die Pflanzenfasern beim Verzehr von Speiseeis oder anderen gefrorenen, direkt zum Verzehr geeigneten Lebensmitteln, sensorisch nicht wahrgenommen.

## Die Erfindung im Einzelnen

Die erfindungsgemäß verwendete Zusammensetzung umfasst als Grundkomponenten Pflanzenfaser mit einem Gehalt an wasserlöslichem Pektin von zwischen 2 und 10 Gew.%, niederverestertes lösliches Pektin mit einem Veresterungsgrad von weniger als 50% und hochverestertes lösliches Pektin mit einem Veresterungsgrad von mindestens 50%. Hierbei ist das niederveresterte lösliche Pektin bevorzugt ein niederverestertes amidiertes lösliches Pektin.

Damit enthält die erfindungsgemäß verwendete Zusammensetzung insgesamt drei Pektinquellen, wovon zwei Pektine löslich sind und als niederverestertes, bevorzugt amidiertes, und hochverestertes Pektin getrennt von den Pflanzenfasern vorliegen und als dritte Pektinquelle die Pflanzenfaser, die neben dem unlöslichen fasergebundenen Pektin (auch als Protopektin bezeichnet) auch wasserlösliches Pektin enthält. Protopektine sind unlösliche Pektine und vermutlich keine reinen Homoglycane. Im Protopektin sind die Polygalacturonsäureketten durch Komplexbindung mit zweiwertigen Kationen, über Ferulasäuregruppen und Borat-Komplexe sowie über glycosidische Bindungen mit Neutralzuckerseitenketten, die aus Arabinose, Galaktose, Xylose, Mannose und Spuren von Fucose bestehen können, untereinander verbunden. Da die Pflanzenfaser wie vorab ausgeführt auch wasserlösliches Pektin enthält, wird sie im Rahmen der Erfindung auch als "pektinhaltige Pflanzenfaser" bezeichnet.

Gemäß einer weiteren Ausführungsform besteht die erfindungsgemäß verwendete Zusammensetzung im Wesentlichen aus Pflanzenfaser, niederverestertem, bevorzugt amidiertem, löslichen Pektin und hochverestertem löslichen Pektin. Hierbei bedeutet "im Wesentlichen", dass die verwendete Zusammensetzung höchstens 5 Gew.%, vorzugsweise höchstens 4 Gew.%, bevorzugt höchstens 3 Gew.%, weiter bevorzugt höchstens 1 Gew.% andere Komponenten enthält. Gemäß einer anderen Ausführungsform besteht die erfindungsgemäß verwendete Zusammensetzung aus Pflanzenfaser, niederverestertem, bevorzugt amidiertem, löslichen Pektin und hochverestertem löslichen Pektin.

Gemäß einer weiteren bevorzugten Ausführungsform besteht die erfindungsgemäß verwendete Zusammensetzung im Wesentlichen aus Pflanzenfaser, niederverestertem, bevorzugt amidiertem, löslichen Pektin, hochverestertem löslichen Pektin und Zucker. Hierbei bedeutet "im Wesentlichen", dass die verwendete Zusammensetzung höchstens 5 Gew.%, vorzugsweise höchstens 4 Gew.%, bevorzugt höchstens 3 Gew.%, weiter bevorzugt höchstens 1 Gew.% andere Komponenten enthält. Gemäß einer anderen Ausführungsform besteht die erfindungsgemäß verwendete Zusammensetzung aus Pflanzenfaser, niederverestertem, bevorzugt amidiertem, löslichen Pektin, hochverestertem löslichen Pektin und Zucker.

Die Pflanzenfaser ist vorzugsweise eine Pflanzenfaser, die Protopektin enthält. Gemäß einer bevorzugten Ausgestaltung der erfindungsgemäß verwendeten Zusammensetzung ist die Pflanzenfaser ausgewählt aus der Gruppe aufweisend Citrusfaser, Apfelfaser, Zuckerrübenfaser, Möhrenfaser und Erbsenfaser. Diese Pflanzenfasern haben sich als besonders gut geeignet herausgestellt, da sie die Sensorik des Speiseeises nicht beeinflussen und in den jeweiligen Pflanzen in hinreichender Menge zur günstigen Gewinnung enthalten sind.

In einer besonders bevorzugten Ausgestaltung ist die Pflanzenfaser eine Citrusfaser oder eine Apfelfaser. Citrus- und Apfelfasern sind besonders günstig zu erhalten und lassen sich gut in Lebensmittel einarbeiten. Zudem kann aufgrund der spezifischen Auffaltung der Citrus- und Apfelfasern das Abschmelzverhalten des Speiseeises besonders gut kontrolliert werden.

Citrusfasern können von einer breiten Auswahl an Citrusfrüchten gewonnen werden. In nicht einschränkender Weise seien hier beispielhaft aufgeführt: Mandarine *(Citrus reticulata)*, Clementine *(Citrus x aurantium* Clementine-Gruppe, Syn.: *Citrus clementina)*, Satsuma *(Citrus $\times_{aurantium}$* Satsuma-Gruppe, Syn.: *Citrus unshiu)*, Mangshan *(Citrus mangshanensis)*, Orange *(Citrus $\times_{aurantium}$* Orangen-Gruppe, Syn.: *Citrus sinensis)*, Bitterorange *(Citrus $\times_{aurantium}$* Bitterorangen-Gruppe)*, Bergamotte *(Citrus $\times limon$* Bergamotte-Gruppe, Syn.: *Citrus bergamia)*, Pampelmuse *(Citrus maxima)*, Grapefruit *(Citrus $\times_{aurantium}$* Grapefruit-Gruppe, Syn.: *Citrus paradisi)* Pomelo *(Citrus $\times_{aurantium}$* Pomelo-Gruppe)*, echte Limette *(Citrus $\times aurantiifolia)*, gewöhnliche Limette *(Citrus $\times aurantiifolia,$* Syn.: *Citrus latifolia)*, Kaffernlimette *(Citrus hystrix)*, Rangpur-Limette *(Citrus $\times jambhin)$*, Zitrone *(Citrus $\times limon$* Zitronen-Gruppe)*, Zitronatzitrone *(Citrus medica)* und Kumquats *(Citrus japonica,* Syn.: *Fortunella)*. Bevorzugt sind hierbei die Orange *(Citrus $\times_{aurantium}$* Orangen-Gruppe, Syn.: *Citrus sinensis)* und die Zitrone *(Citrus $\times limon$* Zitronen- Gruppe)*.

Die Apfelfaser kann aus allen dem Fachmann bekannten Kulturäpfeln *(malus domesticus)* gewonnen werden. Als Ausgangsmaterial können hier vorteilhafterweise Verarbeitungsrückstände von Äpfeln eingesetzt werden. Als Ausgangsmaterial kann entsprechend Apfelschale, Kerngehäuse, Kerne oder Fruchtfleisch oder eine Kombination hieraus verwendet werden. In bevorzugter Weise wird als Ausgangsmaterial Apfeltrester verwendet, also die Pressrückstände von Äpfeln, die neben den Schalen typischerweise auch die oben genannten Bestandteile enthalten.

Gemäß einer bevorzugten Ausführungsform weist die verwendete zuckerhaltige Zusammensetzung die Pflanzenfaser in einem Anteil von 20 bis 50 Gew.%, vorzugsweise von 30 bis 40 Gew.%, und besonders bevorzugt von 34 bis 36 Gew.%, bezogen auf das Gesamtgewicht der verwendeten Zusammensetzung, auf. Bevorzugte Anteile an Pflanzenfaser, bezogen auf das Gesamtgewicht der verwendeten Zusammensetzung, sind somit 30%, 31%, 32%, 33%, 34%, 35%, 36%, 37%, 38%, 39% oder 40%, wobei insbesondere 34%, 35% oder 36% besonders bevorzugt sind, wobei dies Gewichtsprozentangaben sind. Ein solcher Anteil an Pflanzenfasern in der erfindungsgemäß verwendeten Zusammensetzung sorgt für eine besonders gute Verarbeitbarkeit und Konsistenz der Zusammensetzung. Zudem weist Speiseeis, das eine Zusammensetzung mit einem solchen Anteil an Pflanzenfasern enthält, eine besonders gute Textur und ein besonders vorteilhaftes Abschmelzverhalten auf. Wird ein Anteil von weniger als 20 Gew.% Pflanzenfaser eingesetzt, so kann es bei hohen Temperaturen im Speiseeis verstärkt zur Bildung größerer Eiskristalle kommen. Wird hingegen ein Anteil an Pflanzenfasern von über 50 Gew.% eingesetzt, so kann dies bei bestimmten Formulierungen zu verstärktem Abschmelzen führen.

Die erfindungsgemäß verwendete Zusammensetzung enthält zudem niederverestertes, bevorzugt amidiertes, lösliches Pektin. Grundsätzlich kann hierbei das niederveresterte, bevorzugt amidierte, lösliche Pektin aus unterschiedlichen Pflanzenquellen gewonnen werden, wobei Apfeltrester, Rübenschnitzel und Citrusschalen aufgrund ihres hohen Pektingehalts besonders vorteilhaft sind. Aufgrund des hohen Pektingehalts in Citrusschalen hat es sich als besonders vorteilhaft herausgestellt, wenn das niederveresterte, bevorzugt amidierte, lösliche Pektin ein Citruspektin oder ein Apfelpektin ist.

Entsprechend weist vorzugsweise die erfindungsgemäß verwendete zuckerhaltige Zusammensetzung das niederveresterte, bevorzugt amidierte, lösliche Pektin in einem Anteil von 10 bis 35 Gew.%, bevorzugt von 15 bis 30 Gew.%, besonders bevorzugt von 20 bis 25 Gew.% und am bevorzugtesten von 22,5 Gew.%, bezogen auf das Gesamtgewicht der Zusammensetzung, auf. Bevorzugte Anteile an niederverestertem, bevorzugt amidiertem, löslichen Pektin, bezogen auf das Gesamtgewicht der verwendeten Zusammensetzung, sind somit 15%, 16%, 17%, 18%, 19%, 20%, 21%, 22%, 23%, 24%, 25%, 26%, 27%, 28%, 29% und 30%, wobei 20%, 21 %, 22,0%, 22,5%, 23,0%, 24% und 25% besonders bevorzugt sind, wobei dies Gewichtsprozentangaben sind. Mit einem solchen Gehalt an niederverestertem, bevorzugt amidiertem, löslichen Pektin lässt sich die Viskosität der ungefrorenen Serumphase im Eis optimal einstellen und das Abschmelzverhalten optimal kontrollieren.

Die erfindungsgemäß verwendete Zusammensetzung enthält zudem hochverestertes lösliches Pektin. Grundsätzlich kann hierbei das hochveresterte lösliche Pektin aus unterschiedlichen Pflanzenquellen gewonnen werden, wobei Apfeltrester, Rübenschnitzel und Citrusschalen aufgrund ihres hohen Pektingehalts besonders vorteilhaft sind. Aufgrund des hohen Pektingehalts in Citrusschalen hat es sich als besonders vorteilhaft herausgestellt, wenn das hochveresterte lösliche Pektin ein Citruspektin oder ein Apfelpektin ist.

Entsprechend weist gemäß einer ebenso bevorzugten Ausgestaltung die erfindungsgemäß verwendete zuckerhaltige Zusammensetzung das hochveresterte lösliche Pektin, das bevorzugt ein hochverestertes lösliches Citruspektin oder Apfelpektin ist, in einem Anteil von 5 bis 30 Gew.%, bevorzugt von 10 bis 20 Gew.%, besonders bevorzugt von 13 bis 17 Gew.% und am bevorzugtesten von 15 Gew.%, bezogen auf das Gesamtgewicht der Zusammensetzung, auf. Bevorzugte Anteile an hochverestertem löslichen Pektin, bezogen auf das Gesamtgewicht der verwendeten Zusammensetzung, sind somit 10%, 11%, 12%, 13%, 14%. 15%, 16%, 17%, 18%, 19%, 20%, wobei 13%, 14%, 15%, 16%, und 17% besonders bevorzugt sind, wobei dies Gewichtsprozentangaben sind. Mit einem solchen Gehalt an hochverestertem löslichen Pektin lässt sich die Viskosität der ungefrorenen Serumphase im Eis optimal einstellen und das Abschmelzverhalten optimal kontrollieren.

Gemäß einer weiteren Ausführungsform der Erfindung enthält die erfindungsgemäß verwendete Zusammensetzung zusätzlich Zucker. Gemäß einer anderen Ausführungsform ist die Zusammensetzung hingegen frei von Zucker. Für bestimmte Anwendungen hat sich der Einsatz von Zucker in der erfindungsgemäß verwendeten Zusammensetzung als vorteilhaft herausgestellt, da Zucker auf die Ausbildung des strukturgebenden Gels in der ungefrorenen Serumphase einen positiven Einfluss ausübt. Für andere Anwendungen ist es vorteilhaft, wenn die erfindungsgemäß verwendete Zusammensetzung frei von Zucker ist, beispielsweise wenn die weiteren Komponenten des Lebensmittels bereits einen hohen Zuckergehalt mit sich bringen.

Enthält die erfindungsgemäß verwendete Zusammensetzung zusätzlich zu den Bestandteilen Pflanzenfaser, niederverestertes, bevorzugt amidiertes lösliches Pektin und hochverestertes lösliches Pektin noch Zucker, so hat es sich als vorteilhaft herausgestellt, wenn der Zucker ausgewählt ist aus der Gruppe bestehend aus Dextrose, Saccharose, Fructose, Invertzucker, Isoglucose, Mannose, Melezitose, Glucose, Aliulose, Maltose und Rhamnose. Diese Zucker haben sich als besonders kompatibel mit den anderen Bestandteilen der verwendeten Zusammensetzung herausgestellt. Besonders bevorzugt ist der Zucker Dextrose oder Saccharose, wobei Dextrose am bevorzugtesten ist. Dextrose und Saccharose sind preiswert und eignen sich in Kombination mit den anderen Komponenten hervorragend zur Erhöhung der Viskosität der ungefrorenen Serumphase in Speiseeis.

In einer bevorzugten Ausführungsform ist zumindest ein Teil des optional enthaltenen Zuckers in der verwendeten Zusammensetzung in der Form eines Standardisierungsmittels enthalten.

Als ein "Standardisierungsmittel" im Sinne der Erfindung ist ein Zucker definiert, der im Gemisch mit dem Pektin dazu dient, das Pektin zu standardisieren. Die kontrollierten identischen Herstellungsverfahren führen zwar zu Pektinen mit vorgegebenen Eigenschaften. Diese besitzen aber aufgrund Rohstoff-bedingter Schwankungen innerhalb der Pektinzusammensetzung eine gewisse Variation z.B. hinsichtlich der Gelfestigkeit oder der Viskosität. Durch die Zugabe eines Zuckers als Standardisierungsmittel wird die Variationsbreite signifikant reduziert und das Pektin damit standardisiert. Damit wird eine konstante Dosierung von Batch zu Batch möglich. Als Standardisierungsmittel sind Dextrose und Saccharose bevorzugt.

Enthält die erfindungsgemäß verwendete Zusammensetzung Zucker, so weist die Zusammensetzung vorzugweise den Zucker in einem Anteil von 18 bis 40 Gew.%, bevorzugt von 20 bis 38 Gew.% und besonders bevorzugt von 23 bis 32 Gew.%, bezogen auf das Gesamtgewicht der Zusammensetzung, auf. Dieser Zuckergehalt ist besonders gut kompatibel mit den anderen Bestandteilen der verwendeten Zusammensetzung und erlaubt eine gute Kontrolle der Viskositätseigenschaften der ungefrorenen Serumphase im Speiseeis.

Gemäß einer bevorzugten Ausführungsform der Erfindung weist die verwendete Zusammensetzung einen Veresterungsgrad von 40 bis 60% und bevorzugt von 47 bis 50% und/oder einen Amidierungsgrad von 5 bis 10% bevorzugt 6 bis 8% auf, jeweils bezogen auf die Galakturonsäure-Einheiten des enthaltenen Pektins. Bei dieser Kombination an Eigenschaften kommt es zur Ausbildung einer besonders formstabilen Grundstruktur des Speiseeises.

Gemäß einer erfindungsgemäßen Ausführungsform enthält die verwendete zuckerhaltige Zusammensetzung 20 bis 50 Gew.% Pflanzenfaser, 10 bis 35 Gew.% niederverestertes, bevorzugt amidiertes, lösliches Pektin, 5 bis 30 Gew.% hochverestertes lösliches Pektin und 18 bis 40 Gew.% Zucker, wobei die Gewichtsprozentangaben sich jeweils auf das Gesamtgewicht der Zusammensetzung beziehen und wobei die Summe aller Bestandteile der Mischung jeweils 100 Gew.% betragen muss. Bei diesen Anteilen der unterschiedlichen Komponenten kann eine große Bandbreite unterschiedlicher Arten von Speiseeis mit guten Textureigenschaften und hervorragendem Abschmelzverhalten hergestellt werden.

Gemäß einer bevorzugten erfindungsgemäßen Ausführungsform enthält die verwendete zuckerhaltige Zusammensetzung 30 bis 40 Gew.% Pflanzenfaser, 15 bis 30 Gew.% niederverestertes, bevorzugt amidiertes, lösliches Pektin, 10 bis 20 Gew.% hochverestertes lösliches Pektin und 20 bis 38 Gew.% Zucker, wobei die Gewichtsprozentangaben sich jeweils auf das Gesamtgewicht der Zusammensetzung beziehen und wobei die Summe aller Bestandteile der Mischung jeweils 100 Gew.% betragen muss. Bei diesen Anteilen der unterschiedlichen Komponenten kann eine große Bandbreite unterschiedlicher Arten von Speiseeis mit guten Textureigenschaften und hervorragendem Abschmelzverhalten hergestellt werden.

Gemäß einer weiteren Ausführungsform der Erfindung enthält die verwendete zuckerfreie Zusammensetzung 40 bis 60 Gew.% Pflanzenfaser, 17 bis 37 Gew.% niederverestertes, bevorzugt amidiertes, lösliches Pektin und 13 bis 33 Gew.% hochverestertes lösliches Pektin, wobei die Gewichtsprozentangaben sich jeweils auf das Gesamtgewicht der Zusammensetzung beziehen und wobei die Summe aller Bestandteile der Mischung jeweils 100 Gew.% betragen muss. Bei diesen Anteilen der drei Komponenten wird eine gute Formstabilität erzielt.

Gemäß einer bevorzugten Ausführungsform der Erfindung enthält die verwendete zuckerfreie Zusammensetzung 45 bis 55 Gew.% Pflanzenfaser, 22 bis 32 Gew.% niederverestertes, bevorzugt amidiertes, lösliches Pektin und 18 bis 28 Gew.% hochverestertes lösliches Pektin, wobei die Gewichtsprozentangaben sich jeweils auf das Gesamtgewicht der Zusammensetzung beziehen und wobei die Summe aller Bestandteile der Mischung jeweils 100 Gew.% betragen muss. Bei diesen Anteilen der drei Komponenten wird eine besonders gute Formstabilität erzielt.

Gemäß einer weiteren bevorzugten Ausführungsform besteht die erfindungsgemäß verwendete Zusammensetzung im Wesentlichen aus Pflanzenfaser, niederverestertem, bevorzugt amidiertem, löslichen Pektin, hochverestertem löslichen Pektin und Zucker. Hierbei bedeutet "im Wesentlichen", dass die verwendete Zusammensetzung höchstens 5 Gew.%, vorzugsweise höchstens 4 Gew.%, bevorzugt höchstens 3 Gew.%, weiter bevorzugt höchstens 1 Gew.% andere Komponenten enthält. Gemäß einer anderen Ausführungsform besteht die erfindungsgemäß verwendete Zusammensetzung aus Pflanzenfaser, niederverestertem, bevorzugt amidiertem, löslichen Pektin, hochverestertem löslichen Pektin und Zucker.

**Pflanzenfaser**

Grundsätzlich kommen unterschiedliche Arten an Pflanzenfasern für die erfindungsgemäß verwendete Zusammensetzung in Betracht. Es hat sich als vorteilhaft herausgestellt, wenn die eingesetzte Pflanzenfaser eine oder mehrere der nachfolgenden Eigenschaften aufweist, da die verwendete Zusammensetzung dann besonders geeignet für die Verwendung in einem gekühlten und insbesondere gefrorenen Lebensmittel ist.

Gemäß einer bevorzugten Ausgestaltung der erfindungsgemäß verwendeten Zusammensetzung weist die Pflanzenfaser eine dynamische Weissenbergzahl in einer 2,5 Gew.%igen Suspension von mehr als 4,0, insbesondere mehr als 5,0, auf. Durch eine Pflanzenfaser mit solchen viskoelastischen Eigenschaften lässt sich ein besonders formstabiles Speiseeis mit der erfindungsgemäß verwendeten Zusammensetzung erhalten. Ein mögliches Verfahren zur Bestimmung der dynamischen Weissenbergzahl ist in den Beispielen aufgeführt.

Gemäß einer weiteren bevorzugten Ausführungsform weist die Pflanzenfaser eine dynamische Weissenbergzahl in einer 2,5 Gew.%igen Dispersion von mehr als 5,0, insbesondere mehr als 6,0, auf. Durch eine Pflanzenfaser mit solchen viskoelastischen Eigenschaften lässt sich ein besonders formstabiles Speiseeis mit der erfindungsgemäß verwendeten Zusammensetzung erhalten. Ein mögliches Verfahren zur Bestimmung der dynamischen Weissenbergzahl ist in den Beispielen aufgeführt.

Die Pflanzenfaser weist vorzugsweise eine Viskosität von 100 bis 1200 mPas, bevorzugt von 350 bis 950 mPas, und besonders bevorzugt von 380 bis 850 mPas auf, wobei die Pflanzenfaser in Wasser als 2,5 Gew.%ige Lösung dispergiert wird und die Viskosität mit einer Scherrate von 50 s$^{-1}$ bei 20 °C gemessen wird.

Zur Viskositätsbestimmung wird die Pflanzenfaser in demineralisiertem Wasser mit der in den Beispielen offenbarten Methode als 2,5 Gew.%ige Lösung dispergiert und die Viskosität bei 20 °C und vier Scherabschnitten (erster und dritter Abschnitt = konstantes Profil; zweiter und vierter Abschnitt = lineare Rampe; Messung jeweils bei einer Schergeschwindigkeit von 50 s'$^1$) bestimmt (Rheometer; Physica MCR Serie, Messkörper CC25 (entspricht Z3 DIN), Fa. Anton Paar, Graz, Österreich). Eine Pflanzenfaser mit dieser hohen Viskosität hat den Vorteil, dass für das Andicken des Endprodukts geringere Mengen an Fasern notwendig sind. Zudem erzeugt eine solche Faser eine besonders cremige Textur.

Die Pflanzenfaser weist vorzugsweise ein Wasserbindevermögen von 20 bis 34 g/g, bevorzugt von 22 bis 30 g/g, und besonders bevorzugt von 23 bis 28 g/g auf, wobei hier jeweils die Menge an Wasser in Gramm angegebenen ist, die von einem Gramm Pflanzenfaser gebunden werden können. Ein solch vorteilhaft hohes Wasserbindevermögen führt zu einer hohen Viskosität und erlaubt zudem einen geringeren Bedarf an Pflanzenfasern für eine ausreichend cremige Textur. Das Wasserbindevermögen wird dabei dadurch bestimmt, dass eine Probe einer Pflanzenfaser für einen bestimmten Zeitraum, vorzugsweise für 24 Stunden, in Wasser aufgequollen wird und nach anschließender Zentrifugation und Abtrennung des überstehenden Wassers das Gewicht der aufgequollenen Pflanzenfaser bestimmt wird. Eine detaillierte Angabe des Testverfahrens ist in den Ausführungsbeispielen angegeben.

Die Pflanzenfaser weist gemäß einer vorteilhaften Ausgestaltung der erfindungsgemäß verwendeten Zusammensetzung eine Festigkeit von mehr als 50 g auf. Bei einer solchen Festigkeit weist die verwendete Zusammensetzung eine hohe Formstabilität auf. Ein mögliches Verfahren zur Bestimmung der Festigkeit einer Pflanzenfaser ist in den Beispielen beschrieben.

Gemäß einer bevorzugten Ausführungsform weist die Pflanzenfaser eine Feuchtigkeit von weniger als 15%, bevorzugt von weniger als 10% und besonders bevorzugt von weniger als 8%. Durch die geringe Feuchtigkeit der Pflanzenfaser hat die Faser ein gutes Quellverhalten. Die Feuchtigkeit der Pflanzenfaser kann durch Massenabnahme nach der Trocknung bestimmt werden, vorzugsweise durch Infrarot-Trocknung mit einem Feuchtebestimmer, beispielsweise dem Feuchtebestimmer Sartorius® MA-45. Eine detaillierte Angabe des Testverfahrens ist in den Ausführungsbeispielen angegeben.

Gemäß einer bevorzugten Ausführung der erfindungsgemäß verwendeten Zusammensetzung weist die Pflanzenfaser als 1 Gew%ige wässrige Suspension einen pH-Wert von 3,0 bis 5,0 und bevorzugt von 3,4 bis 4,6. Bei diesem pH-Wert liegt das in der Pflanzenfaser vorzugsweise enthaltene Pektin in besonders stabiler Form vor.

Gemäß einer bevorzugten Ausführungsform weist die Pflanzenfaser eine Korngröße auf, bei der mindestens 90% der Partikel kleiner als 300 μm sind. Eine Pflanzenfaser mit einer solch geringen Korngröße führt zu einer besonders angenehmen und homogenen Textur des Speiseeises und lässt sich besonders gut verarbeiten. Die Korngröße kann hierbei mittels Siebmaschine mit einem Satz an Sieben mit unterschiedlicher Maschenweite bestimmt werden. Eine detaillierte Angabe des Testverfahrens ist in den Ausführungsbeispielen angegeben.

Die Pflanzenfaser ist vorzugsweise im Wesentlichen farblos und hat vorteilhafter Weise keinen nennenswerten Einfluss auf die Farbe des Produkts. Hierfür hat es sich als vorteilhaft herausgestellt, dass in dem Fall einer Apfelfaser als Pflanzenfaser die Apfelfaser einen Helligkeitswert von L* > 61 aufweist. Wird eine Citrusfaser als Pflanzenfaser eingesetzt, so ist es vorteilhaft, wenn diese Citrusfaser einen Helligkeitswert von L* > 88 aufweist. Damit ist die Citrusfaser nahezu farblos und führt bei einem Einsatz in Lebensmittelprodukten wie Speiseeis nicht zu einer nennenswerten Verfärbung der Produkte. Die Helligkeit kann mittels Chromameter ermittelt werden. Eine detaillierte Angabe des Testverfahrens ist in den Ausführungsbeispielen angegeben.

Vorzugsweise weist die Pflanzenfaser einen Ballaststoffgehalt von 80 bis 95 Gew.% auf, bezogen auf das Gesamtgewicht der Pflanzenfaser. Bei einem so hohen Ballaststoffgehalt trägt die Pflanzenfaser besonders wenig zum Kaloriengehalt des Lebensmittelprodukts bei und erlaubt somit die Herstellung von kalorienarmem Speiseeis.

Die Pflanzenfaser in der erfindungsgemäß verwendeten Zusammensetzung ist gemäß einer Ausführungsform eine depektinisierte Pflanzenfaser, vorzugsweise eine depektinisierte Fruchtfaser. Wenn hier oder an anderer Stelle von einer "depektinisierten Faser" die Rede ist, dann ist damit gemeint, dass der Gehalt an Pektin in der Faser gegenüber der Faser im natürlichen Ursprung gesenkt wurde. Dies erfolgt beispielsweise durch einen sauren Extraktionsschritt. Aufgrund des sauren Extraktionsschritts ist der Pektingehalt der Pflanzenfaser stark reduziert, so dass die Pflanzenfaser erfindungsgemäß weniger als 10%, bevorzugt weniger als 8 % und besonders bevorzugt weniger als 6% an wasserlöslichem Pektin aufweist. Bei diesem residualen Pektin handelt es sich üblicherweise um hochverestertes Pektin.

Die depektinisierte Pflanzenfaser, die bevorzugt eine depektinisierte Fruchtfaser ist, weist erfindungsgemäß einen wasserlöslichen Pektingehalt von zwischen 2 Gew.% und 10 Gew.%, vorteilhafterweise einen wasserlöslichen Pektingehalt von zwischen 2 Gew.% und 8 Gew.% und besonders bevorzugt von zwischen 2 und 6 Gew.% auf. Der Gehalt an wasserlöslichem Pektin in dieser Pflanzen- bzw. Fruchtfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

Besonders bevorzugte Pflanzenfasern für die erfindungsgemäß verwendete Zusammensetzung sind ausgewählt aus der Gruppe bestehend aus aktivierte pektinhaltige Citrusfaser, partiell-aktivierte, aktivierbare pektinhaltige Citrusfaser, aktivierte pektinhaltige Apfelfaser und Mischungen davon. Die bevorzugten Eigenschaften dieser genannten Pflanzenfasern werden nachfolgend beschrieben. Die drei genannten Pflanzenfasern mit den nachfolgenden bevorzugten Eigenschaften haben sich als hervorragende Fasern zur Formgebung von Speiseeis herausgestellt.

## Aktivierte pektinhaltige Citrusfaser

In einer Ausführungsform wird als Pflanzenfaser eine aktivierte pektinhaltige Citrusfaser eingesetzt. Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschritts ist der Pektingehalt der aktivierten pektinhaltigen Citrusfaser stark reduziert, so dass diese Citrusfaser erfindungsgemäß weniger als 10%, bevorzugt weniger als 8 % und besonders bevorzugt weniger als 6% an wasserlöslichem Pektin aufweist. Die aktivierte pektinhaltige Citrusfaser weist erfindungsgemäß einen wasserlöslichen Pektingehalt von zwischen 2 Gew.% und 10 Gew.%, vorteilhafterweise einen wasserlöslichen Pektingehalt von zwischen 2 Gew.% und 8 Gew.% und besonders bevorzugt von zwischen 2 und 6 Gew.% auf. Der Gehalt an wasserlöslichem Pektin in dieser Citrusfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

In einer Ausführungsform weist die aktivierte pektinhaltige Citrusfaser in einer 2,5 Gew.%igen Suspension eine Fließgrenze II (Rotation) von mehr als 1,5 Pa und vorteilhafterweise von mehr als 2,0 Pa auf. Bei einer Faserdispersion hat die aktivierte pektinhaltige Citrusfaser entsprechend eine Fließgrenze I (Rotation) von mehr als 5,5 Pa und vorteilhafterweise von mehr als 6,0 Pa.

Gemäß einer weiteren Ausführungsform hat die aktivierte pektinhaltige Citrusfaser in einer 2,5 Gew.%igen Suspension eine Fließgrenze II (Cross Over) von mehr als 1,2 Pa und vorteilhafterweise von mehr als 1,5 Pa. Bei einer Faserdispersion hat die aktivierte pektinhaltige Citrusfaser eine Fließgrenze I (Cross Over) von mehr als 6,0 Pa und vorteilhafterweise von mehr als 6,5 Pa.

In einer Ausführungsform hat die aktivierte pektinhaltige Citrusfaser eine dynamische Weissenbergzahl in der Fasersuspension von mehr als 7,0, vorteilhafterweise von mehr als 7,5 und besonders vorteilhaft von mehr als 8,0. Nach Scheraktivierung hat die aktivierte pektinhaltige Citrusfaser entsprechend eine dynamische Weissenbergzahl in der Faserdispersion von mehr als 6,0, vorteilhafterweise von mehr als 6,5 und besonders vorteilhaft von mehr als 7,0.

Die aktivierte pektinhaltige Citrusfaser hat nach einer vorteilhaften Ausführungsform in einer 4 Gew.%igen wässrigen Suspension eine Festigkeit von mindestens 150 g, besonders vorteilhaft von mindestens 220 g.

Vorzugsweise weist die aktivierte pektinhaltige Citrusfaser eine Viskosität von mindestens 650 mPas auf, wobei die pektinhaltige Citrusfaser in Wasser als 2,5 Gew.%ige Lösung dispergiert wird und die Viskosität mit einer Scherrate von 50 s' bei 20°C gemessen wird.

Zur Viskositätsbestimmung wird die aktivierte pektinhaltige Citrusfaser in demineralisiertem Wasser mit der in den Beispielen offenbarten Methode als 2,5 Gew.%ige Lösung dispergiert und die Viskosität bei 20°C und vier Scherabschnitten (erster und dritter Abschnitt = konstantes Profil; zweiter und vierter Abschnitt = lineare Rampe; Messung jeweils bei einer Schergeschwindigkeit von 50 s$^{-1}$) bestimmt (Rheometer; Physica MCR Serie, Messkörper CC25 (entspricht Z3 DIN), Fa. Anton Paar, Graz, Österreich). Eine pektinhaltige Citrusfaser mit dieser hohen Viskosität hat den Vorteil, dass für das Andicken des Endprodukts geringere Mengen an Fasern notwendig sind. Zudem erzeugt die Faser damit eine cremige Textur.

Die aktivierte pektinhaltige Citrusfaser hat vorteilhafterweise ein Wasserbindevermögen von mehr als 22 g/g. Ein solch vorteilhaft hohes Wasserbindevermögen führt zu einer hohen Viskosität und über diese dann auch zu einem geringeren Faserverbrauch bei cremiger Textur.

Gemäß einer Ausführungsform weist die aktivierte pektinhaltige Citrusfaser eine Feuchtigkeit von weniger als 15%, bevorzugt von weniger als 10% und besonders bevorzugt von weniger als 8% auf.

Es ist auch bevorzugt, dass die aktivierte pektinhaltige Citrusfaser in 1,0 %iger wässriger Suspension einen pH-Wert von 3,1 bis 4,75 und bevorzugt von 3,4 bis 4,2 aufweist.

Die aktivierte pektinhaltige Citrusfaser hat vorteilhaftweise eine Korngröße, bei der mindestens 90% der Partikel kleiner als 250 $\mu$m, bevorzugt kleiner als 200 $\mu$m und insbesondere kleiner als 150 $\mu$m sind.

Gemäß einer vorteilhaften Ausführungsform hat die aktivierte pektinhaltige Citrusfaser einen Helligkeitswert L* > 90, bevorzugt von L* > 91 und besonders bevorzugt von L* > 92. Damit sind die Citrusfasern nahezu farblos und führen bei einem Einsatz in Lebensmittelprodukten nicht zu einer nennenswerten Verfärbung der Produkte.

In vorteilhafter Weise hat die die aktivierte pektinhaltige Citrusfaser einen Ballaststoffgehalt von 80 bis 95%.

Die erfindungsgemäß verwendete, aktivierte pektinhaltige Citrusfaser liegt vorzugsweise in Pulverform vor. Dies hat den Vorteil, dass hiermit eine Formulierung mit geringem Gewicht und hoher Lagerstabilität vorliegt, die auch prozesstechnisch in einfacher Weise eingesetzt werden kann. Diese Formulierung wird erst durch die erfindungsgemäß verwendete, aktivierte pektinhaltige Citrusfaser ermöglicht, die im Gegensatz zu modifizierten Stärken beim Einrühren in Flüssigkeiten nicht zur Klumpenbildung neigt.

Aufgrund des sauren Extraktionsschrittes ist der Pektingehalt der Citrusfaser stark reduziert worden, so dass die aktivierte pektinhaltige Citrusfaser erfindungsgemäß weniger als 10%, bevorzugt weniger als 8 % und besonders bevorzugt weniger als 6% an wasserlöslichem Pektin aufweist. Bei diesem residualen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

**Herstellung der aktivierten pektinhaltigen Citrusfaser**

Die aktivierte pektinhaltige Citrusfaser ist durch ein Verfahren erhältlich, das die folgenden Schritte umfasst:

(a) Bereitstellen eines Rohmaterials, das Zellwandmaterial einer essbaren Citrusfrucht enthält;
(b) Aufschluss des Rohmaterials durch Inkubation einer wässrigen Suspension des Rohmaterials bei einem sauren pH-Wert;
(c) Ein- oder mehrstufige Trennung des aufgeschlossenen Materials aus Schritt (b) von der wässrigen Suspension;
(d) Waschen des in Schritt (c) abgetrennten Materials mit einer wässrigen Lösung und Abtrennung grober oder nicht aufgeschlossener Partikel;
(e) Trennung des gewaschenen Materials aus Schritt (d) von der wässrigen Lösung;
(f) Mindestens zweimaliges Waschen des abgetrennten Materials aus Schritt (e) mit einem organischen Lösungsmittel und jeweils anschließender Trennung des gewaschenen Materials von dem organischen Lösungsmittel;
(g) Optionale zusätzliche Entfernung des organischen Lösungsmittels durch Inkontaktbringen des gewaschenen Materials aus Schritt (f) mit Wasserdampf;
(h) Trocknen des Materials aus Schritt (f) oder (g) umfassend eine Vakuumtrocknung zum Erhalten der pektinhaltigen Citrusfaser.

Dieses Herstellungsverfahren führt zu Citrusfasern mit einer großen inneren Oberfläche, was auch das Wasserbindungsvermögen erhöht und mit einer guten Viskositätsbildung einhergeht.

Diese Fasern stellen aktivierte Fasern dar, die in einer wässrigen Suspension eine ausreichende Festigkeit aufweisen, so dass es in der Anwendung keiner zusätzlichen Scherkräfte bedarf, um anwenderseitig die optimalen rheologischen Eigenschaften wie Viskosität oder Texturierung zu erhalten. Die aktivierte pektinhaltige Citrusfaser wird im Rahmen der Anmeldung synonym als pektinhaltige Citrusfaser bezeichnet.

Wie die Erfinder festgestellt haben, weisen die mit diesem Verfahren hergestellten Citrusfasern gute rheologische Eigenschaften auf. Die erfindungsgemäßen Fasern können einfach rehydratisiert werden und die vorteilhaften rheologischen Eigenschaften bleiben auch nach der Rehydratisierung erhalten.

Das vorab beschriebene Herstellungsverfahren führt zu Citrusfasern, die in hohem Maße geschmacks- und geruchsneutral sind und daher vorteilhaft für die Anwendung im Lebensmittelbereich sind. Das Eigenaroma der übrigen Zutaten wird nicht maskiert und kann sich daher optimal entfalten.

Die erfindungsgemäß einzusetzenden Citrusfasern werden aus Citrusfrüchten gewonnen und stellen so natürliche Inhaltsstoffe mit bekannten positiven Eigenschaften dar.

Als Rohmaterial können Citrusfrüchte und bevorzugt Verarbeitungsrückstände von Citrusfrüchten eingesetzt werden. Als Rohmaterial zum Einsatz in dem Verfahren kann entsprechend Citrusschale, (und hier Albedo und/oder Flavedo), Citrusvesikel, Segmentmembranen oder eine Kombination hieraus verwendet werden. In bevorzugter Weise wird als Rohmaterial Citrustrester verwendet, also die Pressrückstände von Citrusfrüchten, die neben den Schalen typischerweise auch das Fruchtfleisch enthalten.

Der saure Aufschluss im Schritt (b) des Verfahrens dient der Entfernung von Pektin durch Überführung des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Citrusfasern. Damit wird eine thermische Zerkleinerung erreicht, ein mechanischer Zerkleinerungsschritt ist im Rahmen des Herstellungsverfahrens damit nicht notwendig. Dies stellt einen entscheidenden Vorteil gegenüber herkömmlichen Faser-Herstellungsverfahren dar, die im Gegensatz dazu einen Scherungsschritt (wie beispielsweise eine (Hoch-)Druckhomogenisierung) benötigen, um eine Faser mit ausreichenden rheologischen Eigenschaften zu erhalten.

Durch den sauren Aufschluss als Prozessschritt (b) im Herstellungsverfahren kann die Faserstruktur aufgeschlossen werden und durch anschließende alkoholische Waschschritte mit schonendem Trocknen diese Struktur entsprechend aufrechterhalten werden.

Das Rohmaterial liegt bei dem Aufschluss im Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure wie Citronensäure eingesetzt werden.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Salpetersäure eingesetzt.

Bei dem sauren Aufschluss im Schritt (b) des Verfahrens liegt der pH-Wert der Suspension zwischen pH = 0,5 und pH = 4,0, bevorzugt zwischen pH = 1,0 und pH = 3,5 und besonders bevorzugt zwischen pH = 1,5 und pH = 3,0.

Erfindungsgemäß besteht die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

In einer Ausführungsform erfolgt bei dem Herstellungsverfahren und insbesondere bei dem sauren Aufschluss im Schritt (b) keine enzymatische Behandlung des Rohmaterials durch Zugabe eines Enzyms, insbesondere keine Amylase-Behandlung.

Die Inkubation erfolgt bei dem sauren Aufschluss im Schritt (b) bei einer Temperatur zwischen 60°C und 95°C, bevorzugt zwischen 70°C und 90°C und besonders bevorzugt zwischen 75°C und 85°C.

Die Inkubation im Schritt (b) erfolgt über eine Zeitdauer zwischen 60 min und 8 Stunden und bevorzugt zwischen 2 h und 6 Stunden.

Die wässrige Suspension hat bei dem sauren Aufschluss im Schritt (b) geeignetermaßen eine Trockenmasse von zwischen 0,5 Gew.% und 5 Gew.%, bevorzugt von zwischen 1 Gew.% und 4 Gew.%, und besonders bevorzugt von zwischen 1,5 Gew.% und 3 Gew.%.

Die wässrige Suspension wird während des Aufschlusses im Schritt (b) gerührt oder geschüttelt. Dies erfolgt bevorzugt in kontinuierlicher Weise, damit die Partikel in der Suspension in der Schwebe gehalten werden.

Im Schritt (c) des Verfahrens wird das aufgeschlossene Material von der wässrigen Lösung getrennt und damit zurückgewonnen. Diese Trennung erfolgt als einstufige oder mehrstufige Trennung.

In vorteilhafter Weise wird das aufgeschlossene Material im Schritt (b) einer mehrstufigen Trennung unterzogen. Hierbei ist es bevorzugt, wenn bei der Trennung von der wässrigen Suspension stufenweise die Abtrennung von immer feineren Partikeln erfolgt. Dies bedeutet, dass beispielsweise bei einer zweistufigen Trennung beide Stufen eine Abtrennung von größeren Partikel leisten, wobei bei der zweiten Stufe im Vergleich zur ersten Stufe feinere Partikel abgetrennt werden, um eine möglichst vollständige Abtrennung der Partikel aus der Suspension zu erzielen. Bevorzugt erfolgt die erste Abtrennung von Partikeln mit Dekantern und die zweite Abtrennung mit Separatoren. Damit wird das Material mit jedem Trennungsschritt immer feinpartikulärer.

Nach dem sauren Aufschluss im Schritt (b) und der Abtrennung des aufgeschlossenen Materials im Schritt (c), wird das abgetrennte Material im Schritt (d) mit einer wässrigen Lösung gewaschen. Durch diesen Schritt können verbliebene wasserlösliche Stoffe, wie beispielsweise Zucker entfernt werden. Gerade die Entfernung von Zucker mit Hilfe dieses Schrittes trägt dazu bei, dass die Citrusfaser weniger adhäsiv ist und damit besser zu prozessieren und anzuwenden ist.

Im Rahmen der Erfindung wird unter der "wässrigen Lösung" die für das Waschen im Schritt (d) eingesetzte wässrige Flüssigkeit verstanden. Das Gemisch aus dieser wässrigen Lösung und dem aufgeschlossenen Material wird als "Waschmixtur" bezeichnet.

Vorteilhafterweise wird das Waschen gemäß Schritt (d) mit Wasser als wässriger Lösung durchgeführt. Besonders vorteilhaft ist hier der Einsatz von deionisiertem Wasser.

In einer Ausführungsform besteht die wässrige Lösung zu mehr als 50 Vol%, bevorzugt zu mehr als 60, 70, 80 oder sogar 90 Vol% aus Wasser. In einer bevorzugten Ausführungsform enthält die wässrige Lösung kein organisches Lösungsmittel und insbesondere keinen Alkohol. Damit liegt eine wasserbasierte Waschung vor und gerade kein Wasser-Alkohol-Austausch wie es bei der Faserwaschung mit einem Gemisch aus Alkohol und Wasser ist, wobei dieses Gemisch mehr als 50 Vol% Alkohol aufweist und typischerweise einen Alkoholgehalt von mehr als 70 Vol% besitzt.

Alternativ kann als wässrige Lösung auch eine Salzlösung mit einer Ionenstärke von I < 0.2 mol/l eingesetzt werden.

Das Waschen gemäß Schritt (d) erfolgt vorteilhafterweise bei einer Temperatur zwischen 30°C und 90°C, bevorzugt zwischen 40°C und 80°C und besonders bevorzugt zwischen 50°C und 70°C.

Die Zeitdauer des Inkontaktbringens mit der wässrigen Lösung im Schritt (d) erfolgt über eine Zeitdauer von zwischen 10 min und 2 Stunden, bevorzugt von zwischen 30 min und einer Stunde.

Bei dem Waschen gemäß Schritt (d) beträgt die Trockenmasse in der Waschmixtur zwischen 0,1 Gew.% und 5 Gew.%, bevorzugt zwischen 0,5 Gew.% und 3 Gew.% und besonders bevorzugt von zwischen 1 Gew.% und 2 Gew.%.

Vorteilhafter wird das Waschen gemäß Schritt (d) unter mechanischer Bewegung der Waschmixtur durchgeführt. Dies erfolgt zweckmäßiger mittels Rühren oder Schütteln der Waschmixtur.

Beim Waschen erfolgt gemäß Schritt (d) eine Abtrennung grober oder nicht aufgeschlossener Partikel. Vorteilhaft handelt es hier um eine Abtrennung von Partikeln mit einer Korngröße von mehr als 500 $\mu$m, bevorzugter von mehr als 400 $\mu$m und am bevorzugtesten von mehr als 350 $\mu$m.

Die Abtrennung erfolgt vorteilhafterweise mit einer Nasssiebung. Es kann hierzu eine Passiermaschine oder einer Bandpresse verwendet werden. Dadurch werden damit sowohl grobpartikuläre Verunreinigungen des Rohmaterials als auch unzureichend aufgeschlossenes Material entfernt.

Nach dem Waschen mit der wässrigen Lösung wird gemäß Schritt (e) das gewaschene Material von der wässrigen Lösung abgetrennt. Diese Abtrennung erfolgt vorteilhafterweise mit einem Dekanter oder einem Separator.

Im Schritt (f) erfolgt dann ein weiterer Waschschritt, der allerdings mit einem organischen Lösungsmittel erfolgt. Hierbei handelt es sich um ein mindestens zweimaliges Waschen mit einem organischen Lösungsmittel.

Das organische Lösungsmittel kann auch als Gemisch aus dem organischem Lösungsmittel und Wasser eingesetzt werden, wobei dieses Gemisch dann mehr als 50 Vol% an organischem Lösungsmittel aufweist und vorzugsweise mehr als 70 Vol% an organischem Lösungsmittel besitzt.

Das organische Lösungsmittel im Schritt (f) ist vorteilhafterweise ein Alkohol, der ausgewählt sein kann aus der Gruppe bestehend aus Methanol, Ethanol und Isopropanol.

Der Waschschritt erfolgt bei einer Temperatur zwischen 40°C und 75°C, bevorzugt zwischen 50°C und 70°C und besonders bevorzugt 60°C und 65°C.

Die Zeitdauer des Inkontaktbringens im Schritt (f) mit dem organischen Lösungsmittel erfolgt über eine Zeitdauer von zwischen 60 min und 10 h und bevorzugt von zwischen 2 h und 8 h.

Jeder Waschschritt mit dem organischen Lösungsmittel umfasst ein Inkontaktbringen des Materials mit dem organischen Lösungsmittel für eine bestimmte Zeitdauer gefolgt von der Abtrennung des Materials von dem organischen Lösungsmittel. Für diese Abtrennung wird bevorzugt ein Dekanter oder eine Presse verwendet.

Bei dem Waschen mit dem organischen Lösungsmittel im Schritt (f) beträgt die Trockenmasse in der Waschlösung von zwischen 0,5 Gew.% und 15 Gew.%, bevorzugt zwischen 1,0 Gew.% und 10 Gew.%, und besonders bevorzugt zwischen 1,5 Gew.% und 5,0 Gew.%.

Das Waschen mit dem organischen Lösungsmittel im Schritt (f) wird bevorzugt unter mechanischer Bewegung der Waschmixtur durchgeführt. Bevorzugt wird das Waschen in einem Behälter mit Rührwerk durchgeführt.

Bei dem Waschen mit dem organischen Lösungsmittel im Schritt (f) wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen mit dem organischen Lösungsmittel im Schritt (f) im Gegenstromverfahren.

In einer Ausführungsform erfolgt bei dem Waschen mit dem organischen Lösungsmittel im Schritt (f) eine partielle Neutralisation durch Zugabe von Na- oder K-Salzen, NaOH oder KOH.

Bei dem Waschen mit dem organischen Lösungsmittel im Schritt (f) kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen mit einem organischen Lösungsmittel im Schritt (f) die finale Konzentration des organischen Lösungsmittels in der Lösung mit jedem Waschschritt zu. Durch diesen inkrementell steigenden Anteil an organischem Lösungsmittel wird der Wasseranteil in dem Fasermaterial kontrolliert verringert, so dass die rheologischen Eigenschaften der Fasern bei den nachfolgenden Schritten zur Lösungsmittelentziehung und Trocknung erhalten bleiben und kein Kollabieren der aktivierten Faserstruktur erfolgt.

Vorzugsweise beträgt die finale Konzentration des organischen Lösungsmittels im Schritt (f) im ersten Waschschritt zwischen 60 bis 70 Vol.-%, im zweiten Waschschritt zwischen 70 und 85 Vol.-% und in einem optionalen dritten Waschschritt zwischen 80 und 90 Vol.-%.

Gemäß dem optionalen Schritt (g) kann das Lösungsmittel zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Im Schritt (h) erfolgt das Trocknen des gewaschenen Materials aus Schritt (f) oder des gestrippten Materials aus Schritt (g), wobei das Trocknen eine Vakuumtrocknung umfasst und bevorzugt aus dem Vakuumtrocknen besteht. Bei der Vakuumtrocknung wird das gewaschene Material als Trockengut einem Unterdrück ausgesetzt, was den Siedepunkt reduziert und somit auch bei niedrigen Temperaturen zu einer Verdampfung des Wassers führt. Die dem Trockengut kontinuierlich entzogene Verdampfungswärme wird geeigneterweise bis zur Temperaturkonstanz von außen nachgeführt. Die Vakuumtrocknung hat den Effekt, dass sie den Gleichgewichtsdampfdruck erniedrigt, was den Kapillartransport begünstigt. Dies hat sich insbesondere für das vorliegende Citrusfasermaterial als vorteilhaft herausgestellt, da hierdurch die aktivierten geöffneten Faserstrukturen und damit die hieraus resultierenden rheologischen Eigenschaften erhalten bleiben. Vorzugsweise erfolgt die Vakuumtrocknung bei einem Unterdruck von weniger als 400 mbar, bevorzugt von weniger als 300 mbar, weiterhin bevorzugt von weniger als 250 mbar und insbesondere bevorzugt von weniger als 200 mbar.

Die Trocknung unter Vakuum im Schritt (h) erfolgt zweckmäßigerweise bei einer Mantel-Temperatur von zwischen 40°C und 100°C, bevorzugt von zwischen 50°C und 90°C und besonders bevorzugt von zwischen 60°C und 80°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (h) zusätzlich einen Zerkleinerungs-, Vermahlungs- oder Siebschritt. Dieser ist vorteilhafterweise so ausgestaltet, dass als Ergebnis 90% der Partikel eine Korngröße von weniger 250 $\mu$m, bevorzugt eine Korngröße von weniger als 200 $\mu$m und insbesondere eine Korngröße von weniger als 150 $\mu$m aufweisen. Bei dieser Korngröße ist die Faser gut dispergierbar und zeigt ein optimales Quellvermögen.

Die aktivierte Citrusfaser und ein Verfahren zu ihrer Herstellung werden in der Anmeldung DE 10 2020 115 526.3 offenbart.

**Partiell-aktivierte, aktivierbare pektinhaltige Citrusfaser**

Gemäß einer alternativen Ausführungsform wird als Pflanzenfaser eine partiell-aktivierte aktivierbare pektinhaltige Citrusfaser eingesetzt. Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschritts ist der Pektingehalt der partiell-aktivierten aktivierbaren pektinhaltigen Citrusfaser stark reduziert, so dass diese Citrusfaser erfindungsgemäß weniger als 10%, bevorzugt weniger als 8 % und besonders bevorzugt weniger als 6% an wasserlöslichem Pektin aufweist. Die partiell-aktivierte aktivierbare Citrusfaser weist erfindungsgemäß einen wasserlöslichen Pektingehalt von zwischen 2 Gew.% und 10 Gew.%, vorteilhafterweise einen wasserlöslichen Pektingehalt von zwischen 2 Gew.% und 8 Gew.% und besonders bevorzugt von zwischen 2 und 6 Gew.% auf. Der Gehalt an wasserlöslichem Pektin in dieser Citrusfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

In einer Ausführungsform weist die partiell-aktivierte, aktivierbare pektinhaltige Citrusfaser in einer 2,5 Gew.%igen Suspension eine Fließgrenze II (Rotation) von 0,1 - 1,0 Pa, vorteilhafterweise 0,3 - 0,9 Pa, und besonders vorteilhafterweise 0,6 - 0,8 Pa auf. In einer 2,5Gew.%igen Dispersion hat die partiell-aktivierte, aktivierbare pektinhaltige Citrusfaser entsprechend eine Fließgrenze I (Rotation) von 1,0 - 4,0 Pa, vorteilhafterweise von 1,5 - 3,5 Pa und besonders vorteilhafterweise von 2,0 - 3,0 Pa.

Gemäß einer weiteren Ausführungsform hat die partiell-aktivierte, aktivierbare pektinhaltige Citrusfaser in einer 2,5 Gew.%igen Suspension eine Fließgrenze II (Cross Over) von 0,1 - 1,0 Pa, vorteilhafterweise von 0,3 - 0,9 Pa und besonders vorteilhafterweise von 0,6 - 0,8 Pa. In einer 2,5 Gew.%igen Dispersion hat die partiell-aktivierte, aktivierbare pektinhaltige Citrusfaser eine Fließgrenze I (Cross Over) von 1,0 - 4,5 Pa, vorteilhafterweise von 1,5 - 4,0 Pa und besonders vorteilhafterweise von 2,0 - 3,5 Pa.

In einer Ausführungsform hat die partiell-aktivierte, aktivierbare pektinhaltige Citrusfaser in einer 2,5%igen Suspension eine dynamische Weissenbergzahl von 4,5 - 8,0 Pa, vorteilhafterweise von 5,0 - 7,5 Pa und besonders vorteilhaft von 7,0 - 7,5 Pa. Nach Scheraktivierung hat die partiell-aktivierte, aktivierbare pektinhaltige Citrusfaser in einer 2,5 Gew.%igen Dispersion entsprechend eine dynamische Weissenbergzahl von 5,0 - 9,0 Pa, vorteilhafterweise von 6,0 - 8,5 Pa und besonders vorteilhaft von mehr 7,0 - 8,0 Pa.

Die partiell-aktivierte, aktivierbare pektinhaltige Citrusfaser hat nach einer vorteilhaften Ausführungsform in einer wässrigen 4 Gew.%igen Suspension eine Festigkeit von 60 g bis 240 g, bevorzugt von 120 g bis 200 g und besonders bevorzugt von 140 bis 180 g.

Vorzugsweise weist die partiell-aktivierte, aktivierbare pektinhaltige Citrusfaser eine Viskosität von 150 bis 600 mPas, bevorzugt von 200 bis 550 mPas, und besonders bevorzugt von 250 bis 500 mPas auf, wobei die partiell-aktivierte, aktivierbare pektinhaltige Citrusfaser in Wasser als 2,5 Gew.%ige Lösung dispergiert wird und die Viskosität mit einer Scherrate von 50 $s^{-1}$ bei 20°C gemessen wird.

Zur Viskositätsbestimmung wird die partiell-aktivierte, aktivierbare pektinhaltige Citrusfaser in demineralisiertem Wasser mit der in den Beispielen offenbarten Methode als 2,5 Gew.%ige Lösung dispergiert und die Viskosität bei 20°C und vier Scherabschnitten (erster und dritter Abschnitt = konstantes Profil; zweiter und vierter Abschnitt = lineare Rampe; Auswertung jeweils bei einer Schergeschwindigkeit von 50 $s^{-1}$) bestimmt (Rheometer; Physica MCR Serie, Messkörper CC25 (entspricht Z3 DIN), Fa. Anton Paar, Graz, Österreich). Eine aktivierbare Citrusfaser mit dieser hohen Viskosität nach Scheraktivierung hat den Vorteil, dass für das Andicken des Endprodukts geringere Mengen an Fasern notwendig sind. Zudem erzeugt die Faser damit eine cremige Textur.

Die partiell-aktivierte, aktivierbare pektinhaltige Citrusfaser hat vorteilhafterweise ein Wasserbindevermögen von mehr als 20 g/g, bevorzugt von mehr als 22 g/g, besonders bevorzugt von mehr als 24 g/g, und insbesondere bevorzugt von 24 bis 26 g/g. Ein solch vorteilhaft hohes Wasserbindevermögen führt zu einer hohen Viskosität und über diese dann auch zu einem geringeren Faserverbrauch bei cremiger Textur.

Gemäß einer Ausführungsform weist die partiell-aktivierte, aktivierbare pektinhaltige Citrusfaser eine Feuchtigkeit von weniger als 15%, bevorzugt von weniger als 10% und besonders bevorzugt von weniger als 8% auf.

Es ist auch bevorzugt, dass die partiell-aktivierte, aktivierbare pektinhaltige Citrusfaser in 1,0 Gew%iger wässriger Suspension einen pH-Wert von 3,1 bis 4,75 und bevorzugt von 3,4 bis 4,2 aufweist.

Die partiell-aktivierte, aktivierbare pektinhaltige Citrusfaser hat vorteilhaftweise eine Korngröße, bei der mindestens 90% der Partikel kleiner als 450 $\mu$m, bevorzugt kleiner als 350 $\mu$m und insbesondere kleiner als 250 $\mu$m sind.

Gemäß einer vorteilhaften Ausführungsform hat die partiell-aktivierte, aktivierbare pektinhaltige Citrusfaser einen Helligkeitswert L* > 84, bevorzugt von L* > 86 und besonders bevorzugt von L* > 88.

Damit sind die Citrusfasern nahezu farblos und führen bei einem Einsatz in Lebensmittelprodukten nicht zu einer nennenswerten Verfärbung der Produkte.

In vorteilhafter Weise hat die die partiell-aktivierte, aktivierbare pektinhaltige Citrusfaser einen Ballaststoffgehalt von 80 bis 95%.

Die erfindungsgemäß verwendete, partiell-aktivierte, aktivierbare pektinhaltige Citrusfaser liegt vorzugsweise in Pulverform vor. Dies hat den Vorteil, dass hiermit eine Formulierung mit geringem Gewicht und hoher Lagerstabilität vorliegt, die auch prozesstechnisch in einfacher Weise eingesetzt werden kann. Diese Formulierung wird erst durch die erfindungsgemäß verwendete aktivierbare Citrusfaser ermöglicht, die im Gegensatz zu modifizierten Stärken beim Einrühren in Flüssigkeiten nicht zur Klumpenbildung neigt.

Aufgrund des sauren Extraktionsschrittes ist der Pektingehalt der partiell-aktivierte, aktivierbare pektinhaltige Citrusfaser stark reduziert worden, so dass die pektinhaltige Citrusfaser erfindungsgemäß weniger als 10%, bevorzugt weniger als 8 % und besonders bevorzugt weniger als 6% an wasserlöslichem Pektin aufweist. Bei diesem residualen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19- 2016, Joint FAO/WHO Expert Committee on Food Additives) bestimmt werden.

**Herstellung der partiell-aktivierten aktivierbaren pektinhaltigen Citrusfaser**

Die partiell aktivierte-aktivierbare pektinhaltigen Citrusfaser ist durch ein Verfahren erhältlich, das die folgenden Schritte umfasst:

(a) Bereitstellen eines Rohmaterials, das Zellwandmaterial einer essbaren Citrusfrucht enthält;
(b) Aufschluss des Rohmaterials durch Inkubation einer wässrigen Suspension des Rohmaterials bei einem sauren pH-Wert;
(c) Ein- oder mehrstufige Trennung des aufgeschlossenen Materials aus Schritt (b) von der wässrigen Suspension;
(d) Waschen des in Schritt (c) abgetrennten Materials mit einer wässrigen Lösung und Abtrennung grober oder nicht aufgeschlossener Partikel;
(e) Trennung des gewaschenen Materials aus Schritt (d) von der wässrigen Lösung;
(f) Mindestens zweimaliges Waschen des abgetrennten Materials aus Schritt (e) mit einem organischen Lösungsmittel und jeweils anschließender Trennung des gewaschenen Materials von dem organischen Lösungsmittel;
(g) Optionale zusätzliche Entfernung des organischen Lösungsmittels durch Inkontaktbringen des gewaschenen Materials aus Schritt (f) mit Wasserdampf;
(h) Trocknen des Materials aus Schritt (f) oder (g) umfassend eine Trocknung bei Normaldruck zum Erhalten der pektinhaltigen Citrusfaser.

Dieses Herstellungsverfahren führt zu Citrusfasern mit einer großen inneren Oberfläche, was auch das Wasserbindungsvermögen erhöht und mit einer guten Viskositätsbildung einhergeht.

Diese Fasern stellen aktivierbare Fasern dar, die durch die Partialaktivierung im Herstellungsverfahren in wässriger Suspension eine zufriedenstellende Festigkeit aufweisen. Zum Erhalten der optimalen rheologischen Eigenschaften wie Viskosität oder Texturierung bedarf es allerdings anwenderseitig der Anwendung von zusätzlichen Scherkräften. Es handelt sich damit um partiell-aktivierte Fasern, die aber noch weiter aktivierbar sind. Die aktivierbare pektinhaltige Citrusfaser wird im Rahmen der Anmeldung synonym als pektinhaltige Citrusfaser bezeichnet.

Wie die Erfinder festgestellt haben, weisen die mit dem vorab beschriebenen Verfahren hergestellten Citrusfasern gute rheologische Eigenschaften auf. Die erfindungsgemäß zu verwendenden Fasern können einfach rehydratisiert werden und die vorteilhaften rheologischen Eigenschaften bleiben auch nach der Rehydratisierung erhalten.

Das vorab beschriebene Herstellungsverfahren führt zu Citrusfasern, die in hohem Maße geschmacks- und geruchsneutral sind und daher vorteilhaft für die Anwendung im Lebensmittelbereich sind. Das Eigenaroma der übrigen Zutaten wird nicht maskiert und kann sich daher optimal entfalten.

Die erfindungsgemäß verwendbaren Citrusfasern werden aus Citrusfrüchten gewonnen und stellen so natürliche Inhaltsstoffe mit bekannten positiven Eigenschaften dar.

Als Rohmaterial können Citrusfrüchte und bevorzugt Verarbeitungsrückstände von Citrusfrüchten eingesetzt werden. Als Rohmaterial zum Einsatz in dem Verfahren kann entsprechend Citrusschale, (und hier Albedo und/oder Flavedo), Citrusvesikel, Segmentmembranen oder eine Kombination hieraus verwendet werden. In bevorzugter Weise wird als Rohmaterial Citrustrester verwendet, also die Pressrückstände von Citrusfrüchten, die neben den Schalen typischerweise auch das Fruchtfleisch enthalten.

Der saure Aufschluss im Schritt (b) des Verfahrens dient der Entfernung von Pektin durch Überführung des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Citrusfasern. Damit wird eine thermische Zerkleinerung erreicht, ein mechanischer Zerkleinerungsschritt ist im Rahmendes Herstellungsverfahrens damit nicht notwendig. Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung benötigen, um eine Faser mit ausreichenden rheologischen Eigenschaften zu erhalten.

Das Rohmaterial liegt bei dem Aufschluss im Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure wie Citronensäure eingesetzt werden.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Salpetersäure eingesetzt.

Bei dem sauren Aufschluss im Schritt (b) des Verfahrens liegt der pH-Wert der Suspension zwischen pH = 0,5 und pH = 4,0, bevorzugt zwischen pH = 1,0 und pH = 3,5 und besonders bevorzugt zwischen pH = 1,5 und pH = 3,0.

Erfindungsgemäß besteht die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

In einer Ausführungsform erfolgt bei dem Herstellungsverfahren und insbesondere bei dem sauren Aufschluss im Schritt (b) keine enzymatische Behandlung des Rohmaterials durch Zugabe eines Enzyms, insbesondere keine Amylase-Behandlung.

Die Inkubation erfolgt bei dem sauren Aufschluss im Schritt (b) bei einer Temperatur zwischen 60°C und 95°C, bevorzugt zwischen 70°C und 90°C und besonders bevorzugt zwischen 75°C und 85°C.

Die Inkubation im Schritt (b) erfolgt über eine Zeitdauer zwischen 60 min und 8 Stunden und bevorzugt zwischen 2 h und 6 Stunden.

Die wässrige Suspension hat bei dem sauren Aufschluss im Schritt (b) geeignetermaßen eine Trockenmasse von zwischen 0,5 Gew.% und 5 Gew.%, bevorzugt von zwischen 1 Gew.% und 4 Gew.%, und besonders bevorzugt von zwischen 1,5 Gew.% und 3 Gew.%.

Die wässrige Suspension wird während des Aufschlusses im Schritt (b) gerührt oder geschüttelt. Dies erfolgt bevorzugt in kontinuierlicher Weise, damit die Partikel in der Suspension in der Schwebe gehalten werden.

Im Schritt (c) des Verfahrens wird das aufgeschlossene Material von der wässrigen Lösung getrennt und damit zurückgewonnen. Diese Trennung erfolgt als einstufige oder mehrstufige Trennung.

In vorteilhafter Weise wird das aufgeschlossene Material im Schritt (c) einer mehrstufigen Trennung unterzogen. Hierbei ist es bevorzugt, wenn bei der Trennung von der wässrigen Suspension stufenweise die Abtrennung von immer feineren Partikeln erfolgt. Dies bedeutet, dass beispielsweise bei einer zweistufigen Trennung beide Stufen eine Abtrennung von größeren Partikel leisten, wobei bei der zweiten Stufe im Vergleich zur ersten Stufe feinere Partikel abgetrennt werden, um eine möglichst vollständige Abtrennung der Partikel aus der wässrigen Suspension zu erzielen. Bevorzugt erfolgt die erste Abtrennung von Partikeln mit Dekantern und die zweite Abtrennung mit Separatoren. Damit wird das Material mit jedem Trennungsschritt immer feinpartikulärer.

Nach dem sauren Aufschluss im Schritt (b) und der Abtrennung des aufgeschlossenen Materials im Schritt (c), wird das abgetrennte Material im Schritt (d) mit einer wässrigen Lösung gewaschen. Durch diesen Schritt können verbliebene wasserlösliche Stoffe, wie beispielsweise Zucker entfernt werden. Gerade die Entfernung von Zucker mit Hilfe dieses Schrittes trägt dazu bei, dass die Citrusfaser wenig er adhäsiv ist und damit besser zu prozessieren und anzuwenden ist.

Im Rahmen der Erfindung wird unter der "wässrigen Lösung" die für das Waschen im Schritt (d) eingesetzte wässrige Flüssigkeit verstanden. Das Gemisch aus dieser wässrigen Lösung und dem aufgeschlossenen Material wird als "Waschmixtur" bezeichnet.

Vorteilhafterweise wird das Waschen gemäß Schritt (d) mit Wasser als wässriger Lösung durchgeführt. Besonders vorteilhaft ist hier der Einsatz von deionisiertem Wasser.

In einer Ausführungsform besteht die wässrige Lösung zu mehr als 50 Vol%, bevorzugt zu mehr als 60, 70, 80 oder sogar 90 Vol% aus Wasser. In einer bevorzugten Ausführungsform enthält die wässrige Lösung kein organisches Lösungsmittel und insbesondere keinen Alkohol. Damit liegt eine wasserbasierte Waschung vor und gerade kein Wasser-Alkohol-Austausch wie es bei der Faserwaschung mit einem Gemisch aus Alkohol und Wasser ist, wobei dieses Gemisch mehr als 50 Vol% Alkohol aufweist und typischerweise einen Alkoholgehalt von mehr als 70 Vol% besitzt.

Alternativ kann als wässrige Lösung auch eine Salzlösung mit einer Ionenstärke von I < 0.2 mol/l eingesetzt werden.

Das Waschen gemäß Schritt (d) erfolgt vorteilhafterweise bei einer Temperatur zwischen 30°C und 90°C, bevorzugt zwischen 40°C und 80°C und besonders bevorzugt zwischen 50°C und 70°C.

Die Zeitdauer des Inkontaktbringens mit der wässrigen Lösung im Schritt (d) erfolgt über eine Zeitdauer von zwischen 10 min und 2 Stunden, bevorzugt von zwischen 30 min und einer Stunde.

Bei dem Waschen gemäß Schritt (d) beträgt die Trockenmasse in der Waschmixtur zwischen 0,1 Gew.% und 5 Gew.%, bevorzugt zwischen 0,5 Gew.% und 3 Gew.% und besonders bevorzugt von zwischen 1 Gew.% und 2 Gew.%.

Vorteilhafter wird das Waschen gemäß Schritt (d) unter mechanischer Bewegung der Waschmixtur durchgeführt. Dies erfolgt zweckmäßiger mittels Rühren oder Schütteln der Waschmixtur.

Beim Waschen erfolgt gemäß Schritt (d) eine Abtrennung grober oder nicht aufgeschlossener Partikel. Besonders vorteilhaft ist hier eine Abtrennung von Partikeln mit einer Korngröße von mehr als 500 $\mu$m bevorzugter von mehr als 400 $\mu$m und am bevorzugtesten von mehr als 350 $\mu$m. Die Abtrennung erfolgt vorteilhafterweise mit einer Passiermaschine oder einer Bandpresse. Dadurch werden sowohl grobpartikuläre Verunreinigungen des Rohmaterials als auch unzureichend aufgeschlossenes Material entfernt.

Nach dem Waschen mit der wässrigen Lösung im Schritt (d) wird gemäß Schritt (e) das gewaschene Material von der wässrigen Lösung abgetrennt. Diese Abtrennung erfolgt vorteilhafterweise mit einem Dekanter oder einem Separator.

Im Schritt (f) erfolgt dann ein weiterer Waschschritt, der allerdings mit einem organischen Lösungsmittel erfolgt. Hierbei handelt es sich um ein mindestens zweimaliges Waschen mit einem organischen Lösungsmittel.

Das organische Lösungsmittel kann auch als Gemisch aus dem organischem Lösungsmittel und Wasser eingesetzt werden, wobei dieses Gemisch dann mehr als 50 Vol% an organischem Lösungsmittel aufweist und vorzugsweise mehr als 70 Vol% an organischem Lösungsmittel aufweist.

Das organische Lösungsmittel im Schritt (f) ist vorteilhafterweise ein Alkohol, der ausgewählt sein kann aus der Gruppe bestehend aus Methanol, Ethanol und Isopropanol.

Der Waschschritt im Schritt (f) erfolgt bei einer Temperatur zwischen 40°C und 75°C, bevorzugt zwischen 50°C und 70°C und besonders bevorzugt 60°C und 65°C.

Die Zeitdauer des Inkontaktbringens mit dem organischen Lösungsmittel im Schritt (f) erfolgt über eine Zeitdauer von zwischen 60 min und 10 h und bevorzugt zwischen 2 h und 8 h.

Jeder Waschschritt mit dem organischen Lösungsmittel umfasst ein Inkontaktbringen des Materials mit dem organischen Lösungsmittel für eine bestimmte Zeitdauer gefolgt von der Abtrennung des Materials von dem organischen Lösungsmittel. Für diese Abtrennung wird bevorzugt ein Dekanter oder eine Presse verwendet.

Bei dem Waschen mit dem organischen Lösungsmittel im Schritt (f) beträgt die Trockenmasse in der Waschlösung von zwischen 0,5 Gew.% und 15 Gew.%, bevorzugt zwischen 1,0 Gew.% und 10 Gew.%, und besonders bevorzugt zwischen 1,5 Gew.% und 5,0 Gew.%.

Das Waschen mit dem organischen Lösungsmittel im Schritt (f) wird bevorzugt unter mechanischer Bewegung der Waschmixtur durchgeführt. Bevorzugt wird das Waschen in einem Behälter mit Rührwerk durchgeführt.

Bei dem Waschen mit dem organischen Lösungsmittel im Schritt (f) wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen mit dem organischen Lösungsmittel im Schritt (f) im Gegenstromverfahren.

In einer Ausführungsform erfolgt bei dem Waschen mit dem organischen Lösungsmittel im Schritt (f) eine partielle Neutralisation durch Zugabe von Na- oder K-Salzen, NaOH oder KOH.

Bei dem Waschen mit dem organischen Lösungsmittel im Schritt (f) kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen mit einem organischen Lösungsmittel im Schritt (f) die finale Konzentration des organischen Lösungsmittels in der Lösung mit jedem Waschschritt zu. Durch diesen inkrementell steigenden Anteil an organischem Lösungsmittel wird der Wasseranteil in dem Fasermaterial kontrolliert verringert, so dass die rheologischen Eigenschaften der Fasern bei den nachfolgenden Schritten zur Lösungsmittelentziehung und Trocknung erhalten bleiben und kein Kollabieren der partiell-aktivierten Faserstruktur erfolgt.

Vorzugsweise beträgt die finale Konzentration des organischen Lösungsmittels im ersten Waschschritt zwischen 60 bis 70 Vol.-%, im zweiten Waschschritt zwischen 70 und 85 Vol.- % und in einem optionalen dritten Waschschritt zwischen 80 und 90 Vol.-%.

Gemäß dem optionalen Schritt (g) kann das Lösungsmittel zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Nach einer vorteilhaften Ausführungsform wird das Material vor dem Trocknen gemäß Schritt (h) mit Wasser befeuchtet. Dies geschieht bevorzugt durch Einbringen des Materials in eine Befeuchtungsschnecke und Besprühen mit Wasser.

Im Schritt (h) erfolgt das Trocknen des gewaschenen Materials aus Schritt (f) oder des gestrippten Materials aus Schritt (g), wobei das Trocknen eine Trocknung unter Normaldruck umfasst. Beispiele für geeignete Trocknungsverfahren sind Wirbelschichttrocknung, Fließbetttrocknung, Bandtrockner, Trommeltrockner oder Schaufeltrockner. Besonders bevorzugt ist hier die Fließbetttrocknung. Diese hat den Vorteil, dass das Produkt aufgelockert getrocknet wird, was den anschließenden Vermahlschritt vereinfacht. Zudem vermeidet die Trocknungsart durch den gut dosierbaren Wärmeeintrag eine Schädigung des Produktes durch lokale Überhitzung.

Die Trocknung unter Normaldruck im Schritt (h) erfolgt zweckmäßigerweise bei einer Temperatur von zwischen 50°C und 130°C, bevorzugt von zwischen 60°C und 120°C und besonders bevorzugt von zwischen 70°C und 110°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (h) zusätzlich einen Zerkleinerungs-, Vermahlungs- oder Siebschritt. Dieser ist vorteilhafterweise so ausgestaltet, dass als Ergebnis 90% der Partikel eine Korngröße von weniger 450 $\mu$m, bevorzugt eine Korngröße von weniger als 350 $\mu$m und insbesondere eine Korngröße von weniger als 250 $\mu$m aufweisen. Bei dieser Korngröße ist die Faser gut dispergierbar und zeigt ein optimales Quellvermögen.

Die partiell-aktivierte, aktivierbare pektinhaltige Citrusfaser und ein Verfahren zu ihrer Herstellung werden in der Anmeldung DE 10 2020 115 527.1 offenbart.

**Aktivierte pektinhaltige Apfelfaser**

In einer Ausführungsform wird als Pflanzenfaser eine aktivierte pektinhaltige Apfelfaser eingesetzt. Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschritts ist der Pektingehalt der aktivierten pektinhaltigen Apfelfaser stark reduziert, so dass die Apfelfaser erfindungsgemäß weniger als 10%, bevorzugt weniger als 8 % und besonders bevorzugt weniger als 6% an wasserlöslichem Pektin aufweist. Die aktivierte pektinhaltige Apfelfaser weist erfindungsgemäß einen wasserlöslichen Pektingehalt von zwischen 2 Gew.% und 10 Gew.%, vorteilhafterweise einen wasserlöslichen Pektingehalt von zwischen 2 Gew.% und 8 Gew.% und besonders bevorzugt von zwischen 2 und 6 Gew.% auf. Der Gehalt an wasserlöslichem Pektin in dieser Apfelfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

In einer Ausführungsform weist die aktivierte pektinhaltige Apfelfaser in einer 2,5 Gew.%igen Suspension eine Fließgrenze II (Rotation) von mehr als 0,1 Pa, vorteilhafterweise von mehr als 0,5 Pa, und besonders vorteilhafterweise von mehr als 1,0 Pa. Bei einer 2,5 Gew.%igen Dispersion hat die aktivierte pektinhaltige Apfelfaser entsprechend eine Fließgrenze I (Rotation) von mehr als 5,0 Pa, vorteilhafterweise von mehr als 6,0 Pa und besonders vorteilhafterweise von mehr als 7,0 Pa.

Gemäß einer weiteren Ausführungsform hat die aktivierte pektinhaltige Apfelfaser in einer 2,5 Gew.%igen Suspension eine Fließgrenze II (Cross Over) von mehr als 0,1 Pa, vorteilhafterweise von mehr als 0,5 Pa und besonders vorteilhafterweise von mehr als 1,0 Pa. In einer 2,5 Gew.%igen Dispersion hat die aktivierte pektinhaltige Apfelfaser eine Fließgrenze I (Cross Over) von mehr als 5,0 Pa, vorteilhafterweise von mehr als 6,0 Pa und besonders vorteilhafterweise von mehr als 7,0 Pa.

In einer Ausführungsform hat die aktivierte pektinhaltige Apfelfaser in einer 2,5 Gew.%igen Suspension eine dynamische Weissenbergzahl von mehr als 4,0, vorteilhafterweise von mehr als 5,0 und besonders vorteilhaft von mehr als 6,0. Nach Scheraktivierung hat die aktivierte pektinhaltige Apfelfaser in einer 2,5 Gew.%igen Dispersion entsprechend eine dynamische Weissenbergzahl von mehr als 6,5 vorteilhafterweise von mehr als 7,5 und besonders vorteilhaft von mehr als 8,5.

Die aktivierte pektinhaltige Apfelfaser hat nach einer vorteilhaften Ausführungsform eine Festigkeit von mehr als 50 g, bevorzugt von mehr als 75 g und besonders bevorzugt von mehr als 100 g. Hierzu wird die pektinhaltige Apfelfaser in Wasser als 6 Gew.%ige Lösung suspendiert.

Vorzugsweise weist die aktivierte pektinhaltige Apfelfaser eine Viskosität von mehr als 100 mPas, bevorzugt von mehr als 200 mPas, und besonders bevorzugt von mehr als 350 mPas auf, wobei die aktivierte Apfelfaser in Wasser als 2,5 Gew.%ige Lösung dispergiert wird und die Viskosität mit einer Scherrate von 50 s$^{-1}$ bei 20°C gemessen wird.

Zur Viskositätsbestimmung wird die Apfelfaser in demineralisiertem Wasser mit der in den Beispielen offenbarten Methode als 2,5 Gew.%ige Lösung dispergiert und die Viskosität bei 20°C und vier Scherabschnitten (erster und dritter Abschnitt = konstantes Profil; zweiter und vierter Abschnitt = lineare Rampe; Messung jeweils bei einer Schergeschwindigkeit von 50 s$^{-1}$) bestimmt (Rheometer; Physica MCR 101, Messkörper CC5 (entspricht Z3 DIN), Fa. Anton Paar, Graz, Österreich). Eine aktivierte pektinhaltige Apfelfaser mit dieser hohen Viskosität hat den Vorteil, dass für das Andicken des Endprodukts geringere Mengen an Fasern notwendig. Zudem erzeugt die Faser damit eine cremige Textur.

Die aktivierte pektinhaltige Apfelfaser hat vorteilhafterweise ein Wasserbindevermögen von mehr als 20 g/g, bevorzugt von mehr als 22 g/g, besonders bevorzugt von mehr als 24 g/g, und insbesondere bevorzugt von mehr als 27,0 g/g. Eine solch vorteilhaft hohes Wasserbindevermögen führt zu einer hohen Viskosität und über diese dann auch zu einem geringeren Faserverbrauch bei cremiger Textur.

Gemäß einer Ausführungsform weist die aktivierte pektinhaltige Apfelfaser eine Feuchtigkeit von weniger als 15%, bevorzugt von weniger als 8% und besonders bevorzugt von weniger als 6% auf.

Es ist auch bevorzugt, dass die aktivierte pektinhaltige Apfelfaser in 1,0 Gew%iger wässriger Suspension einen pH-Wert von 3,5 bis 5,0 und bevorzugt von 4,0 bis 4,6 aufweist.

Die aktivierte pektinhaltige Apfelfaser hat vorteilhaftweise eine Korngröße, bei der mindestens 90% der Partikel kleiner als 400 $\mu$m, bevorzugt kleiner als 350 $\mu$m und insbesondere kleiner als 300 $\mu$m sind.

Gemäß einer vorteilhaften Ausführungsform hat die aktivierte pektinhaltige Apfelfaser einen Helligkeitswert L* > 60, bevorzugt von L* > 61 und besonders bevorzugt von L* > 62.

In vorteilhafter Weise hat die die aktivierte pektinhaltige Apfelfaser einen Ballaststoffgehalt von 80 bis 95%.

Die erfindungsgemäß verwendete, aktivierte pektinhaltige Apfelfaser liegt vorzugsweise in Pulverform vor. Dies hat den Vorteil, dass hiermit eine Formulierung mit geringem Gewicht und hoher Lagerstabilität vorliegt, die auch prozesstechnisch in einfacher Weise eingesetzt werden kann. Diese Formulierung wird erst durch die erfindungsgemäß verwendete, aktivierte pektinhaltige Apfelfaser ermöglicht, die im Gegensatz zu modifizierten Stärken beim Einrühren in Flüssigkeiten nicht zur Klumpenbildung neigt.

Aufgrund des sauren Extraktionsschrittes ist der Pektingehalt der Apfelfaser stark reduziert worden, so dass die aktivierte pektinhaltige Apfelfaser erfindungsgemäß weniger als 10%, bevorzugt weniger als 8 % und besonders bevorzugt weniger als 6% an wasserlöslichem Pektin aufweist. Bei diesem residualen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

**Herstellung der aktivierten pektinhaltigen Apfelfaser**

Die aktivierte pektinhaltigen Apfelfaser ist durch ein Verfahren erhältlich, das die folgenden Schritte umfasst:

(a) Bereitstellen eines Rohmaterials, das Zellwandmaterial eines Apfels enthält;
(b) Aufschluss des Rohmaterials durch Inkubation einer wässrigen Suspension des Rohmaterials bei einem sauren pH-Wert;
(c) Ein- oder mehrstufige Abtrennung von groben Partikeln von dem aufgeschlossenen Material aus Schritt (b) in wässriger Suspension;
(d) Abtrennung des in Schritt (c) erhaltenen, von groben Partikeln befreiten Materials aus der wässrigen Suspension;
(e) Waschen des in Schritt (d) abgetrennten Materials mit einer wässrigen Lösung; (f) Trennung des gewaschenen Materials aus Schritt (e) von der wässrigen Lösung; (g) Mindestens zweimaliges Waschen des abgetrennten Materials aus Schritt (f) mit einem organischen Lösungsmittel und jeweils anschließender Trennung des gewaschenen Materials von dem organischen Lösungsmittel;
(h) Optionale zusätzliche Entfernung des organischen Lösungsmittels durch Inkontaktbringen des gewaschenen Materials aus Schritt (g) mit Wasserdampf;
(i) Trocknen des Materials aus Schritt (g) oder (h) umfassend eine Vakuumtrocknung zum Erhalten der aktivierten pektinhaltigen Apfelfaser.

Als Rohmaterial können Äpfel und bevorzugt Verarbeitungsrückstände von Äpfeln eingesetzt werden. Als Rohmaterial zum Einsatz in dem erfindungsgemäßen Verfahren können entsprechend Apfelschale, Kerngehäuse, Kerne oder Fruchtfleisch oder eine Kombination hieraus verwendet werden. In bevorzugter Weise wird als Rohmaterial Apfeltrester verwendet, also die Pressrückstände von Äpfeln, die neben den Schalen typischerweise auch die oben genannten Bestandteile enthalten.

Als Äpfel können hierbei alle dem Fachmann bekannten Kulturäpfel verwendet werden.

Der saure Aufschluss im Schritt (b) des Verfahrens dient der Entfernung von Pektin durch Überführung des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Apfelfasern. Damit wird eine thermische Zerkleinerung erreicht, ein mechanischer Zerkleinerungsschritt ist im Rahmen des Herstellungsverfahrens damit nicht notwendig. Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung) benötigen, um eine Faser mit ausreichenden rheologischen Eigenschaften zu erhalten.

Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Das Rohmaterial liegt bei dem Aufschluss im Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure wie Citronensäure eingesetzt werden.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Schwefelsäure eingesetzt.

Bei dem sauren Aufschluss im Schritt (b) des Verfahrens liegt der pH-Wert der Suspension zwischen pH = 0,5 und pH = 4,0, bevorzugt zwischen pH = 1,0 und pH = 3,5 und besonders bevorzugt zwischen pH = 1,5 und pH = 3,0.

Erfindungsgemäß besteht die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

In einer Ausführungsform erfolgt bei dem Herstellungsverfahren und insbesondere bei dem sauren Aufschluss im Schritt (b) keine enzymatische Behandlung des Rohmaterials durch Zugabe eines Enzyms, insbesondere keine Amylase-Behandlung.

Die Inkubation erfolgt bei dem sauren Aufschluss im Schritt (b) bei einer Temperatur zwischen 60°C und 95°C, bevorzugt zwischen 70°C und 90°C und besonders bevorzugt zwischen 75°C und 85°C.

Die Inkubation im Schritt (b) erfolgt über eine Zeitdauer zwischen 60 min und 10 Stunden und bevorzugt zwischen 2 h und 6 Stunden.

Die wässrige Suspension hat bei dem sauren Aufschluss im Schritt (b) geeignetermaßen eine Trockenmasse von zwischen 0,5 Gew.% und 5 Gew.%, bevorzugt von zwischen 1 Gew.% und 4 Gew.%, und besonders bevorzugt von zwischen 1,5 Gew.% und 3 Gew.%.

Die wässrige Suspension im Schritt (b) wird während des Aufschlusses gerührt oder geschüttelt. Dies erfolgt bevorzugt in kontinuierlicher Weise, damit die Partikel in der Suspension in der Schwebe gehalten werden.

Im Schritt (c) des Verfahrens wird das aufgeschlossene Material von groben Partikeln getrennt. Diese Trennung erfolgt als einstufige oder mehrstufige Trennung.

Bei der ein- oder mehrstufigen Trennung ist es vorteilhaft, dass eine Abtrennung von Partikeln mit einer Korngröße von mehr als 1000 μm, bevorzugt von mehr als 500 μm erfolgt. Dadurch werden sowohl grobpartikuläre Bestandteile des Rohmaterials als auch unzureichend aufgeschlossenes Material entfernt.

In vorteilhafter Weise wird das aufgeschlossene Material gemäß Schritt (c) einer mehrstufigen Trennung unterzogen. Hierbei ist es bevorzugt, wenn bei der Abtrennung der groben Partikel stufenweise die Abtrennung von immer feineren Partikeln erfolgt. Dies bedeutet, dass beispielsweise bei einer zweistufigen Trennung beide Stufen eine Abtrennung von größeren Partikel leisten, wobei bei der zweiten Stufe im Vergleich zur ersten Stufe feinere Partikel abgetrennt werden. Damit wird das Material mit jedem Trennungsschritt immer feinpartikulärer.

Besonders vorteilhaft ist hier gemäß Schritt (c) eine zweistufige Trennung mit einer Abtrennung von Partikeln mit einer Korngröße von mehr als 1000 μm in der ersten Stufe und einer Abtrennung von Partikeln mit einer Korngröße von mehr als 500 μm in der zweiten Stufe. Die Abtrennung in diesen beiden Stufen erfolgt vorteilhafterweise mit einer Siebtrommel, einer Passiermaschine oder einer anderen Art der Nasssiebung.

Nach dem sauren Aufschluss im Schritt (b), der Entfernung grober Partikel im Schritt (c) und der Abtrennung des aufgeschlossenen Materials aus der wässrigen Suspension im Schritt (d) wird das abgetrennte Material im Schritt (e) mit einer wässrigen Lösung gewaschen. Durch diesen Schritt können verbliebene wasserlösliche Stoffe, wie beispielsweise fruchteigene Zucker entfernt werden. Gerade die Entfernung von Zucker mit Hilfe dieses Schrittes trägt dazu bei, dass die Apfelfaser weniger adhäsiv ist und damit besser zu prozessieren und anzuwenden ist.

Im Rahmen der Erfindung wird unter der "wässrigen Lösung" die für das Waschen eingesetzte wässrige Flüssigkeit verstanden. Das Gemisch aus dieser wässrigen Lösung und dem aufgeschlossenen Material wird als "Waschmixtur" bezeichnet.

Vorteilhafterweise wird das Waschen gemäß Schritt (e) mit Wasser als wässrige Lösung durchgeführt. Besonders vorteilhaft ist hier der Einsatz von deionisiertem Wasser.

In einer Ausführungsform besteht die wässrige Lösung zu mehr als 50 Vol%, bevorzugt zu mehr als 60, 70, 80 oder sogar 90 Vol% aus Wasser. In einer bevorzugten Ausführungsform enthält die wässrige Lösung kein organisches Lösungsmittel und insbesondere keinen Alkohol. Damit liegt eine wasserbasierte Waschung vor und gerade kein Wasser-Alkohol-Austausch wie es bei der Faserwaschung mit einem Gemisch aus Alkohol und Wasser ist, wobei dieses Gemisch mehr als 50 Vol% Alkohol aufweist und typischerweise einen Alkoholgehalt von mehr als 70 Vol% besitzt.

Alternativ kann als wässrige Lösung auch eine Salzlösung mit einer Ionenstärke von I < 0.2 mol/l eingesetzt werden.

Das Waschen gemäß Schritt (e) erfolgt vorteilhafterweise bei einer Temperatur zwischen 30°C und 90°C, bevorzugt zwischen 40°C und 80°C und besonders bevorzugt zwischen 50°C und 70°C.

Die Zeitdauer des Inkontaktbringens im Schritt (e) mit der wässrigen Lösung erfolgt über eine Zeitdauer von zwischen 10 min und 2 Stunden, bevorzugt von zwischen 30 min und einer Stunde.

Bei dem Waschen gemäß Schritt (e) beträgt die Trockenmasse in der Waschmixtur zwischen 0,1 Gew.% und 5 Gew.%, bevorzugt zwischen 0,5 Gew.% und 3 Gew.% und besonders bevorzugt von zwischen 1 Gew.% und 2 Gew.%.

Vorteilhafter wird das Waschen gemäß Schritt (e) unter mechanischer Bewegung der Waschmixtur durchgeführt. Dies erfolgt zweckmäßigerweise mittels Rühren oder Schütteln der Waschmixtur.

Optional kann während der Wäsche im Schritt (e) auch hier eine Abtrennung von Partikeln mit einer Korngröße von mehr als 500 μm bevorzugter von mehr als 400 μm und am bevorzugtesten von mehr als 350 μm erfolgen. Die Abtrennung erfolgt vorteilhafterweise mit einer Passiermaschine oder einer Bandpresse. Dadurch werden sowohl grobpartikuläre Bestandteile des Rohmaterials als auch unzureichend aufgeschlossenes Material entfernt.

Nach dem Waschen mit der wässrigen Lösung wird gemäß Schritt (f) das gewaschene Material von der wässrigen Lösung abgetrennt. Diese Abtrennung erfolgt vorteilhafterweise mit einem Dekanter oder einem Separator.

Im Schritt (g) erfolgt dann ein weiterer Waschschritt, der allerdings mit einem organischen Lösungsmittel erfolgt. Hierbei handelt es sich um ein mindestens zweimaliges Waschen mit einem organischen Lösungsmittel.

Das organische Lösungsmittel kann auch als Gemisch aus dem organischem Lösungsmittel und Wasser eingesetzt werden, wobei dieses Gemisch dann mehr als 50 Vol% an organischem Lösungsmittel aufweist und vorzugsweise mehr als 70 Vol% an organischem Lösungsmittel besitzt.

Das organische Lösungsmittel ist vorteilhafterweise ein Alkohol, der ausgewählt sein kann aus der Gruppe bestehend aus Methanol, Ethanol und Isopropanol.

Der Waschschritt im Schritt (g) erfolgt bei einer Temperatur zwischen 40°C und 75°C, bevorzugt zwischen 50°C und 70°C und besonders bevorzugt zwischen 60°C und 65°C.

Die Zeitdauer des Inkontaktbringens mit dem organischen Lösungsmittel im Schritt (g) erfolgt über eine Zeitdauer von zwischen 60 min und 10 h und bevorzugt von zwischen 2 h und 8 h.

Jeder Waschschritt mit dem organischen Lösungsmittel umfasst ein Inkontaktbringen des Materials mit dem organischen Lösungsmittel für eine bestimmte Zeitdauer gefolgt von der Abtrennung des Materials von dem organischen Lösungsmittel. Für diese Abtrennung wird bevorzugt ein Dekanter oder eine Presse verwendet.

Bei dem Waschen mit dem organischen Lösungsmittel beträgt die Trockenmasse in der Waschlösung von zwischen 0,5 Gew.% und 15 Gew.%, bevorzugt zwischen 1,0 Gew.% und 10 Gew.%, und besonders bevorzugt zwischen 1,5 Gew.% und 5,0 Gew.%.

Das Waschen mit dem organischen Lösungsmittel im Schritt (g) wird bevorzugt unter mechanischer Bewegung der Waschmixtur durchgeführt. Bevorzugt wird das Waschen in einem Behälter mit Rührwerk durchgeführt.

Bei dem Waschen mit dem organischen Lösungsmittel im Schritt (g) wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen mit dem organischen Lösungsmittel im Schritt (g) im Gegenstromverfahren.

In einer Ausführungsform erfolgt bei dem Waschen mit dem organischen Lösungsmittel im Schritt (g) eine partielle Neutralisation durch Zugabe von NaOH, KOH oder Na- oder K- Salzen.

Bei dem Waschen mit dem organischen Lösungsmittel im Schritt (g) kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen mit einem organischen Lösungsmittel die finale Konzentration des organischen Lösungsmittels in der Lösung mit jedem Waschschritt zu. Durch diesen inkrementell steigenden Anteil an organischem Lösungsmittel wird der Wasseranteil in dem Fasermaterial kontrolliert verringert, so dass die rheologischen Eigenschaften der Fasern bei den nachfolgenden Schritten zur Lösungsmittelentziehung und Trocknung erhalten bleiben und kein Kollabieren der aktivierten Faserstruktur erfolgt.

Vorzugsweise beträgt die finale Konzentration des organischen Lösungsmittels im ersten Waschschritt zwischen 60 bis 70 Vol.-%, im zweiten Waschschritt zwischen 70 und 85 Vol.- % und in einem optionalen dritten Waschschritt zwischen 80 und 90 Vol.-%.

Gemäß dem optionalen Schritt (h) kann der Anteil des Lösungsmittels zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Im Schritt (i) erfolgt das Trocknen des gewaschenen Materials aus Schritt (g) oder des gestrippten Materials aus Schritt (h), wobei das Trocknen eine Vakuumtrocknung umfasst und bevorzugt aus dem Vakuumtrocknen besteht. Bei der Vakuumtrocknung wird das gewaschene Material als Trockengut einem Unterdruck ausgesetzt, was den Siedepunkt reduziert und somit auch bei niedrigen Temperaturen zu einer Verdampfung des Wassers führt. Die dem Trockengut kontinuierlich entzogene Verdampfungswärme wird geeigneterweise bis zur Temperaturkonstanz von außen nachgeführt. Die Vakuumtrocknung hat den Effekt, dass sie den Gleichgewichtsdampfdruck erniedrigt, was den Kapillartransport begünstigt. Dies hat sich insbesondere für das vorliegende Apfelfasermaterial als vorteilhaft herausgestellt, da hierdurch die aktivierten geöffneten Faserstrukturen und damit die hieraus resultierenden rheologischen Eigenschaften erhalten bleiben. Vorzugsweise erfolgt die Vakuumtrocknung bei einem absoluten Unterdrück von weniger als 400 mbar, bevorzugt von weniger als 300 mbar, weiterhin bevorzugt von weniger als 250 mbar und insbesondere bevorzugt von weniger als 200 mbar.

Die Trocknung unter Vakuum im Schritt (i) erfolgt zweckmäßigerweise bei einer Mantel- Temperatur von zwischen 40°C und 100°C, bevorzugt von zwischen 50°C und 90°C und besonders bevorzugt von zwischen 60°C und 80°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (i) zusätzlich einen Zerkleinerungs-, Vermahlungs- oder Siebschritt. Dieser ist vorteilhafterweise so ausgestaltet, dass als Ergebnis 90% der Partikel eine Korngröße von weniger 400 $\mu$m, bevorzugt eine Korngröße von weniger als 350 $\mu$m und insbesondere eine Korngröße von weniger als 300 $\mu$m aufweisen. Bei dieser Korngröße ist die Faser gut dispergierbar und zeigt ein optimales Quellvermögen.

Die aktivierte Apfelfaser und ein Verfahren zu ihrer Herstellung werden in der Anmeldung DE 10 2020 115 501.8 offenbart.

## Niederverestertes lösliches Pektin

Das niederveresterte lösliche Pektin weist gemäß einer bevorzugten Ausführungsform einen Veresterungsgrad von 15 bis 50%, bevorzugt von 25 bis 48%, besonders bevorzugt von 30 bis 46% und insbesondere bevorzugt von 36 bis 42%, bezogen auf die Galakturonsäure-Einheiten des Pektins, auf. Beispielsweise kann der Veresterungsgrad des niederveresterten löslichen Pektins vorzugsweise 26%, 27%, 28%, 29%, 30%, 31%, 32%, 33%, 34%, 35%, 36%, 37%, 38%, 39%, 40%, 41%, 42%, 43%, 44%, 45%, 46%, 47% oder 48% betragen. Niederveresterte lösliche Pektine mit einem solchen Veresterungsgrad eignen sich besonders für das Ausbilden einer stabilen und homogenen ungefrorenen Serumphase.

Insbesondere weist das niederveresterte lösliche Pektin für den Fall, dass es ein Citrus-Pektin ist, einen Veresterungsgrad von 36 bis 40%, bezogen auf die Galakturonsäure- Einheiten des Pektins auf.

Insbesondere weist das niederveresterte lösliche Pektin für den Fall, dass es ein Apfel-Pektin ist, einen Veresterungsgrad von 38 bis 42%, bezogen auf die Galakturonsäure- Einheiten des Pektins auf.

Das niederveresterte lösliche Pektin weist vorzugsweise eine Calciumempfindlichkeit von 200 bis 3000 HPE, bevorzugt 300 bis 2500 HPE, besonders bevorzugt von 400 bis 2000 HPE, weiterhin bevorzugt von 500 bis 1500 HPE und am meisten bevorzugt von 500 bis 1000 HPE auf, wobei HPE für Herbstreith-Pektinometer-Einheiten steht. Beispielsweise kann die Calciumempfindlichkeit des niederveresterten löslichen Pektins 400 HPE, 500 HPE, 600 HPE, 700 HPE, 800 HPE, 900 HPE, 1000 HPE, 1100 HPE, 120 0HPE, 1300 HPE oder 1400 HPE betragen. Weist das niederveresterte lösliche Pektin eine so hohe Calciumempfindlichkeit auf, kann eine besonders gute Textur des Speiseeises erreicht werden. Eine detaillierte Angabe des Testverfahrens ist in den Ausführungsbeispielen angegeben.

Vorzugsweise weist das niederveresterte lösliche Pektin für den Fall, dass es ein Citrus- Pektin ist, eine Calciumempfindlichkeit von 200 bis 3000 HPE, bevorzugt 300 bis 2500 HPE, besonders bevorzugt von 400 bis 2000 HPE, weiterhin bevorzugt von 500 bis 1500 HPE und am meisten bevorzugt von 600 bis 1000 HPE auf, wobei HPE für Herbstreith-Pektinometer-Einheiten steht. Beispielsweise kann die Calciumempfindlichkeit des niederveresterten löslichen Citrus-Pektins 400 HPE, 500 HPE, 600 HPE, 700 HPE, 800 HPE, 900 HPE, 1000 HPE, 1100 HPE, 1200 HPE, 1300 HPE oder 1400 HPE betragen. Bei einer solchen Calciumempfindlichkeit weist das niederveresterte lösliche Citrus-Pektin ein besonders gutes Quellverhalten auf und sorgt für ein besonders gutes Abschmelzverhalten des Speiseeises.

Vorzugsweise weist das niederveresterte lösliche Pektin für den Fall, dass es ein Apfel-Pektin ist, eine Calciumempfindlichkeit von 200 bis 2500 HPE, bevorzugt 300 bis 2000 HPE, besonders bevorzugt von 400 bis 1500 HPE und am meisten bevorzugt von 500 bis 1000 HPE auf, wobei HPE für Herbstreith-Pektinometer-Einheiten steht. Beispielsweise kann die Calciumempfindlichkeit des niederveresterten löslichen Apfel-Pektins 400 HPE, 500 HPE, 600 HPE, 700 HPE, 800 HPE, 900 HPE, 1000 HPE, 1100 HPE, 1200 HPE, 1300 HPE oder 1400 HPE betragen. Bei einer solchen Calciumempfindlichkeit weist das niederveresterte lösliche Apfel-Pektin ein besonders gutes Quellverhalten auf und sorgt für ein besonders gutes Abschmelzverhalten des Speiseeises.

## Niederverestertes, amidiertes lösliches Pektin

In einer bevorzugten Ausführungsform ist das niederveresterte lösliche Pektin ein niederverestertes amidiertes lösliches Pektin. Das niederveresterte amidierte lösliche Pektin weist gemäß einer bevorzugten Ausführungsform einen Veresterungsgrad von 25 bis 50%, bevorzugt von 29 bis 45%, besonders bevorzugt von 34 bis 40% und insbesondere bevorzugt von 36% bis 37,5%, bezogen auf die Galakturonsäure-Einheiten des Pektins, auf. Beispielsweise kann der Veresterungsgrad des niederveresterten, amidierten löslichen Pektins vorzugsweise 29%, 30%, 31%, 32%, 33%, 34%, 35%, 36%, 37%, 38%, 39%, 40%, 41%, 42%, 43% oder 44% betragen. Niederveresterte amidierte lösliche Pektine mit einem solchen Veresterungsgrad eignen sich besonders für das Ausbilden einer hochviskosen homogenen ungefrorenen Serumphase.

Vorzugsweise weist das niederveresterte amidierte lösliche Pektin für den Fall, dass es ein Citruspektin ist, einen Veresterungsgrad von 25 bis 50%, bevorzugt von 30 bis 45%, besonders bevorzugt von 35 bis 40% und insbesondere bevorzugt von 37,5%, bezogen auf die Galakturonsäure-Einheiten des Pektins, auf. Beispielsweise kann der Veresterungsgrad des niederveresterten, amidierten löslichen Citrus-Pektins vorzugsweise 31%, 30%, 31%, 32%, 33%, 34%, 35%, 36%, 37%, 38%, 39%, 40%, 41%, 42%, 43% oder 44% betragen.

Vorzugsweise weist das niederveresterte amidierte lösliche Pektin für den Fall, dass es ein Apfelpektin ist, einen Veresterungsgrad von 25 bis 50%, bevorzugt von 29 bis 44%, besonders bevorzugt von 34 bis 39% und insbesondere bevorzugt von 36%, bezogen auf die Galakturonsäure-Einheiten des Pektins, auf. Beispielsweise kann der Veresterungsgrad des niederveresterten, amidierten löslichen Citrus-Pektins vorzugsweise 30%, 31%, 30%, 31%, 32%, 33%, 34%, 35%, 36%, 37%, 38%, 39%, 40%, 41%, 42% oder 43% betragen.

Vorzugsweise weist das niederveresterte amidierte lösliche Pektin einen Amidierungsgrad von 6 bis 18%, bevorzugt von 8 bis 17%, besonders bevorzugt von 10 bis 16% und am bevorzugtesten von 11 bis 15%, bezogen auf die Galakturonsäure-Einheiten des Pektins, auf. Bei einem solchen Amidierungsgrad weist das niederveresterte amidierte lösliche Pektin ein besonders gutes Quellverhalten auf und sorgt für ein besonders gutes Abschmelzverhalten des Speiseeises.

Vorzugsweise weist das niederveresterte amidierte lösliche Pektin für den Fall, dass es ein Citrus-Pektin ist einen Amidierungsgrad von 6 bis 16%, bevorzugt von 8 bis 14%, besonders bevorzugt von 10 bis 12% und am bevorzugtesten von 11%, bezogen auf die Galakturonsäure-Einheiten des Pektins, auf. Bei einem solchen Amidierungsgrad weist das niederveresterte amidierte lösliche Citrus-Pektin ein besonders gutes Quellverhalten auf und sorgt für ein besonders gutes Abschmelzverhalten des Speiseeises.

Vorzugsweise weist das niederveresterte amidierte lösliche Pektin für den Fall, dass es ein Apfel-Pektin ist einen Amidierungsgrad von 8 bis 18%, bevorzugt von 10 bis 17%, besonders bevorzugt von 12 bis 16% und am bevorzugtesten von 13% bis 15%, bezogen auf die Galakturonsäure-Einheiten des Pektins, auf. Bei einem solchen Amidierungsgrad weist das niederveresterte amidierte lösliche Apfel-Pektin ein besonders gutes Quellverhalten auf und sorgt für ein besonders gutes Abschmelzverhalten des Speiseeises.

Das niederveresterte amidierte lösliche Pektin weist vorzugsweise eine Calciumreaktivität von 500 bis 3000 HPE, bevorzugt 700 bis 2500 HPE, besonders bevorzugt von 1000 bis 2000 HPE, am meisten bevorzugt 1400 bis 1700 HPE, wobei HPE für Herbstreith-Pektinometer-Einheiten steht. Weist das niederveresterte amidierte lösliche Pektin eine so hohe Calciumreaktivität auf, kann eine besonders gute Textur des Speiseeises erreicht werden. Eine detaillierte Angabe des Testverfahrens ist in den Ausführungsbeispielen angegeben.

**Hochverestertes lösliches Pektin**

Das hochveresterte lösliche Pektin weist vorzugsweise einen Veresterungsgrad von 60 bis 80%, bevorzugt von 64 bis 76%, besonders bevorzugt von 66 bis 74% und am bevorzugtesten von 68 bis 70%; bezogen auf die Galakturonsäure-Einheiten des Pektins, auf. Beispielsweise kann der Veresterungsgrad des hochveresterten löslichen Pektins vorzugsweise 65%, 66%, 67%, 68%, 69%, 70%, 71%, 72%, 73% oder 74% betragen. Bei einem solchen Veresterungsgrad des hochveresterten löslichen Pektins weist das hochveresterte lösliche Pektin eine besonders gute Kompatibilität mit den anderen Komponenten auf und weist eine hohe Geliergeschwindigkeit auf.

Vorteilhafterweise weist das hochveresterte lösliche Pektin eine Gelierkraft von 140 bis 280 °USA-Sag, bevorzugt von 160 bis 260 °USA-Sag und besonders bevorzugt von 170 bis 250 °USA-Sag auf. Die hohe Gelierkraft des hochveresterten löslichen Pektins wirkt sich positiv auf die Textur des Speiseeises und dessen Synäreseverhalten aus. Die Gelierkraft kann mittels Methode 5-54 des IFT-Komitees für Pektinstandardisierung (IFT Committee on Pectin Standardisation, Food Technology, 1959, 13: 496-500) festgestellt werden.

Vorteilhafterweise weist das hochveresterte lösliche Pektin, für den Fall, dass es ein hochverestertes lösliches Citruspektin ist, eine Gelierkraft von 200 bis 280 °USA-Sag, bevorzugt von 220 bis 260 °USA-Sag, besonders bevorzugt von 230 bis 250 °USA-Sag und insbesondere bevorzugt von 240 °USA-Sag auf. Die hohe Gelierkraft des hochveresterten Pektins wirkt sich positiv auf die Textur der Zubereitung und deren Synäreseverhalten aus.

Vorteilhafterweise weist das hochveresterte lösliche Pektin, für den Fall, dass es ein hochverestertes lösliches Apfelpektin ist, eine Gelierkraft von 140 bis 220 °USA-Sag, bevorzugt von 160 bis 200 °USA-Sag und besonders bevorzugt von 170 bis 180 °USA-Sag auf. Die hohe Gelierkraft des hochveresterten Pektins wirkt sich positiv auf die Textur der Zubereitung und deren Synäreseverhalten aus.

**Weitere Eigenschaften der Zusammensetzung**

Ferner ist es bevorzugt, dass die erfindungsgemäß verwendete Zusammensetzung in einer 1,0 Gew.%-igen wässrigen Suspension einen pH-Wert von 3 bis 5 und bevorzugt von 3,4 bis 4,5 aufweist. Bei diesem pH-Wert hat das lösliche Pektin seine größte chemische Stabilität.

Die erfindungsgemäß verwendete Zusammensetzung liegt vorzugsweise in Pulverform vor. Dies hat den Vorteil, dass hiermit eine Formulierung mit geringem Gewicht und hoher Lagerstabilität vorliegt, die auch prozesstechnisch in einfacher Weise eingesetzt werden kann. Diese Formulierung wird erst durch die erfindungsgemäße Pflanzenfaser ermöglicht, die im Gegensatz zu modifizierten Stärken beim Einrühren in Flüssigkeiten nicht zur Klumpenbildung neigt.

Die erfindungsgemäß verwendete Zusammensetzung kann neben den Bestandteilen Pflanzenfaser, niederverestertes, bevorzugt amidiertes, lösliches Pektin, hochverestertes lösliches Pektin und optional Zucker noch andere Bestandteile aufweisen. Insbesondere kann die erfindungsgemäß verwendete Zusammensetzung zusätzlich Maltodextrin; lösliche Ballaststoffe ohne Viskositätsaufbau, beispielsweise Inulin oder resistentes Maltodextrin und Zuckeralkohole, beispielsweise Erythritol, Sorbitol, Xylitol, Palatinit oder Mannitol enthalten. Die genannten Bestandteile können zur Vermeidung von Klumpenbildung beitragen.

## Verwendung der Zusammensetzung

Die Erfindung betrifft die Verwendung der erfindungsgemäßen Zusammensetzung als Halberzeugnis in der Lebensmittelindustrie. Es hat sich gezeigt, dass die erfindungsgemäß verwendete Zusammensetzung sich hervorragend als Halberzeugnis in der Lebensmittelindustrie eignet, da es selbst bei gefrorenen, direkt zum Verzehr geeigneten Lebensmitteln für eine angenehme Textur und eine hohe Formstabilität sorgt. Die erfindungsgemäß verwendete Zusammensetzung eignet sich aber grundsätzlich für die Verwendung in ganz unterschiedlichen Lebensmitteln und ist nicht nur zur Verwendung in gefrorenen Lebensmitteln geeignet. Besondern geeignet ist die Verwendung der erfindungsgemäß verwendeten Zusammensetzung als Halberzeugnis in Desserts, die gefroren gelagert und ungefroren verzehrt werden; in Creme-Desserts, beispielsweise Panna Cotta, gebrannte Creme-Desserts, Creme-Desserts auf Basis von Milchalternativen, insbesondere Kokosmilch, Hafermilch und Sojamilch; sowie in Dessertsoßen, beispielsweise Karamellsoße, Schokoladensoße oder Fruchtsoße.

Gemäß einer bevorzugten Ausgestaltung der erfindungsgemäßen Verwendung wird die Zusammensetzung als Halberzeugnis zur Herstellung von Speiseeis, niederkalorischem Speiseeis, pflanzlichem Speiseeis, oder von Speiseeis mit Insektenprotein verwendet. Die erfindungsgemäß verwendete Zusammensetzung hat sich als besonders geeignetes Halberzeugnis für diese Anwendungsbereiche herausgestellt.

Bevorzugt wird hierbei die erfindungsgemäße Zusammensetzung als Halberzeugnis verwendet. Dies bedeutet, dass die Zusammensetzung, die Pflanzenfaser, niederverestertes löslichen Pektin und darüber hinaus hochverestertes lösliches Pektin enthält, als Mischung dieser (und eventuell weiterer Komponenten) in der Lebensmittelindustrie zur Herstellung von Speiseeis, niederkalorischem Speiseeis, pflanzlichem Speiseeis, oder von Speiseeis mit Insektenprotein verwendet wird. Nicht Teil der Erfindung ist die Verwendung als Halberzeugnis für die Herstellung anderer gefrorener Lebensmittel.

In einer alternativen Ausführungsform können die drei Hauptbestandteile der erfindungsgemäß verwendeten Zusammensetzung getrennt eingesetzt werden, was sowohl beinhaltet, dass alle drei Komponenten, nämlich pektinhaltige Pflanzenfaser, niederverestertes lösliches Pektin und hochverestertes lösliches Pektin nacheinander hinzugeben werden, oder eine Mischung von zwei Bestandteilen zeitlich getrennt von dem dritten Bestandteil hinzugegeben wird. Weiterhin können die Bestandteile als einzelner Bestandteil oder als Mischung von zwei Bestandteilen in unterschiedlichen Zutaten des herzustellenden gefrorenen Lebensmittels vorgehalten werden, so dass die erfindungsgemäße Zusammensetzung erst in der Mischung dieser Zutaten gebildet wird.

## Speiseeis

Die Erfindung betrifft ferner ein Speiseeis enthaltend die erfindungsgemäß verwendete Zusammensetzung, wobei das Speiseeis eine oder mehrere der folgenden Zutaten umfasst:

a. eine wässrige Lösung, die bevorzugt Milch und/oder ein Milcherzeugnis ist, wobei der Wasseranteil in dem Speiseeis von 20 bis 80 Gew.%, bevorzugt von 30 bis 70 Gew.%, besonderes bevorzugt von 40 bis 65 Gew.%, und insbesondere bevorzugt von 50 bis 65 Gew.%, bezogen auf das Gesamtgewicht des Speiseeises, beträgt;

b. eine Fettquelle, die pflanzlichen oder tierischen Ursprungs ist, oder einer Kombination hieraus, wobei der Fettgehalt in dem Speiseeis bevorzugt von 0,5 bis 30 Gew.%, besonders bevorzugt von 0,5 bis 20 Gew.%, weiter bevorzugt von 0,5 bis 15 Gew.% und insbesondere bevorzugt von 0,5 % bis 12 Gew.%, bezogen auf das Gesamtgewicht des Speiseeises, beträgt;

c. eine Proteinquelle, die pflanzlichen oder tierischen Ursprungs ist, oder einer Kombination hieraus, wobei der Proteingehalt in dem Speiseeis bevorzugt von 0,5 bis 30 Gew.%, besonders bevorzugt von 1 bis 20 Gew.%, weiter bevorzugt von 1 bis 10 Gew %, insbesondere bevorzugt von 2 bis 5 Gew.%, bezogen auf das Gesamtgewicht des Speiseeises, beträgt,

d. Zucker und/oder eine Zuckeralternative, wobei der Zuckergehalt in dem Speiseeis bevorzugt von 5 bis 50 Gew.%,

besonders bevorzugt von 8 bis 40 Gew.%, weiter bevorzugt von 10 bis 30 Gew.%, insbesondere bevorzugt 12 bis 25 Gew.%, bezogen auf das Gesamtgewicht des Speiseeises, beträgt;

wobei das Speiseeis die erfindungsgemäß verwendete Zusammensetzung in einem Anteil von 0,2 bis 5 Gew.%, bevorzugt von 0,2 bis 3 Gew.%, besonders bevorzugt von 0,5 bis 2 Gew.% und insbesondere bevorzugt von 0,5 bis 1,0 Gew.%, bezogen auf das Gesamtgewicht des Speiseeises, enthält. Das erfindungsgemäße Speiseeis weist eine angenehme Textur und ein hervorragendes Abschmelzverhalten auf. Enthält das Speiseeis hingegen einen Anteil an erfindungsgemäßer Zusammensetzung von weniger als 0,2 Gew.%, so verschlechtert sich das Abschmelzverhalten und die Formstabilität des Speiseeises deutlich. Bei einem Anteil an erfindungsgemäßer Zusammensetzung von mehr als 5 Gew.% im Speiseeis ist die Produktion des Speiseeises erschwert.

Gemäß einer bevorzugten Ausgestaltung umfasst das erfindungsgemäße Speiseeis mindestens zwei der Zutaten a. bis d., weiter bevorzugt mindestens drei der Zutaten a. bis d. und besonders bevorzugt umfasst das Speiseeis alle vier der Zutaten a. bis d. Umfasst das erfindungsgemäße Speiseeis alle vier der Zutaten b. bis d. in den angegebenen Mengen, so weist das Speiseeis eine besonders gute Textur auf und hat einen besonders angenehmen Geschmack.

Das erfindungsgemäße Speiseeis zeichnet sich durch die besonders gute Textur, die hohe Formstabilität und das hervorragende Abschmelzverhalten aus.

Gemäß einer bevorzugten Ausgestaltung des erfindungsgemäßen Speiseeises weist das Speiseeis eine Eiskristallwachstumsrate von 0,001 bis 10 $\mu$m/min, bevorzugt von 0,01 bis 8 $\mu$m/min, besonders bevorzugt von 0,03 bis 6 $\mu$m/min, insbesondere bevorzugt von 0,04 bis 2 $\mu$m/min, wobei die Temperatur zur Bestimmung des Eiskristallwachstums -12 °C beträgt.

Vorzugsweise weist das erfindungsgemäße Speiseeis innerhalb eines Zeitraums von 300 min bei einer Temperatur von -12 °C eine Reduktion der Eiskristallzahl von 1 bis 99 %, bevorzugt von 10 bis 90 %, besonders bevorzugt von 20 bis 90 %, insbesondere bevorzugt von 40 bis 80 %.

Gemäß einer bevorzugten Ausgestaltung weist das erfindungsgemäße Speiseeis eine Abschmelzgeschwindigkeit von 0 g/min bis 100 g/ min, bevorzugt von 0 g/min bis 80 g/ min, besonders bevorzugt von 0 g/min bis 50 g/min, insbesondere bevorzugt 0 g/von min bis 10 g/ min auf, wobei 100 ml Speiseeis auf ein Lochgitter mit einem Lochdurchmesser von in etwa 10 mm und einem Abstand zwischen den Löchern von in etwa 2 mm für einen Zeitraum von bis zu 80 min gestellt wird und die Umgebungstemperatur bei dem Abschmelzversuch 23°C beträgt.

Gemäß einer bevorzugten Ausführungsform weist das Speiseeis einen Gefrierpunkt von -0,1 °C bis -15 °C, bevorzugt von -0,1 °C bis -12°C, besonders bevorzugt von -2 °C bis -10°C und insbesondere bevorzugt von -2°C bis -5 °C auf. Bei einem solchen Gefrierpunkt ist sichergestellt, dass sich gefrorenes Wasser im Speiseeis nicht von den anderen Bestandteilen während der Kühllagerung abtrennt.

Das erfindungsgemäße Speiseeis zeichnet sich durch eine gute Textur und eine gute Formstabilität aus. Vorzugsweise weist das Speiseeis eine Premixviskosität von 50 bis 1200 mPas, bevorzugt von 100 bis 950 mPas, und besonders bevorzugt von 200 bis 500 mPas, auf, wobei die Viskosität des Premixes bei einer Scherrate von 50 s$^{-1}$ bei 4°C gemessen wird.

Gemäß einer bevorzugten Ausführungsform weist das Speiseeis einen Lufteinschlag (Overrun) von 10% bis 170%, bevorzugt 40% bis 140%, besonders bevorzugt 50% bis 120%, insbesondere bevorzugt 90% bis 110%, bezogen auf das Gesamtvolumen des Speiseeises. Bei einem Lufteinschlag von 100% bedeutet dies, dass die Hälfte des Gesamtvolumens des Speiseeises aus eingeschlagener Luft besteht und die Eismasse die andere Hälfte des Gesamtvolumens ausmacht. Bei einem solchen Lufteinschlag wird ein besonders cremiges Speiseeis erhalten.

Gemäß einer weiteren Ausführungsform der Erfindung weist das Speiseeis einen Anteil an destabilisiertem Fett von 1 bis 50 Gew.%, bevorzugt von 5 bis 35 Gew.%, besonders bevorzugt von 8 bis 25 Gew.%, insbesondere bevorzugt von 10 bis 20 Gew.%; bezogen auf den gesamten Fettgehalt des Speiseeises, wobei der Anteil an destabilisiertem Fett bei einer Einzelwellenlänge von 540 nm gemessen wird. Eine detaillierte Angabe des Testverfahrens zur Bestimmung des Anteils an destabilisiertem Fett ist in den Ausführungsbeispielen angegeben.

Das erfindungsgemäße Speiseeis zeichnet sich durch eine homogene und angenehme Textur aus. Gemäß einer bevorzugten Ausführungsform weist das Speiseeis einen mittleren Eiskristalldurchmesser von 0,01 bis 200 $\mu$m, bevorzugt von 0,1 bis 150 $\mu$m, besonders bevorzugt von 0,1 bis 100 $\mu$m, insbesondere bevorzugt von 1 bis 60 $\mu$m, auf. Der Eiskristalldurchmesser kann mittels Kamerasoftware Visicam Analyzer 5.0 unter einem Lichtmikroskop vermessen werden. Hierbei werden pro mikroskopische Aufnahme ca. 150 Eiskristalle vermessen und die durchschnittliche Eiskristallgröße in $\mu$m bestimmt, die dem mittleren Eiskristalldurchmesser entspricht.

Da das erfindungsgemäße Speiseeis als Stabilisatorsystem die erfindungsgemäße Zusammensetzung enthält, welche einen geringen Kaloriengehalt aufweist, ist es möglich, auch ein Speiseeis mit einem niedrigen Kaloriengehalt zu erhalten. Gemäß einer bevorzugten Ausführungsform der Erfindung weist das Speiseeis einen kalorischen Wert von 5 kcal bis 500 kcal/ 100 g, bevorzugt von 10 kcal bis 400 kcal / 100 g, besonders bevorzugt von 40 kcal bis 250 kcal/100 g, insbesondere bevorzugt 50 kcal bis 150 kcal/ 100 g, auf.

Gemäß einer besonders bevorzugten Ausgestaltungsform ist das Speiseeis ein pflanzliches Speiseeis. Auf diese Weise kann das erfindungsgemäße Speiseeis als vegane Alternative zu anderen Eisangeboten dienen. Bevorzugt umfasst das erfindungsgemäße pflanzliche Speiseeis als Zutaten Wasser, eine pflanzliche Fettquelle, beispielsweise Kokosfett, Palmfett, Kakaobutter, Nüsse oder Getreide, eine pflanzliche Proteinquelle, beispielsweise Erbse, Hanf oder Soja, Zucker und/oder eine Zuckeralternative. Mit dieser Ausgestaltung des erfindungsgemäßen Speiseeises kann ein pflanzliches Speiseeis mit hervorragenden Abschmelzeigenschaften und einem angenehmen Geschmack erhalten werden.

Gemäß einer anderen vorteilhaften Ausgestaltung umfasst die Proteinquelle im Speiseeis eine Proteinquelle aus Insekten. Gemäß einer anderen vorteilhaften Ausgestaltung besteht die Proteinquelle im Speiseeis aus einer Proteinquelle aus Insekten. Insekten haben sich in den vergangenen Jahren als günstige, ökologische und gesunde Proteinquelle herausgestellt, die vermehrt an Bedeutung gewinnt.

Das erfindungsgemäße Speiseeis kann zudem weitere Bestandteile enthalten. Hierzu gehören beispielsweise Geschmacksträger wie beispielsweise Kakaopulver; Pflanzenextrakte wie Vanille, Pfefferminze, Tonkabohne oder Süßholz; Fruchtpüree, beispielsweise Erdbeere, schwarze Johannisbeere oder Kirsche; Gemüsepüree, beispielsweise Avocado, Tomate oder Karotte; Fruchtpulver; Aromen, beispielsweise Pfefferminze, Vanille; lösliche Ballaststoffe, beispielsweise Inulin oder resistentes Maltodextrin; Joghurtpulver; Quark; Nusspasten, beispielsweise Pistazie, Walnuss oder Haselnuss; Milchalternativen, beispielsweise auf Basis von Hafer, Kokosnuss oder Soja; Spirituosen; Wein oder Weinerzeugnisse. Das zur erfindungsgemäß verwendeten Zusammensetzung und den darin enthaltenen Bestandteilen Gesagte gilt entsprechend für das erfindungsgemäße Speiseeis.

**Verfahren zur Herstellung von Speiseeis**

Die Erfindung betrifft ferner ein Verfahren zur Herstellung des erfindungsgemäßen Speiseeises.

Das erfindungsgemäße Verfahren zur Herstellung des erfindungsgemäßen Speiseeises umfasst mindestens die Schritte:

a. Bereitstellen der erfindungsgemäß verwendeten Zusammensetzung;

b. optionales Bereitstellen einer wässrigen Lösung, die bevorzugt Milch und/oder ein Milcherzeugnis ist;

c. optionales Bereitstellen weiterer Komponenten, insbesondere einer Fettquelle, die pflanzlichen oder tierischen Ursprungs ist, oder einer Kombination hieraus, einer Proteinquelle, die pflanzlichen oder tierischen Ursprungs ist, oder einer Kombination hieraus und/oder eines Zuckers und/oder einer Zuckeralternative;

d. Zusammenführen, insbesondere Mischen, der in Schritt a. bis c. bereitgestellten Komponenten um eine Mischung zu erhalten,

e. Erhitzen der in Schritt d. erhaltenen Mischung auf eine Temperatur von mindestens 60 °C, insbesondere von mindestens 80 °C;

f. Homogenisieren der in Schritt e. erhitzten Mischung, insbesondere durch Druckhomogenisieren;

g. Abkühlen der in Schritt f. homogenisierten Mischung auf in etwa 4 °C;

h. Reifen der Mischung bei 4 bis 6 °C;

i. Ausfrieren der in Schritt g. abgekühlten Mischung auf eine Temperatur von weniger als -4 °C.

Die Verfahrensschritte a. bis i. Können in jeder technisch sinnvollen Reihenfolge durchgeführt werden. Vorzugsweise werden sie in der angegebenen Reihenfolge durchgeführt. Insbesondere die Schritte a. bis c. können aber auch in anderer Reihenfolge umgesetzt werden.

Das Zusammenführen, insbesondere Mischen, Erhitzen, Homogenisieren und Abkühlen der Mischung erfolgt vorzugsweise in einem Pasteurisierer. Als besonders geeignet hat sich der Pasteurisierer der Fa. Carpigiani Pastomaster 60 tronic mit einem Fassungsvolumen von 60 L herausgestellt. Vorzugsweise beträgt die Erhitzungsdauer von 30 bis 40 min und die Abkühlungsdauer auf 4° C von 50 bis 60 min. Nach Erreichen von 4° C beträgt die Reifedauer des Premixes vorzugsweise 24 Stunden.

Gemäß einer bevorzugten Ausgestaltung des erfindungsgemäßen Verfahrens erfolgt das Homogenisieren der erhitzten Mischung durch Druckhomogenisieren. Als bevorzugt hat sich hierfür ein Druck von 10 bis 250 bar, insbesondere von 30 bis 200 bar, herausgestellt. Als bevorzugte Form des Druckhomogenisierens wird das zweistufige Homogenisieren bei unterschiedlichen Drücken eingesetzt. Bei einem zweistufigen Homogenisierungsprozess ist es vorteilhaft, wenn die erste Stufe bei einem höheren Druck durchgeführt wird als die zweite Stufe. Besonders vorteilhaft ist es, wenn die erste Druckhomogenisierung bei 180 bar und die zweite bei 60 bar durchgeführt wird.

Das Ausfrieren der Eismasse erfolgt vorzugsweise in einer Eismaschine mit kontinuierlichem Mixfluss von 140 L/h, bei einem Druck von 3 bar und einem injizierten Lufteinschlag von 80 bis 120 %, wobei die Schlagewellenfrequenz 700 U/min nicht überschreitet. Für das Ausfrieren der Eismasse eignet sich beispielsweise die Eismaschine GIF 600 der Fa. Gram. Equipment.

Das zum erfindungsgemäßen Speiseeis, den darin enthaltenen Bestandteilen und den Mengenverhältnissen der Bestandteile Gesagte gilt entsprechend für das erfindungsgemäße Verfahren zur Herstellung des Speiseeises.

**Definitionen**

Eine Pflanzenfaser gemäß der Anmeldung ist eine Faser, die aus einer nichtverholzten pflanzlichen Zellwand isoliert wird und hauptsächlich aus Cellulose besteht. Weitere Bestandteile sind unteranderem Hemicellulose und Pektin, wobei die Pflanzenfaser erfindungsgemäß einen wasserlöslichen Pektingehalt von unter 10 Gew.%, und bevorzugt von unter 6 Gew.% aufweist. Die erfindungsgemäße Pflanzenfaser weist erfindungsgemäß einen wasserlöslichen Pektingehalt von zwischen 2 Gew.% und 10 Gew.%, vorteilhafterweise einen wasserlöslichen Pektingehalt von zwischen 2 Gew.% und 8 Gew.% und besonders bevorzugt von zwischen 2 und 6 Gew.% auf. Der Gehalt an wasserlöslichem Pektin in dieser Pflanzenfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

Eine Fruchtfaser gemäß der Erfindung ist eine Pflanzenfaser gemäß der obigen Definition, die hierbei aus einer Frucht isoliert wird. Unter einer Frucht ist hierbei die Gesamtheit der Organe einer Pflanze zu verstehen, die aus einer Blüte hervorgehen, wobei sowohl die klassischen Obstfrüchte enthalten auch Fruchtgemüse enthalten sind.

Eine "Citrusfaser" gemäß der Anmeldung ist eine hauptsächlich aus Fasern bestehende Komponente, die aus einer nichtverholzten pflanzlichen Zellwand einer Citrusfrucht isoliert wird und hauptsächlich aus Cellulose besteht. Der Begriff der Faser stellt in gewisser Hinsicht ein Misnomer dar, weil die Citrusfasern makroskopisch nicht als Fasern in Erscheinung treten, sondern ein pulverförmiges Produkt darstellen. Weitere Bestandteile der Citrusfaser sind unter anderem Hemicellulose und Pektin. Die Citrusfaser kann vorteilhafterweise aus Citruspulpe, Citrusschale, Citrusvesikel, Segmentmembranen oder einer Kombination hiervon gewonnen werden.

Eine "Apfelfaser" gemäß der Anmeldung ist eine hauptsächlich aus Fasern bestehende Komponente, die aus einer nichtverholzten pflanzlichen Zellwand eines Apfels isoliert wird und hauptsächlich aus Cellulose besteht. Der Begriff der Faser stellt in gewisser Hinsicht ein Misnomer dar, weil die Apfelfasern makroskopisch nicht als Fasern in Erscheinung treten, sondern ein pulverförmiges Produkt darstellen. Weitere Bestandteile der Apfelfaser sind unter anderem Hemicellulose und Pektin.

Eine aktivierte Citrusfaser gemäß der vorliegenden Anmeldung ist in Abgrenzung von einer aktivierbaren (und damit lediglich partiell-aktivierten) Citrusfaser durch die Fließgrenze der Faser in 2.5%iger Dispersion oder durch die Viskosität definiert. Eine aktivierte Citrusfaser ist damit dadurch gekennzeichnet, dass sie eine Fließgrenze I (Rotation) von mehr als 5,5 Pa, eine Fließgrenze I (Cross over) von mehr als 6,0 Pa oder eine Viskosität von mehr als 650 mPas aufweist.

Eine aktivierbare Citrusfaser gemäß der vorliegenden Anmeldung ist in Abgrenzung von einer aktivierten Citrusfaser durch die Fließgrenze der Faser in 2.5%iger Dispersion oder durch die Viskosität definiert. Eine aktivierbare Citrusfaser ist damit dadurch gekennzeichnet, dass sie eine Fließgrenze I (Rotation) von zwischen 1,0 und 4,0 Pa, eine Fließgrenze I (Cross over) von zwischen 1,0 und 4,5 Pa oder eine Viskosität von 150 bis 600 mPas aufweist.

Eine aktivierte Apfelfaser gemäß der vorliegenden Anmeldung ist in Abgrenzung von einer aktivierbaren (und damit lediglich partiell-aktivierten) Apfelfaser durch die Fließgrenze der Faser in 2.5%iger Dispersion oder durch die Viskosität definiert. Eine aktivierte Apfelfaser ist damit dadurch gekennzeichnet, dass sie eine Fließgrenze I (Rotation) von mehr als 5,0 Pa oder eine Fließgrenze I (Cross over) von mehr als 5,0 aufweist.

Ein Apfel ist gemäß der Erfindung definiert als Frucht des Kulturapfels *(Malus domestica).*

Ein lösliches Pektin gemäß der Anmeldung ist definiert als ein pflanzliches Polysaccharid, das als Polyuronid im Wesentlichen aus $\alpha$-1,4-glycosidisch verknüpften D-Galakturonsäure-Einheiten besteht. Die Galakturonsäureeinheiten sind partiell mit Methanol verestert. Der Veresterungsgrad beschreibt den prozentualen Anteil der Carboxylgruppen in den Galakturonsäure-Einheiten des Pektins, welche in veresterter Form vorliegen, z.B. als Methylester.

Bei dem löslichen Pektin gemäß der Anmeldung handelt es sich um ein Pektin, das durch Extraktion aus pflanzlichen Geweben gewonnen wird. Es handelt sich damit in Abgrenzung von den nativen pflanzlichen Pektinen (sog. Protopektinen) um ein isoliertes wasserlösliches Pektin. Das lösliche Pektin gemäß der Erfindung ist eine von der Pflanzen-, bzw. Fruchtfaser getrennte Komponente und damit kein Bestandteil der Pflanzen- bzw. Fruchtfaser.

Bei dem niederveresterten Pektin gemäß der Anmeldung handelt es sich um ein Pektin mit weniger als 50% veresterten Galakturonsäure-Einheiten. Das bedeutet, dass bei weniger als 50% aller Galakturonsäure-Einheiten die Carbonsäuregruppe verestert vorliegt. Bei einem Pektinpolymer mit 30 Galakturonsäure-Einheiten handelt es sich somit um ein niederverestertes Pektin, wenn höchstens 14 der Galakturonsäure-Einheiten verestert sind. Üblicherweise handelt es sich bei der Estergruppe um einen Methylester. Niederveresterte Pektine weisen vorzugsweise mindestens einen Veresterungsgrad von 5% der Galakturonsäure-Einheiten auf.

Wenn hier oder an anderer Stelle von hochveresterten Pektinen die Rede ist, dann sind damit Pektine mit mindestens 50% veresterten Galakturonsäure-Einheiten gemeint. Das bedeutet, dass bei mindestens 50% aller Galakturonsäure-Einheiten die Carbonsäuregruppe verestert vorliegt. Bei einem Pektinpolymer mit 30 Galakturonsäure-Einheiten handelt es sich somit um ein hochverestertes Pektin, wenn mindestens 15 der Galakturonsäure-Einheiten verestert sind. Üblicherweise handelt es sich bei der Estergruppe um einen Methylester.

Der Veresterungsgrad kann mittels der Methode nach JECFA Monograph 19-2016, Joint FAO/WHO Expert Committee on Food Additives) bestimmt werden.

Wenn hier oder an anderer Stelle von amidierten Pektinen die Rede ist, dann sind damit Pektine gemeint, bei denen an Stelle der Estergruppen einige Galakturonsäure-Einheiten Amid-Gruppe aufweisen.

Wenn hier oder an anderer Stelle von Protopektin die Rede ist, dann sind damit die in Wasser unlöslichen Pektine gemeint, die in der Zellwand von Pflanzen insbesondere in Form von Calcium- und Calcium-Magnesium-Salzen vorliegen.

Bei Pektinen wird der Veresterungsgrad regelmäßig mit $VE^0$ und der Amidierungsgrad regelmäßig mit A° gekennzeichnet.

Unter einem "Halberzeugnis" ist im Rahmen der Anmeldung ein Halbfabrikat im Bereich der Lebensmittelindustrie zu verstehen, das noch im Fertigungsprozess steht und das weitere Arbeitsgänge bis zur Fertigstellung durchlaufen muss.

Der Begriff "niederkalorisch" gemäß der vorliegenden Erfindung ist als "kalorienreduziert" aufzufassen und bezeichnet eine Nahrungsmittelprodukt, das mindestens 30 Prozent weniger Kalorien enthält als herkömmliche Produkte. Die Kalorien werden hauptsächlich durch den Ersatz von Zucker und Fett eingespart. Das Nahrungsmittelprodukt kann hierbei weniger als 200 kcal (838 kJ), bevorzugt weniger als 150 kcal (628 kJ) und weiterhin bevorzugt weniger als 100kcal (419 kJ), jeweils bezogen auf 100 g Nahrungsmittelprodukt, enthalten.

Unter einem "Premix" sind im Rahmen der Anmeldung die vermischten, pasteurisierten homogenisierten und gereiften Komponenten gemeint. Unter der Viskosität des Premixes ist somit die Viskosität der vermischten, pasteurisierten homogenisierten und gereiften Komponenten unmittelbar vor dem Ausfrieren gemeint.

Mit dem Begriff "Frucht" ist im Zusammenhang mit der vorliegenden Erfindung die Gesamtheit der Organe einer Pflanze gemeint, die aus einer Blüte hervorgehen, wobei sowohl die klassischen Obstfrüchte als auch Fruchtgemüse enthalten sind. Der Begriff "Frucht" in Alleinstellung umfasst auch Mischungen von Früchten zweier oder mehrerer unterschiedlicher Pflanzen, wie z. B. Apfelbaum und Kirschbaum, also Pflanzenarten, und/oder Mischungen zweier oder mehrerer unterschiedlicher Sorten einer Frucht, beispielsweise zweier oder mehrerer Erdbeersorten, wie z. B. Donna®, Daroyal®, Lambada® und Symphony®. Analoges gilt für Ausdrücke, welche den Begriff "Frucht" umfassen, wie z. B. "fruchthaltig" und "Fruchtzubereitung".

Mit dem Begriff "destabilisiertes Fett" ist im Zusammenhang mit der vorliegenden Erfindung die Bestimmungsmethode zur Beurteilung partieller Koaleszenz der Emulsion, welches vorzugsweise durch Scherung im Prozessschrittes des Ausfrierens geschieht, gemeint und zur Stabilisierung der injizierten Luftblasen dient.

Nachfolgend wird die Erfindung anhand von Ausführungsbeispielen weiter verdeutlicht. Die Beispiele haben rein beispielhaften Charakter und stellen keine Einschränkung der Erfindung dar.

## Ausführungsbeispiele

### 1. Testmethoden

#### 1.1 Herstellung einer 2,5 Gew.%igen Faserdispersion

Rezeptur:

- 2,50 g Faserstoffe
- 97,5 g demineralisiertes Wasser (Raumtemperatur)

Einstreudauer: 15 Sekunden

In einem 250 ml Becherglas wird 97,5 g demineralisiertes Wasser (Raumtemperatur) vorgelegt. 2,5 g Faserstoff wird bei laufendem Rührwerk (Ultra Turrax) bei 8000 U/min (Stufe 1) langsam direkt in den Rührsog eingestreut. Die Einstreudauer richtet sich nach der Menge an Fasern, sie soll pro 2,5 g Probe 15 Sekunden dauern. Dann wird die Dispersion genau 60 Sekunden bei 8000 U/Min. (Stufe 1) gerührt. Soll die Probe zur Bestimmung der Viskosität bzw. zur Bestimmung der Fließgrenze I (Rotation), der Fließgrenze I (Cross Over) oder zur Bestimmung der dynamischen Weissenbergzahl verwendet werden, wird sie in ein temperiertes Wasserbad bei 20°C gestellt.

Zur Messung der Viskosität bzw. zur Messung der Fließgrenze I (Rotation), der Fließgrenze I (Cross Over) oder zur Messung der dynamischen Weissenbergzahl wird die Probe nach genau einer Stunde vorsichtig in das Messsystem des Rheometers gefüllt und die jeweilige Messung gestartet. Falls sich die Probe absetzt, wird sie unmittelbar vor dem Abfüllen mit Hilfe eines Löffels vorsichtig aufgerührt.

1.2 Herstellung einer 2,5 Gew.%igen Fasersuspension

Rezeptur:

- 2,50 g Faserstoffe
- 97,5 g demineralisiertes Wasser (Raumtemperatur)

In einem 250 ml Becherglas wird 97,5 g demineralisiertes Wasser (Raumtemperatur) vorgelegt. 2,5 g Faserstoff wird unter ständigem Rühren mit einem Kunststofflöffel langsam eingestreut. Dann wird die Suspension so lange gerührt bis alle Fasern mit Wasser benetzt sind. Soll die Probe zur Bestimmung der Viskosität bzw. zur Bestimmung der Fließgrenze II (Rotation), der Fließgrenze II (Cross Over) oder zur Bestimmung der dynamischen Weissenbergzahl verwendet werden, wird sie in ein temperiertes Wasserbad bei 20°C gestellt.
Zur Messung der Viskosität bzw. zur Messung der Fließgrenze II (Rotation), der Fließgrenze II (Cross Over) oder zur Messung der dynamischen Weissenbergzahl wird die Probe nach genau einer Stunde vorsichtig in das Messsystem des Rheometers gefüllt und die jeweilige Messung gestartet. Falls sich die Probe absetzt, wird sie unmittelbar vor dem Abfüllen mit Hilfe eines Löffels vorsichtig aufgerührt.

1.3 Bestimmung der Fließgrenze (Rotationsmessung)

Diese Fließgrenze macht eine Aussage über die Strukturstärke und wird im Rotationsversuch bestimmt, indem die Schubspannung, die auf die Probe wirkt, über die Zeit so lange erhöht wird, bis die Probe anfängt zu fließen.
Schubspannungen, die unterhalb der Fließgrenze liegen, verursachen lediglich eine elastische Deformation, die erst bei Schubspannungen oberhalb der Fließgrenze in ein Fließen mündet. Bei dieser Bestimmung wird dieses messtechnisch durch das Überschreiten einer festgelegten Mindest-Schergeschwindigkeit $\dot{\gamma}$ erfasst. Gemäß der vorliegenden Methode ist die Fließgrenze $\tau_o$ [Pa] bei der Schergeschwindigkeit $\dot{\gamma} \geq 0.1$ s$^{-1}$ überschritten.

| | |
|---|---|
| Messgerät: | Rheometer Physica MCR-Serie (z.B. MCR 301, MCR 101) |
| Messsystem: | Z3 DIN bzw. CC25 |
| Messbecher: | CC 27 P06 (geriffelter Messbecher) |
| Messtemperatur: | 20 °C |

Messparameter:
1. Abschnitt (Ruhephase):

| Abschnittseinstellungen: | - Vorgabegröße: | Schubspannung [Pa] |
|---|---|---|
| | - Profil | konstant |
| | - Wert: | 0 Pa |
| | - Abschnittsdauer: | 180 s |
| | - Temperatur: | 20 °C |

2. (Bestimmung der Fließgrenze):

| Abschnittseinstellungen: | - Vorgabegröße: | Schubspannung [Pa] |
|---|---|---|
| | - Profil: | Rampe log. |
| | - Startwert: | 0,1 Pa |
| | - Endwert: | 80 Pa |
| | - Abschnittsdauer: | 180 s |
| | - Temperatur: | 20 °C |

3. Abschnitt (Bestimmung der Viskosität):

| Abschnittseinstellungen: | - Vorgabegröße: | Scherrate [s$^{-1}$] |
|---|---|---|
| | - Profil: | Rampe lin. |
| - Startwert: | 0 s$^{-1}$ | |

(fortgesetzt)

| | |
|---|---|
| - Endwert: | 120 s$^{-1}$ |
| - Abschnittsdauer: | 120 s |
| -Temperatur: | 20 °C |

Auswertung:

Die Fließgrenze $\tau_0$ (Einheit [Pa] wird in Abschnitt 2 abgelesen und ist die Schubspannung (Einheit: [Pa]), bei der die Schergeschwindigkeit zum letzten Mal $\dot{\gamma} \leq 0{,}10$ s$^{-1}$ beträgt.

Die mit der Rotationsmethode gemessene Fließgrenze wird auch als "Fließgrenze Rotation" bezeichnet.

Die Fließgrenze Rotation wurde anhand einer Fasersuspension (einfaches Einrühren der Faser mit einem Löffel = entspricht einer nicht aktivierten Faser) gemessen und wird im Rahmen der Erfindung auch als "Fließgrenze Rotation II" bezeichnet. Die Fließgrenze wurde zudem anhand einer Faserdispersion (eingerührt unter Einwirkung hoher Scherkräfte; z.B. mit Ultra Turrax = entspricht einer aktivierten Faser) gemessen und wird im Rahmen der Erfindung auch als "Fließgrenze Rotation I" bezeichnet.

1.4 Bestimmung der Fließgrenze (Oszillationsmessung)

Messprinzip:

Diese Fließgrenze macht ebenfalls eine Aussage über die Strukturstärke und wird im Oszillationsversuch bestimmt, indem die Amplitude bei konstanter Frequenz so lange erhöht wird, bis die Probe durch die immer größer werdende Auslenkung zerstört wird und dann anfängt zu fließen.

Dabei verhält sich die Substanz unterhalb der Fließgrenze wie ein elastischer Festkörper, das heißt, die elastischen Anteile (G') liegen über den viskosen Anteilen (G"), während bei Überschreiten der Fließgrenze die viskosen Anteile der Probe ansteigen und die elastischen Anteile abnehmen.

Per Definition ist die Fließgrenze bei der Amplitude überschritten, wenn gleich viele viskose wie elastische Anteile vorliegen G' = G" (Cross Over), die zugehörige Schubspannung ist der entsprechende Messwert.

| | |
|---|---|
| Messgerät: | Rheometer Physica MCR-Serie (z.B. MCR 301, MCR 101) |
| Messsystem: | Z3 DIN bzw. CC25 |
| Messbecher: | CC 27 P06 (geriffelter Messbecher) |

Messparameter:

| | | |
|---|---|---|
| Abschnittseinstellungen: | - Amplitudenvorgaben: | Deformation [%] |
| | - Profil: | Rampe log. |
| | - Wert: | 0,01 - 1000% |
| | - Frequenz | 1,0 Hz |
| | - Temperatur: | 20 °C |

Auswertung:

Mit Hilfe der Rheometersoftware Rheoplus wird die Schubspannung am Cross-Over nach Überschreiten des linear-viskoelastischen Bereiches (d.h. G' = G") ausgewertet.

Die mit der Oszillationsmethode gemessene Fließgrenze wird auch als "Fließgrenze Cross Over" bezeichnet.

Die Fließgrenze Cross Over wurde anhand einer Fasersuspension (einfaches Einrühren der Faser mit einem Löffel = entspricht einer nicht aktivierten Faser) gemessen und wird im Rahmen der Erfindung auch als "Fließgrenze Cross Over II" bezeichnet. Die Fließgrenze wurde zudem anhand einer Faserdispersion (eingerührt unter Einwirkung hoher Scherkräfte; z.B. mit Ultra Turrax = entspricht einer aktivierten Faser) gemessen und wird im Rahmen der Erfindung auch als "Fließgrenze Cross Over I" bezeichnet.

Messergebnisse und ihre Bedeutung:

Betrachtet man die Fließgrenze für die Suspensionen der erfindungsgemäßen Fasern eingerührt mit dem Löffel (entsprechend einer nicht aktivierten Faser) mit der erfindungsgemäßen Faserdispersion eingerührt mit hohen Scherkräften z.B. Ultra Turrax (entsprechend einer aktivierten Faser), kann man eine Aussage über die Vorteilhaftigkeit/Notwendigkeit einer Aktivierung treffen. Die Messergebnisse sind in der folgenden Tabelle zusammengefasst. Erwartungsgemäß steigt die Fließgrenze jeweils durch die Scher-Aktivierung in der Dispersion an. Es ist für die Fasern jeweils angegeben, wann eine Aktivierung notwendig ist.

| Faser | Rotation | | Cross Over | | Aktivierung |
|---|---|---|---|---|---|
| | $\tau_o$ II [Pa] Suspension | $\tau_o$ I [Pa] Dispersion | $\tau_o$ II [Pa] Suspension | $\tau_o$ I [Pa] Dispersion | |
| Aktivierte pektinhaltige Citrusfaser | 2,3 | 6,9 | 1,8 | 7,2 | nicht unbedingt erforderlich |
| Partiell-aktivierte, aktivierbare pektinhaltige Citrusfaser | 0,8 | 3,0 | 0,6 | 3,4 | erforderlich |
| Aktivierte pektinhaltige Apfelfaser | 0,1 | 6,7 | 0,2 | 6,5 | erforderlich |

1.5 Bestimmung der dynamischen Weissenbergzahl

Die dynamische Weissenbergzahl W' (Windhab E, Maier T, Lebensmitteltechnik 1990, 44: 185f) ist eine abgeleitete Größe, bei der die im Oszillationsversuch im linear-viskoelastischen Bereich ermittelten elastischen Anteile (G') mit den viskosen Anteilen (G") ins Verhältnis gesetzt werden:

$$W' = \frac{G'(\omega)}{G''(\omega)} = \frac{1}{\tan \delta}$$

Mit der dynamischen Weissenbergzahl erhält man eine Größe, die besonders gut mit der sensorischen Wahrnehmung der Konsistenz korreliert und relativ unabhängig von der absoluten Festigkeit der Probe betrachtet werden kann.
Ein hoher Wert für W bedeutet, dass die Fasern eine überwiegend elastische Struktur aufgebaut haben, während ein tiefer Wert für W' auf Strukturen mit deutlich viskosen Anteilen spricht. Die für Fasern typische cremige Textur wird erreicht, wenn die W Werte im Bereich von ca. 6 - 8 liegen, bei tieferen Werten wird die Probe als wässrig (weniger stark angedickt) beurteilt.

Material und Methoden:

| | |
|---|---|
| Messgerät: | Rheometer Physica MCR-Serie, z.B. MCR 301, MCR 101 |
| Messsystem: | Z3 DIN bzw. CC25 |
| Messbecher: | CC 27 P06 (geriffelter Messbecher) |

Messparameter:

| Abschnittseinstellungen: | - Amplitudenvorgaben: | Deformation [%] |
|---|---|---|
| | - Profil: | Rampe log |
| | - Wert: | 0,01 - 1000 % |
| | - Frequenz: | 1,0 Hz |

(fortgesetzt)

| | |
|---|---|
| - Temperatur: | 20 °C |

Auswertung:

Der Phasenverschiebungswinkel δ wird im linear-viskoelastischen Bereich abgelesen. Die dynamische Weissenbergzahl W wird anschließend mit folgender Formel berechnet:

$$W' = \frac{1}{tan\ \delta}$$

Messergebnisse und ihre Bedeutung:

Betrachtet man die dynamische Weissenbergzahl W' für die Suspension einer erfindungsgemäßen Faser eingerührt mit dem Löffel (entsprechend einer nicht aktivierten Faser) mit der erfindungsgemäßen Faserdispersion eingerührt mit hohen Scherkräften z.B. Ultra Turrax (entsprechend einer aktivierten Faser), kann man eine Aussage über die Textur und darüber hinaus über die Notwendigkeit einer Aktivierung treffen. Die Messergebnisse sind in der folgenden Tabelle zusammengefasst. Die Ergebnisse zur dynamischen Weissenbergzahl zeigen, dass hinsichtlich der erwünschten cremigen Textur je nach Aktivierungszustand eine Aktivierung der Faser erforderlich ist.

| Faser | W' Suspension | W' Dispersion | Textur |
|---|---|---|---|
| Aktivierte pektinhaltige Citrusfaser | 8,1 | 7,3 | mit und ohne Aktivierung cremig, Viskosität/ Fließgrenze wird über die Dosierung reguliert |
| Partiell-aktivierte, aktivierbare pektinhaltige Citrusfaser | 7,2 | 7,5 | mit und ohne Aktivierung cremig, Viskosität/ Fließgrenze wird über die Dosierung reguliert |
| Aktivierte pektinhaltige Apfelfaser | 5,0 | 9,2 | Nur nach Aktivierung cremig, Viskosität/ Fließgrenze wird über die Dosierung reguliert |

1.6 Bestimmung des Wasserbindevermögens

Man lässt die Probe mit einem Wasserüberschuss 24 Stunden bei Raumtemperatur quellen. Nach Zentrifugation und anschließendem Abdekantieren des Überstandes kann das Wasserbindungsvermögen in g $H_2O$ / g Probe gravimetrisch bestimmt werden. Der pH- Wert in der Suspension ist zu messen und zu dokumentieren.

Folgende Parameter sind einzuhalten:

Probeeinwaage:

| | |
|---|---|
| - Pflanzenfaser: | 1,0 g (in Zentrifugenglas) |
| - Wasserzugabe: | 60 ml |
| - Zentrifugation: | 4000 g |
| - Zentrifugierdauer: | 10 min |

20 Minuten nach Zentrifugierbeginn (bzw. 10 Minuten nach Zentrifugierende) trennt man den Wasserüberstand von der gequollenen Probe ab. Die Probe mit dem gebundenen Wasser wird ausgewogen.

Das Wasserbindungsvermögen (WBV) in g $H_2O$ / g Probe kann nun nach folgender Formel berechnet werden:

$$WBV\ (g\ H_2O/g\ Probe) = \frac{Probe\ mit\ gebundenem\ Wasser\ (g) - 1,0\ g}{1,0\ g}$$

1.7 Bestimmung der Festigkeit

Durchführung:

150 ml destilliertes Wasser werden in einem Becherglas vorgelegt. Dann rührt man mit einem Löffel 6,0 g Citrusfasern bzw. 9,0 g Apfelfasern klumpenfrei in das Wasser ein. Zum Ausquellen lässt man dieses Faser-Wasser-Gemisch 20 min stehen. Man überführt die Suspension in ein Gefäß (Ø 90 mm). Anschließend wird die Festigkeit mit der folgenden Methode gemessen.

| | |
|---|---|
| Messgerät: | Texture Analyser TA-XT 2 (Fa. Stable Micro Systems, Godalming, UK) |
| Parameter: | - Test-Geschwindigkeit: 1,0 mm/s |
| | - Weg: 15,0 mm/s |
| Messwerkzeuge: | - P/50 |

Die Festigkeit entspricht der Kraft, die der Messkörper braucht, um 10 mm in die Suspension einzudringen. Diese Kraft wird aus dem Kraft-Zeit-Diagramm abgelesen. Es ist zu erwähnen, dass sich aus der Histone der Festigkeitsmessung die Einheit der gemessenen Festigkeit in Gramm (g) manifestiert hat.

1.8 Bestimmung der Korngröße

In einer Siebmaschine ist ein Satz von Sieben, deren Maschenweite vom unteren Sieb zum oberen stets ansteigt, übereinander angeordnet. Die Probe wird auf das oberste Sieb, also das Sieb mit der größten Maschenweite gegeben. Die Probeteilchen mit größerem Durchmesser als die Maschenweite bleiben auf dem Sieb zurück; die feineren Teilchen fallen auf das nächste Sieb durch. Der Anteil der Probe auf den verschiedenen Sieben wird ausgewogen und in Prozent angegeben.

Durchführung:

Die Probe wird auf zwei Stellen nach dem Komma genau eingewogen. Die Siebe werden mit Siebhilfen versehen und mit steigender Maschenweite übereinander aufgebaut. Die Probe wird auf das oberste Sieb quantitativ überführt, die Siebe werden eingespannt und nach definierten Parametern verläuft der Siebprozess. Die einzelnen Siebe werden mit Probe und Siebhilfe sowie leer mit Siebhilfe gewogen. Soll bei einem Produkt nur ein Grenzwert im Korngrößenspektrum überprüft werden (z. B. 90 % < 250 $\mu$m), dann wird nur ein Sieb mit der entsprechenden Maschenweite verwendet.

Messvorgaben:

| | |
|---|---|
| Probemenge: | 15 g |
| Siebhilfen: | 2 pro Siebboden |
| Siebmaschine: | AS 200 digit, Fa. Retsch GmbH |
| Siebbewegung: | dreidimensional |
| Schwingungshöhe: | 1,5 mm |
| Siebdauer: | 15 min |

Der Siebaufbau besteht aus den folgenden Maschenweite in $\mu$m: 1400, 1180, 1000, 710, 500, 355, 250 gefolgt vom Boden.
Die Berechnung der Korngröße erfolgt anhand folgender Formel:

$$Antei\ pro\ Sieb\ in\ \% = \frac{Auswaage\ in\ g\ auf\ dem\ Sieb\ x\ 100}{Probeeinwaage\ in\ g}$$

1.9 Bestimmung der Viskosität

| | |
|---|---|
| Messgerät: | Physica MCR-Serie (z.B. MCR 301, MCR 101) |
| Messsystem: | Z3 DIN bzw. CC25 |
| | (Anmerkung: Die Messsysteme Z3 DIN und CC25 sind identische Messsysteme) |
| Anzahl Abschnitte: | 4 |

Die Probe wird vor der Messung mindestens für 15 Minuten bei 20 °C im Wasserbad temperiert.

Messparameter:

1. Abschnitt:

| | | |
|---|---|---|
| Abschnittseinstellungen: | - Vorgabegröße: | Schergeschwindigkeit [s$^{-1}$] |
| | - Profil: | konstant |
| | - Wert: | 0 s$^{-1}$ |
| | - Abschnittsdauer: | 60 s |
| | - Temperatur: | 20 °C |

2. Abschnitt:

| | | |
|---|---|---|
| Abschnittseinstellungen: | - Vorgabegröße: | Schergeschwindigkeit [s$^{-1}$] |
| | - Profil: | Rampe linear |
| | - Wert: | 0,1 -100 s$^{-1}$ |
| | - Abschnittsdauer: | 120 s |
| | - Temperatur: | 20 °C |

3. Abschnitt:

| | | |
|---|---|---|
| Abschnittseinstellungen: | - Vorgabegröße: | Schergeschwindigkeit [s$^{-1}$] |
| | - Profil: | konstant |
| | - Wert: | 100 s$^{-1}$ |
| | - Abschnittsdauer: | 10 s |
| | - Temperatur: | 20 °C |

4. Abschnitt:

| | | |
|---|---|---|
| Abschnittseinstellungen: | - Vorgabegröße: | Schergeschwindigkeit [s$^{-1}$] |
| | - Profil: | Rampe linear |
| | - Wert: | 100 - 0,1 s$^{-1}$ |
| | - Abschnittsdauer: | 120 s |
| | - Temperatur: | 20 °C |

Auswertung:

Die Viskosität (Einheit [mPas]) wird wie folgt abgelesen: 4. Abschnitt bei = 50 s$^{-1}$

1.10 Bestimmung des Veresterungsgrads

Diese Methode entspricht der JECFA (Joint FAO/WHO Expert Commitee on Food Additives) veröffentlichten Methode. Abweichend von der JECFA-Methode wird das entaschte Pektin nicht im Kalten gelöst, sondern erhitzt. Als Alkohol wird Isopropanol anstelle von Ethanol verwendet.

1.11 Bestimmung der Calciumreaktivität

Materialien:

- 230,0 g Pufferlösung pH 3,2
- 130 g Zucker (Saccharose
- 5,05 g Gelierkonzentrat
- 10 ml Calciumchloridlösung 5%ig (m/v)

| | |
|---|---|
| Einwaage: | 375,0 g |
| Auswaage: | 335,0 g |
| pH-Wert: | ca. 3,0 |
| Trockensubstanzgehalt: | ca. 41 % |

- Herstellung Gelierkonzentrat:

| | |
|---|---|
| entspricht in 5,05 g: | 3,00 g Pektin |
| | 2.05 g Puffermischung |
| | 5,05 g Gelierkonzentrat |

| • Zusammensetzung Puffermischung: | |
|---|---|
| | 1,585 g Citronensäure-Anhydrat (77,3 %) |
| | 0,270 g Trikaliumcitrat-Monohydrat, fein (13,2 %) |
| | 0.195 g Kaliumsorbat (9.5 %) |
| | 2,05 g Puffermischung |

| • Herstellung Pufferlösung pH 3,2: | |
|---|---|
| | 50,0 g Citronensäure-Anhydrat |
| | 2,8 g Calciumchlorid-Dihydrat |
| | 4,8 l demineralisiertes Wasser |

- In einem 5 l Messkolben Citronensäure und Calciumchlorid-Dihydrat in dem. Wasser lösen;
- Lösung mit Natriumacetat wasserfrei auf pH 3,2 einstellen; das Natriumacetat wird in fester Form zugegeben; es werden 14 bis 15 g Natriumacetat benötigt;
- nach dem Temperieren im Wasserbad bei 20 °C bis zur Marke auffüllen.

Messmethode:

Pufferlösung in einem Edelstahltopf vorlegen.
Gelierkonzentrat mit einem Teil der Gesamtzuckermenge homogen in Mischflasche oder Glasschale vermischen.
Mischung B in die Pufferlösung einrühren, zum Kochen bringen und unter Rühren so lange erhitzen, bis das Pektin vollständig gelöst ist.
Restzuckermenge portionsweise zugeben.
Auf ca. 340 g auskochen, 10 ml Calciumchloridlösung unter Rühren zudosieren und auf Auswaage auskochen.
Für die Bruchfestigkeitsbestimmung werden je 100 +/- 1 g der Kochung rasch in drei Prüfbecher mit eingesetzter Zerreißfigur eingewogen und im Wasserbad auf 20 °C temperiert.

Nach genau 2 Stunden wird die Bruchfestigkeit mit dem Pektinometer Mark III (Fa. Herbstreith & Fox, Neuenbürg, BRD) gemessen. Das Ergebnis ist der Mittelwert der drei Einzelwerte.

1.11 Bestimmung der Calciumempfindlichkeit

Materialien:

- 320,0 g 0,65 M Kaliumacetat-Milchsäure-Pufferlösung (52,50 g Kaliumacetat; 271,25 g Milchsäure mit demineralisiertem Wasser auf 5 Liter auffüllen)
- 60,0 g Zucker (Saccharose)
- 3,12 g Pektin (entspricht 0,82 % im Endprodukt)
- 16,0 ml Calciumchloridlösung 5%ig (m/v)

| Einwaage: | ca. 399 g |
|---|---|
| Auswaage: | 380 g |
| Abfülltemperatur: | ca. 90° C |
| pH-Wert: | ca. 3,0 |
| Trockensubstanzgehalt: | ca. 22 % TS |

Messmethode:

- Pektin und die gesamte Zuckermenge homogen in Glasschale mischen.
- Elektroheizplatte auf höchster Stufe mindestens 10 Minuten vorheizen.
- Pufferlösung in einem Edelstahltopf vorlegen.
- Pektin-Zucker-Mischung unter Rühren in die Pufferlösung einstreuen, zum Kochen bringen und unter Rühren solange erhitzen, bis das Pektin vollständig gelöst ist.
- Calciumchloridlösung dosieren und auf Auswaage auskochen.
- Bei einer Temperatur von ca. 90 °C werden 90 g der Kochung rasch in drei Lüers-Becher mit eingesetzter Zerreißfigur eingewogen und im Wasserbad auf 20 °C temperiert.
- Becher unter Vermeidung von Erschütterungen in ein Wasserbad stellen.
- Nach genau 2 h wird die Bruchfestigkeit mit dem Pektinometer Mark III (Herbstreith & Fox GmbH & Co. KG Pektin-Fabriken, Neuenbürg, Deutschland) gemessen. Das Ergebnis ist der Mittelwert der drei Einzelwerte.

1.12 Bestimmung der Gelierkraft

Die Gelierkraft kann mittels der Standardprozedur für die Grad-Bewertung des Pektins in einem Gel mit 65 % Trockensubstanz festgestellt werden. Sie entspricht der Methode 5-54 des IFT-Komitees für Pektinstandardisierung (IFT Committee on Pectin Standardisation, Food Technology, 1959, 13: 496-500).

1.13 Bestimmung des Ballaststoffgehalts

Die Bestimmung des Ballaststoffgehalts erfolgt mittels der von der AOAC veröffentlichten Methode (Official Method 991.43: Total, Soluble and Insoluble Dietary Fiber in Foods; Enzymatic-Gravimetric Method, MES-TRIS Buffer, First Action 1991, Final Action 1994.). Vorzugsweise wird mit Isopropylalkohol anstatt mit Ethanol gearbeitet.

1.14 Bestimmung der Feuchtigkeit und der Trockenmasse

Prinzip:

Unter dem Feuchtigkeitsgehalt der Probe wird die nach definierten Bedingungen ermittelte Massenabnahme nach der Trocknung verstanden. Es wird der Feuchtigkeitsgehalt der Probe mittels Infrarot-Trocknung mit dem Feuchtebestimmer Sartorius MA-45 (Fa. Sartorius, Göttingen, BRD) bestimmt.

Durchführung:

Es werden ca. 2,5 g der Faserprobe auf den Sartorius Feuchtebestimmer eingewogen. Die Einstellungen des Gerätes sind den entsprechenden werkseitigen Messvorschriften zu entnehmen. Die Proben sollen zur Bestimmung etwa Raumtemperatur haben. Der Feuchtigkeitsgehalt wird vom Gerät automatisch in Prozent [% M] angegeben. Die Trockenmasse wird vom Gerät automatisch in Prozent [% S] angegeben.

1.15 Bestimmung der Farbe und Helligkeit

Prinzip:

Die Farb- und Helligkeitsmessungen werden mit dem Minolta Chromameter CR 300 bzw. CR 400 durchgeführt. Die Bestimmung der spektralen Eigenschaften einer Probe erfolgt anhand von Normfarbwerten. Die Farbe einer Probe wird mit dem Farbton, der Helligkeit und der Sättigung beschrieben. Mit diesen drei Basiseigenschaften lässt sich die Farbe dreidimensional darstellen:
Die Farbtöne liegen auf dem Außenmantel des Farbkörpers, die Helligkeit verändert sich auf der senkrechten Achse und der Sättigungsgrad verläuft horizontal. Bei Verwendung des L"a"b"-Messsystems (sprich L-Stern, a-Stern, b-Stern) steht L* für die Helligkeit, während a" und b" sowohl den Farbton als auch die Sättigung angeben, a" und b" nennen die Positionen auf zwei Farbachsen, wobei a" der Rot-Grün-Achse und b" der Blau-Gelb-Achse zugeordnet ist. Für die Farbmessanzeigen wandelt das Gerät die Normfarbwerte in L"a"b"- Koordinaten um.

Durchführung der Messung:

Die Probe wird auf ein weißes Blatt Papier gestreut und mit einem Glasstopfen geebnet. Zur Messung wird der Messkopf des Chromameters direkt auf sie Probe gesetzt und der Auslöser betätigt. Von jeder Probe wird eine Dreifachmessung durchgeführt und der Mittelwert berechnet. Die L*-, a"-, b"-Werte werden vom Gerät mit zwei Stellen nach dem Komma angegeben.

1.16 Bestimmung des Anteils an destabilisiertem Fett

Equipment:

Zentrifuge: Heraeus Multifuge 3SR+ von Thermo SCIENTIFIC

Photometer: DR6000 UV-VIS Spektralphotometer mit RFID-Technologie

Durchführung:

1. Probenentnahme:

- Probe 1: Premix- kurz vor dem Ausfrieren
- Probe 2: Gefrorener Eismix

Berechnung:

$$DSF\ [\%] = \frac{(a_{Premix} - a_{Eis})}{a_{Premix}} * 100\%$$

Mit:

DSF: Anteil an destabilisiertem Fett

$a_{Premix}$: Extinktion vom Premix

$a_{Eis}$: Extinktion vom Eismix

In einem 125 ml Becherglas werden 0,2 g der jeweiligen Probe eingewogen, mit dem. Wasser (Raumtemperatur) auf insgesamt 100 g aufgefüllt (Verdünnung 1:500) und mit einem Glasstab verrührt. Von der jeweiligen Verdünnung werden 20 g in ein 25 ml Glasröhrchen gefüllt und bei einer Temperatur von 30° C bei 160G für 5 Minuten zentrifugiert. Unter Verwendung einer variablen Eppendorf Pipette werden 10 ml Unterstand der zentrifugierten Proben entnommen und in eine Photometrieküvette pipettiert. Der Extinktionswert beider Proben wird gegen die Vergleichsprobe Wasser bei 540 nm bestimmt. Der Anteil an destabilisiertem Fett kann unter der oben angegebenen Formel rechnerisch bestimmt werden.

1.17 Testmethode zur Bestimmung des wasserlöslichen Pektins in faserhaltigen Proben

Prinzip:

Durch eine wässrige Extraktion wird das in faserhaltigen Proben enthaltene Pektin in die flüssige Phase übergeführt. Durch Zugabe von Alkohol wird das Pektin als alkoholunlösliche Substanz (AIS, alcohol insoluble substance) aus dem Extrakt ausgefällt.

Extraktion:

10,0 g der zu untersuchenden Probe werden in eine Glasschale eingewogen. 390 g kochendes dest. Wasser werden in einem Becherglas vorgelegt und die vorher abgewogene Probe wird mittels Ultra-Turrax 1 min auf höchster Stufe eingerührt.

Die auf Raumtemperatur abgekühlte Probensuspension wird auf vier 150 ml Zentrifugenbecher aufgeteilt und 10 min bei 4000 x g zentrifugiert. Der Überstand wird gesammelt. Das Sediment eines jeden Bechers wird mit 50 g destilliertem Wasser resuspendiert und erneut für 10 min bei 4000 x g zentrifugiert. Der Überstand wird gesammelt, das Sediment wird verworfen.

Die vereinigten Zentrifugale werden in ca. 4 l Isopropanol (98 %) zur Ausfällung der alkoholunlöslichen Substanz (AIS) gegeben. Nach ½ Stunde filtriert man überein Filtertuch und presst die AIS manuell ab. Im Filtertuch wird dann die AIS in ca. 3 l Isopropanol (98 %) gegeben und von Hand unter Verwendung von Handschuhen aufgelockert.

Der Abpressvorgang wird wiederholt, die AIS quantitativ vom Filtertuch genommen, aufgelockert und bei 60 °C 1 Stunde im Trockenschrank getrocknet.

Die abgepresste, getrocknete Substanz wird zur Berechnung der alkoholunlöslichen Substanz (AIS) auf 0,1 g ausgewogen.

Berechnung:

Die Berechnung des wasserlöslichen Pektins bezogen auf die faserhaltige Probe erfolgt anhand der folgenden Formel, wobei das wasserlösliche Pektin als alkoholunlösliche Substanz (AIS) anfällt:

$$AIS\ in\ der\ Probe\ in\ Gew.\%\ \left(\frac{g}{100g}\right) = \frac{getrocknete\ AIS\ [g]\ x\ 100}{Probeneinwaage\ in\ g}$$

**2.** Vergleichsversuche

Als Pflanzenfaser wurde in den nachfolgenden Beispielen die Citrusfaser Herbacel® AQ® Plus Citrus-N von Herbafood eingesetzt. Als niederverestertes, amidiertes lösliches Pektin wurde ein Citruspektin Pektin Amid CF 005-B Lot. 1 17 11 802 von Herbstreith & Fox eingesetzt. Als hochverestertes lösliches Pektin wurde ein Citruspektin Pektin Classic CJ 201 Lot. 1 17 04 260 von Herbstreith & Fox eingesetzt.

2.1 Lagerstabilität

Die Lagerstabilität wurde durch das Bestimmen der Eiskristallwachstumsrate in $\mu$m/min bei -12 °C und durch das Bestimmen der Reduktion der Eiskristallanzahl in % bei -12 °C analysiert.

Die erfindungsgemäße Zusammensetzung Z1 und die Vergleichszusammensetzung VZ1 wurden mittels einfachem Vermischen der Komponenten zubereitet. Die im Folgenden dargestellten Zusammensetzungen Z1 und Rezepturen R1 und R2 sind in ihren Anteilen auf eine zuckerfreie Zusammensetzung (d.h. auf eine Zusammensetzung mit nichtstandardisierten Pektinen) bezogen.

Erfindungsgemäße Zusammensetzung Z1

| Bestandteil | Anteil in Gewichtsprozent bezogen auf Gesamtzusammensetzung |
|---|---|
| Citrusfaser (Herbacel® AQ® Plus Citrus-N) | 50 |
| Niederverestertes, amidiertes lösliches Pektin (Citruspektin; $VE^0$ 37,4%, A° = 11,3%) | 27 |
| Hochverestertes lösliches Pektin (Citruspektin; $VE^0$ 68,6%) | 23 |

Vergleichszusammensetzung **VZ1**

| Bestandteil | Anteil in Gewichtsprozent bezogen auf Gesamtzusammensetzung |
|---|---|
| Johannisbrotkernmehl | 50 |
| Guarkernmehl | 50 |

Rezepturen RZ1 und VRZ1 zur mikroskopischen Untersuchung der Lagerstabilität

| Bestandteile | Erfindungsgemäße Rezeptur **RZ1**; Angaben in Gew.% | Vergleichsrezeptur **VRZ1**; Angaben in Gew.% |
|---|---|---|
| Zusammensetzung Z1 | 0,2 | - |
| Vergleichszusammensetzung VZ1 | - | 0,3 |
| Wasser | 73,1 | 73,1 |
| Glucose-Fructose-Sirup (DE 68) | 11,0 | 11,0 |
| Saccharose | 15,7 | 15,6 |

Die beiden Rezepturen RZ1 und VRZ1 wurden unter Verwendung von Z1 mit 0,2 Gew.% und VZ1 mit 0,3 Gew.% gemäß angegebenen Anteil mit Saccharose vorgemischt. Die ergebene Vormischung aus RZ1 und VRZ1 wurden anschließend in Wasser zusammen mit Glukose-Fruktose-Sirup suspendiert.

Der Gefrierpunkt der Rezepturen RZ1 und VRZ1 wurde durch die Kombination von Einfach- und Zweifachzuckern auf -3 °C eingestellt.

Die beiden Rezepturen RZ1 und VRZ1 wurden auf eine Temperatur von 85 °C erhitzt, bei 240 bar einstufig homogenisiert und im Anschluss auf 4 °C heruntergekühlt. Die Rezepturen RZ1 und VRZ1 wurden vor der Präparation jeweils für 24 Stunden bei einer Temperatur von 4 °C gelagert.

Auf einem Objektträger wurden zwei Deckgläser im Abstand von in etwa 1 cm mit einem Tropfen Glasklebstoff fixiert und mit einer Pipette wurden jeweils 5 μl der homogenisierten Mischungen auf den Objektträger gegeben. Dann wurde der Objektträger mit einem weiteren Deckglas abgedeckt und mit Glasklebstoff verschlossen. Die einzelnen Proben wurden im Anschluss für wenige Sekunden in Flüssigstickstoff getaucht und damit in den Glasübergangszustand überführt. Die Objektträger mit Probe wurden im Anschluss vakuumiert und bei -22 °C für mindestens 48 Stunden zur Überführung vom Glaszustand in den kristallinen Zustand gelagert. Bei einer konstanten Temperatur von -12 °C wurde anschließend das Rekristallisationsverhalten mittels Lichtmikroskopie untersucht und die Anzahl der Eiskristalle im Zeitverlauf bei der konstanten Temperatur von -12 °C bestimmt.

Die homogenisierten Mischungen auf den Objektträgern wurden folgenden Temperaturparameter in einem Linkam Peltier-Tisch PE 120-AFM® Temperaturkontrollsystem ausgesetzt, wobei die erste Kristallzählung mittels Kamerasoftware Visicam Analyzer 5.0 nach der dritten Kühlstufe stattfand und anschließend alle 60 Minuten wiederholt wurde. Die Temperierung von Kühlstufe 1 auf 3 erfolgt mit einer Kühlrate von 5° C/ min mit einer Haltezeit von 10 min pro Kühlstufe.

Tabelle 1: Temperaturparameter für Eiskristallmessung

| Kühlstufe | Temperatur in °C | Haltezeit in min |
|-----------|------------------|------------------|
| 1 | -20 | 10 |
| 2 | -15 | 10 |
| 3 | -12 | 10 |
| 4 | -12 | 60 |
| 5 | -12 | 60 |
| 6 | -12 | 60 |
| 7 | -12 | 60 |
| 8 | -12 | 60 |

Zur Bestimmung der Eiskristallgröße wurden die Eiskristalle regelmäßig in einem bestimmten Zeitintervall mit der Kamerasoftware Visicam Analzer 5.0 vermessen. Hierbei wurden pro mikroskopische Aufnahme ca. 150 Eiskristalle vermessen und die durchschnittliche Eiskristallgröße als Durchmesser in $\mu$m bestimmt. Von der Entwicklung der Eiskristallgröße lässt sich dann die Eiskristallwachstumsrate in $\mu$m/min bestimmen.

Bei der Messung wurden die folgenden Werte für die beiden Rezepturen RZ1 und VRZ1 erhalten.

Tabelle 2: Eiskristallwachstumsrate

| | Rezeptur RZ1 enthaltend erfindungsgemäße Zusammensetzung **Z1** | Rezeptur VRZ1 enthaltend Vergleichszusammensetzung **VZ1** |
|---|---|---|
| Eiskristallwachstumsrate in $\mu$m/min | 0,06 | 0,2 |
| Premix-Viskosität in mPa*s (D=50 s$^{-1}$) | 59,1 | 59,5 |
| pH-Wert | 4,3 | 4,7 |

Für die Rezeptur enthaltend die erfindungsgemäße Zusammensetzung Z1 wurde eine Eiskristallwachstumsrate von 0,06 $\mu$m/min beobachtet, während unter den gleichen Bedingungen für eine Rezeptur enthaltend die Vergleichszusammensetzung VZ1 eine signifikant höhere Eiskristallwachstumsrate von 0,2 $\mu$m/min beobachtet wurde. Mit der erfindungsgemäßen Zusammensetzung lässt sich somit das Eiskristallwachstum merklich verlangsamen, wodurch eine bessere Lagerstabilität und eine verbesserte Textur von Speiseeis erzielt werden kann.

Als Maßstab für die Lagerstabilität kann neben der Eiskristallgröße auch die prozentuale Reduktion der Eiskristallanzahl dienen. Das hängt damit zusammen, dass die Reduktion an Eiskristallen bei einer Temperatur von -12 °C im Wesentlichen auf Ostwald-Reifung und Koaleszenz-Prozesse zurückzuführen ist, d.h. auf das Zusammendiffundieren oder Zusammenwachsen von mehreren kleineren Eiskristallen zu einer kleineren Anzahl an größeren Eiskristallen. Wird somit eine verstärkte Reduktion der Eiskristallanzahl im Kälteversuch beobachtet, so hängt dies mit einem Wachstum der Eiskristalle zusammen, wodurch die Lagerstabilität und Textur des Speiseeises negativ beeinträchtigt wird.

Tabelle 3: Reduktion der Eiskristallanzahl

| Zeit in min | Reduktion der Eiskristallanzahl in % für Rezeptur RZ1 enthaltend Zusammensetzung **Z1** | Reduktion der Eiskristallanzahl in % für Rezeptur VRZ1 enthaltend Zusammensetzung **VZ1** |
|---|---|---|
| 60 | 44 | 50 |
| 120 | 57 | 70 |

(fortgesetzt)

| Zeit in min | Reduktion der Eiskristallanzahl in % für Rezeptur RZ1 enthaltend Zusammensetzung **Z1** | Reduktion der Eiskristallanzahl in % für Rezeptur VRZ1 enthaltend Zusammensetzung **VZ1** |
|---|---|---|
| 180 | 65 | 80 |
| 240 | 71 | 90 |
| 300 | 75 | 91 |

Bei einer Temperatur von -12 °C über einen Zeitraum von 300 min wurde für die Rezeptur enthaltend die Vergleichszusammensetzung bestehend aus 50 Gew.% Johannisbrotkernmehl und 50 Gew.% Guarkernmehl eine Abnahme der Eiskristallanzahl von 91% beobachtet, während für die Rezeptur enthaltend die erfindungsgemäße Zusammensetzung bestehend aus niederverestertem, amidiertem löslichen Citruspektin, hochverestertem löslichen Citruspektin und Citrusfasern eine Abnahme der Eiskristallanzahl von 71% beobachtet wurde. Die Abnahme der Eiskristallanzahl erfolgte somit in der Vergleichszusammensetzung deutlich schneller als in der erfindungsgemäßen Zusammensetzung.

Folglich hat sich gezeigt, dass die erfindungsgemäße Zusammensetzung eine höhere Lagerstabilität bewirkt als das üblicherweise eingesetzte Speiseeis-Stabilisationssystem aus Johannisbrotkernmehl und Guarkernmehl.

2.2 Abschmelzverhalten und Formstabilität

Um das Abschmelzverhalten von Speiseeis zu charakterisieren, wurden Proben auf ein Lochgitter mit einem Lochdurchmesser von 10 mm und einem regelmäßigen Abstand der Löcher zueinander von 2 mm gestellt. Die Eisproben werden bei Raumtemperatur (23 °C) abgeschmolzen, die dabei abgeschmolzene Masse wird aufgefangen und ausgewogen. Der Schmelzvorgang wird zudem abfotografiert, um optische Veränderungen zu dokumentieren und auf diese Weise die Formstabilität zu vergleichen.

Das Abschmelzverhalten wurde an folgenden Rezepturen analysiert.

Tabelle 4: Rezepturen mit niederverestertem, amidiertem Citruspektin und 11,3 Gew.% Fett zur Untersuchung des Abschmelzverhaltens

| Bestandteile | Erfindungsgemäße Rezeptur **R1;** Angaben in Gew.% | Vergleichsrezeptur **VR1;** Angaben in Gew.% |
|---|---|---|
| Guarkernmehl | - | 0,13 |
| Johannisbrotkernmehl | - | 0,13 |
| Niederverestertes, amidiertes Citruspektin (VE°= 37,4%, A° = 11,3%) | 0,06 | - |
| Citrusfaser - Herbacel® - AQ® Plus Citrus-N (partiell-aktivierte, aktivierbare Citrusfaser) | 0,11 | - |
| Hochverestertes Citruspektin (VE°= 68,6%) | 0,05 | - |
| Wasser | 59,5 | 59,54 |
| Kokosfett | 11,3 | 11,3 |
| Glucose-Fructose-Sirup (DE 68) | 11,0 | 11,0 |
| Saccharose | 9,08 | 9,0 |
| Magermilchpulver | 8,5 | 8,5 |
| Emulgator: Mono- und Diglyceride von Speisefettsäuren | 0,4 | 0,4 |
| Premixviskosität in mPa*s (D=50 s$^{-1}$) | 125 | 143 |
| Overrun in % | 100 | 100 |
| pH-Wert | 6,5 | 6,5 |

Tabelle 5: Rezepturen mit niederverestertem Citruspektin und 11,3 Gew.% Fett zur Untersuchung des Abschmelzverhaltens

| Bestandteile | Erfindungsgemäße Rezeptur R2; Angaben in Gew.% | Vergleichsrezeptur VR2; Angaben in Gew.% |
|---|---|---|
| Guarkernmehl | - | 0,15 |
| Johannisbrotkernmehl | - | 0,15 |
| Niederverestertes, Citruspektin (VE°=38,9%) | 0,08 | - |
| Citrusfaser - Herbacel® - AQ® Plus Citrus-N (partiell-aktivierte, aktivierbare Citrusfaser) | 0,10 | - |
| Hochverestertes Citruspektin (VE°= 70,1%) | 0,04 | - |
| Wasser | 59,58 | 59,50 |
| Kokosfett | 11,3 | 11,3 |
| Glucose-Fructose-Sirup (DE 68) | 11,0 | 11,0 |
| Saccharose | 9,0 | 9,0 |
| Magermilchpulver | 8,5 | 8,5 |
| Emulgator: Mono- und Diglyceride von Speisefettsäuren | 0,4 | 0,4 |
| Premixviskosität in mPa*s (D=50 s$^{-1}$) | 249 | 264 |
| Overrun in % | 100 | 100 |
| pH-Wert | 6,5 | 6,5 |

Für die Herstellung der Rezepturen wurde zunächst 2/3 der Wassermenge mit dem Magermilchpulver unter Verwendung eines Stabmixers vermengt und für 20 min quellen gelassen. Anschließend wurde diese Mischung mit den anderen Bestandteilen der jeweiligen Rezeptur in einem Pasteurisierer Carpigiani Pastomaster 60 tronic mit einem Fassungsvolumen von 60 L, auf 85° C erhitzt wobei die Erhitzungsdauer von 30 bis 40 min liegt. Die erhitzte Rezeptur wurde bei 180/60 bar zweistufig homogenisiert und anschließend im Pasteur auf 4 °C abgekühlt. Nach Erreichen von 4° C beträgt die Reifedauer des Premixes 24 Stunden.

Das Ausfrieren der Eismasse erfolgte in einer Eismaschine mit kontinuierlichem Mixfluss von 140 L/h der Fa. Gram Equipment GIF 600, bei einem Druck von 3 bar und einem eingestellten Lufteinschlag von 100 % Overrun, wobei die Schlagewellenfrequenz 700 U/min nicht überschritten wurde. Die Austrittstemperatur der teilweise ausgefrorenen Eismasse lag bei -5 °C bis-6 °C.

Die fertigen Rezepturen wurden abgefüllt und im Schockfroster bei -40 °C ausgehärtet. Die Gefrierrate von 0,6° C/ min wurde bis zum Erreichen der Zieltemperatur von -22 °C gemessen. Die weitere Lagerung der Rezepturen erfolgte anschließend bei -22 °C.

Zur Untersuchung des Abschmelzverhalten wurden jeweils 100 ml Eismasse mit einem durchschnittlichen Gewicht von 55 g der Rezepturen R1 und VR1 auf ein Lochgitter (Lochdurchmesser von 10 mm und einem regelmäßigen Abstand der Löcher zueinander von 2 mm) gegeben. Bei konstanter Raumtemperatur von 23 °C wurde das Abtropfgewicht über die Zeit gravimetrisch bestimmt.

Tabelle 6: Ergebnisse des Abschmelzverhaltens der Rezepturen R1 und VR1; abgetropfte Eismasse in Gew.%

| Zeit in min | Erfindungsgemäße Rezeptur R1; abgetropfte Eismasse in Gew.% der ursprünglichen Eismasse | Vergleichsrezeptur VR1; abgetropfte Eismasse in Gew.% der ursprünglichen Eismasse |
|---|---|---|
| 20 | 0 | 0 |
| 40 | 0 | 4,0 |
| 60 | 0,6 | 17,0 |
| 80 | 0,9 | 27,0 |

Tabelle 7: Ergebnisse des Abschmelzverhaltens der Rezepturen R2 und VR2; abgetropfte Eismasse in Gew.%

| Zeit in min | Erfindungsgemäße Rezeptur **R2**; abgetropfte Eismasse in Gew.% der ursprünglichen Eismasse | Vergleichsrezeptur **VR2**; abgetropfte Eismasse in Gew.% der ursprünglichen Eismasse |
|---|---|---|
| 20 | 0 | 0,5 |
| 40 | 0 | 5,4 |
| 60 | 0 | 16,7 |
| 80 | 0 | 33,7 |

Es hat sich gezeigt, dass die erfindungsgemäße Rezeptur eine außergewöhnlich und überraschend hohe Formstabilität aufweist und selbst über sehr lange Zeiträume von über einer Stunde kein signifikantes Abschmelzen zu beobachten ist. Folglich kann mit der erfindungsgemäßen Zusammensetzung ein Speiseeis mit hervorragender Stabilität bei Raumtemperatur erhalten werden, dass den bisher im Stand der Technik bekannten Speiseeisrezepturen bezüglich der Formstabilität deutlich überlegen ist.

Um sicherzustellen, dass das deutlich verbesserte Abschmelzverhalten nicht auf eine veränderte Fettmorphologie zurückzuführen ist, wurde das gleiche Experiment mit einem verringerten Fettgehalt von 1,0 Gew.% statt 11,3 Gew.% wiederholt.

Tabelle 6: Rezepturen mit 1,0 Gew.% Fett zur Untersuchung des Abschmelzverhaltens

| Bestandteile | Erfindungsgemäße Rezeptur **R3**; Angaben in Gew.% | Vergleichsrezeptur **VR3**; Angaben in Gew.% |
|---|---|---|
| Guarkernmehl | - | 0,13 |
| Johannisbrotkernmehl | - | 0,13 |
| Citrusfaser - Herbacel® - AQ® Plus Citrus-N (partiell-aktivierte, aktivierbare Citrusfaser) | 0,11 | |
| Niederverestertes, amidiertes Citruspektin (VE°=37,4%, A°= 11,3) | 0,06 | - |
| Hochverestertes Citruspektin (VE°=68,6%) | 0,05 | - |
| Wasser | 62,9 | 62,94 |
| Kokosfett | 1,0 | 1,0 |
| Glucose-Fructose-Sirup (DE 68) | 11,0 | 11,0 |
| Saccharose | 11,58 | 11,5 |
| Magermilchpulver | 13,0 | 13,0 |
| Emulgator: Mono- und Diglyceride von Speisefettsäuren | 0,3 | 0,3 |
| Premixviskosität in mPa"s (D=50 s$^{-1}$) | 61,5 | 99,8 |
| Overrun in % | 100 | 100 |
| pH-Wert | 6,5 | 6,5 |

Hierbei wurde für die Herstellung der Eisrezeptur sowie die Messung der Abtropfmenge in gleicher Weise durchgeführt wie für die Rezepturen R1 und VR1.

Tabelle 7: Ergebnisse des Abschmelzverhaltens der Rezepturen R2 und VR2; abgetropfte Eismasse in Gew.%

| Zeit in min | Erfindungsgemäße Rezeptur R3; abgetropfte Eismasse in Gew.% der ursprünglichen Eismasse | Vergleichsrezeptur VR3; abgetropfte Eismasse in Gew.% der ursprünglichen Eismasse |
|---|---|---|
| 10 | 0 | 0 |
| 20 | 0 | 3 |
| 30 | 6 | 13 |
| 40 | 14 | 29 |
| 50 | 29 | 51 |

Bei einem Fettanteil von 1,0 Gew.% zeigten beide Rezepturen ein beschleunigtes Abschmelzverhalten. Allerdings zeigte auch bei diesem verringerten Fettgehalt die Rezeptur R2 enthaltend die erfindungsgemäße Zusammensetzung aus niedrigveresterten, amidierten löslichen Pektin, hochveresterten löslichen Pektin und Pflanzenfaser ein deutlich langsameres Abschmelzverhalten als die Vergleichsrezeptur. Folglich konnte der vorteilhafte Effekt der erfindungsgemäßen Zusammensetzung auf die Formstabilität auch bei geringem Fettanteil beobachtet werden.

Abschließend wurde noch geprüft, ob sich die Temperaturprofile der Rezepturen während des Abschmelzversuchs unterschieden. Hierbei wurde festgestellt, dass sich das Temperaturprofil für die Rezeptur R1 nicht von dem Temperaturprofil von der Vergleichsrezeptur VR1 unterschied. Die beobachteten Effekte sind somit auch nicht auf unterschiedliche Eiskristallmorphologien zurückzuführen.

2.3 Sensorik

Im Zuge der Vergleichsstudien zwischen der neuen, erfindungsgemäßen Zusammensetzung Z1 und der Vergleichszusammensetzung VZ1 stellte sich zudem überraschenderweise heraus, dass es möglich ist, die erfindungsgemäße Zusammensetzung Z1 in deutlichen größeren Gewichtsanteilen im Speiseeis einzusetzen als dies bei der Vergleichszusammensetzung VZ1 möglich war. Die maximal mögliche Menge an Vergleichszusammensetzung VZ1 im Speiseeis betrug in etwa 0,5 Gew.%, bezogen auf das Gesamtgewicht des Speiseeis. Bei größeren Mengen an VZ1 im Speiseeis verschlechterte sich die Sensorik des Speiseeises deutlich und führte zu einem schleimigen, unangenehmen Mundgefühl. Im Gegensatz dazu war bei der Zusammensetzung Z1 auch bei Mengen von über 2 Gew.%, bezogen auf das Gesamtgewicht des Speiseeises, kein negativer Effekt auf die Sensorik des Speiseeises zu beobachten. Ein höherer Anteil an der Zusammensetzung Z1 kann insbesondere mit Blick auf Speiseeis mit reduziertem Fett- und/oder Zuckergehalt vorteilhaft sein.

**3. Herstellung der aktivierten pektinhaltigen Citrusfaser**

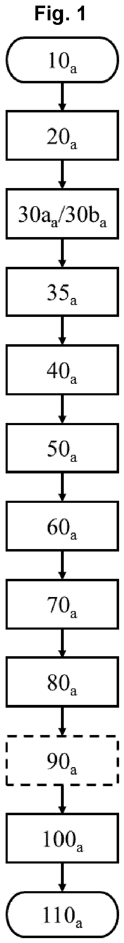

In Figur 1 ist ein Verfahren zur Herstellung der aktivierten pektinhaltigen Citrusfaser als Fließdiagramm schematisch dargestellt. Ausgehend von dem Citrus-Trester $10_a$ wird der Trester durch Inkubation in einer aciden Lösung bei 70° bis 80°C durch Hydrolyse $20_a$ aufgeschlossen. Darauf folgen zwei separate Schritte $30a_a$ (Dekanter) und $30b_a$ (Separator) zur möglichst vollständigen Abtrennung aller Partikel aus der Flüssigphase. Das abgetrennte Material wird mit einer wässrigen Lösung $35_a$ gewaschen. Aus der dabei erhaltenen Waschmixtur werden durch Nasssiebung grobe oder nicht aufgeschlossene Partikel abgetrennt. $40_a$ zur Abtrennung des Feststoffs von der flüssigen Phase. Anschließend werden zwei Alkoholwaschschritte $50_a$ und $70_a$ mit jeweils anschließender Fest-Flüssigtrennung mittels Dekanter $60_a$ und $80_a$ durchgeführt, Im optionalen Schritt $90_a$ kann residual vorhandener Alkohol durch das Einblasen von Wasserdampf entfernt werden. Im Schritt $100_a$ erfolgt schließlich das schonende Trocknen der Fasern mittels einer Vakuumtrocknung um dann die Citrusfasern $110_a$ zu erhalten.

**4. Herstellung der partiell-aktivierten, aktivierbaren pektinhaltigen Citrusfaser**

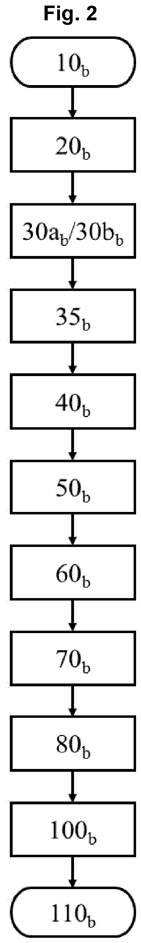

In Figur 2 ist ein Verfahren zur Herstellung der partiell-aktivierten, aktivierbaren pektinhaltigen Citrusfaser als Fließdiagramm schematisch dargestellt. Ausgehend von dem Citrus-Trester $10_b$ wird der Trester durch Inkubation in einer aciden Lösung bei 70° bis 80°C durch Hydrolyse $20_b$ aufgeschlossen. Darauf folgen zwei separate Schritte $30a_b$ (Dekanter) und $30b_b$ (Separator) zur möglichst vollständigen Abtrennung aller Partikel aus der Flüssigphase. Das abgetrennte Material wird im Schritt $35_b$ mit einer wässrigen Lösung gewaschen, aus der dabei erhaltenen Waschmixtur werden durch Nasssiebung grobe oder nicht aufgeschlossene Partikel abgetrennt. Im Schritt $40_b$ erfolgt dann die Abtrennung des Feststoffs von der flüssigen Phase. Anschließend werden zwei Alkoholwaschschritte $50_b$ und $70_b$ mit jeweils anschließender Fest-Flüssigtrennung mittels Dekanter $60_b$ und $80_b$ durchgeführt, Im Schritt $100_b$ erfolgt schließlich das schonende Trocknen der Fasern mittels einer Fließbetttrocknung um dann die Citrusfasern $110_b$ zu erhalten.

**5. Herstellung der aktivierten pektinhaltigen Apfelfaser**

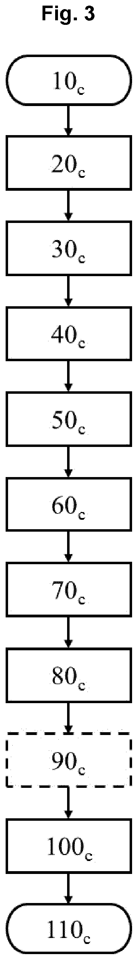

In Figur 3 ist ein Verfahren zur Herstellung der aktivierten pektinhaltigen Apfelfaser als Fließdiagramm schematisch dargestellt. Ausgehend von dem Apfel-Trester 10, wird der Trester durch Inkubation in einer aciden Lösung bei 70° bis 80°C durch Hydrolyse $20_c$ aufgeschlossen. Darauf wird das Material als wässrige Suspension einem ein- oder mehrstufigen Abtrennungsschritt $30_c$ zur Abtrennung von groben Partikeln unterzogen, wobei dies abschließend eine Abtrennung des so erhaltenen, von groben Partikeln befreiten Material aus der wässrigen Suspension beinhaltet (auch Bestandteil des Schrittes $30_c$). Bei einer mehrstufigen Abtrennung grober Partikel geschieht dies bevorzugt mit Siebtrommeln unterschiedlicher Siebmaschenweite. Im Schritt $40_c$ wird das von groben Partikeln befreite Material mit Wasser gewaschen und mittels einer Fest-Flüssig-Trennung die Waschflüssigkeit abgetrennt. Anschließend werden zwei Alkoholwaschschritte $50_c$ und $70_c$ mit jeweils anschließender Fest-Flüssigtrennung mittels Dekanter $60_c$ und $80_c$ durchgeführt. Im optionalen Schritt $90_c$ kann residual vorhandener Alkohol durch das Einblasen von Wasserdampf entfernt werden. Im Schritt $100_c$ erfolgt schließlich das schonende Trocknen der Fasern mittels einer Vakuumtrocknung, um dann die Apfelfasern $110_c$ zu erhalten.

**Bezugszeichenliste:**

Figur 1

| | |
|---|---|
| $10_a$, $10_b$ | Citrus-Trester |
| $10_c$ | Apfel-Trester |
| $20_a$, $20_b$, $20_c$ | Hydrolyse (Aufschluss) durch Inkubation im aciden Milieu |
| $30a_a$, $30a_b$ | 1. Fest-Flüssig Trennung Dekanter |
| $30_c$ | Abtrennen grober Partikel (ein- oder mehrstufig) mit Abtrennung des gereinigten Materials aus der wässrigen Suspension |
| $30b_a$, $30b_b$ | 2. Fest-Flüssig Trennung Separator |
| $35_a$, $35_b$ | Waschmixtur mit Nasssiebung |
| $40_a$, $40_b$ | Fest-Flüssig-Trennung |
| $40_c$ | Waschen mit Wasser und Fest-Flüssig Trennung |
| $50_a$, $50_b$, $50c$ | 1. Waschen mit Alkohol |
| $60_a$, $60b$, $60_c$ | Fest-Flüssig Trennung Dekanter |
| $70_a$, $70_b$, $70_c$ | 2. Waschen mit Alkohol |
| $80_a$, $80_b$, $80_c$ | Fest-Flüssig Trennung Dekanter |
| $90_a$, $90_c$ | Optionales Einbringen von Wasserdampf |
| $100_a$, $100_c$ | Vakuumtrocknung |
| $100_b$ | Fließbetttrocknung |
| $110_a$, $110_b$ | Erhaltene Citrusfaser |
| $110_c$ | Erhaltene Apfelfaser |

**Patentansprüche**

1.  Verwendung einer Zusammensetzung zur Herstellung von Speiseeis, niederkalorischem Speiseeis, pflanzlichem Speiseeis, oder von Speiseeis mit Insektenprotein, wobei die Zusammensetzung umfasst:

    a. Pflanzenfaser mit einem Gehalt an wasserlöslichem Pektin von zwischen 2 und 10 Gew.%;
    b. niederverestertes lösliches Pektin mit einem Veresterungsgrad von weniger als 50%;
    c. hochverestertes lösliches Pektin mit einem Veresterungsgrad von mindestens 50%; und
    d. optional Zucker.

2.  Verwendung gemäß Anspruch 1, **dadurch gekennzeichnet, dass** das niederveresterte lösliche Pektin der Zusammensetzung ein niederverestertes amidiertes lösliches Pektin ist.

3.  Verwendung gemäß Anspruch 1 oder 2, **dadurch gekennzeichnet, dass** die Pflanzenfaser der Zusammensetzung ausgewählt ist aus der Gruppe aufweisend Citrusfaser, Apfelfaser, Zuckerrübenfaser, Möhrenfaser, Erbsenfaser, wobei die Pflanzenfaser bevorzugt eine Citrusfaser oder eine Apfelfaser ist.

4. Verwendung gemäß Anspruch 1 bis 3, **dadurch gekennzeichnet, dass** die zuckerhaltige Zusammensetzung die Pflanzenfaser in einem Anteil von 20 bis 50 Gew.%, vorteilhaft von 30 bis 40 Gew.%, und insbesondere von 34 bis 36 Gew.%, bezogen auf das Gesamtgewicht der Zusammensetzung, aufweist; und/oder

die zuckerhaltige Zusammensetzung das niederveresterte lösliche Pektin, das bevorzugt ein niederverestertes amidiertes Pektin und besonders bevorzugt ein niederverestertes amidiertes lösliches Citruspektin ist, in einem Anteil von 10 bis 35 Gew.%, bevorzugt von 15 bis 30 Gew.%, besonders bevorzugt von 20 bis 25 Gew.% und insbesondere von 22,5 Gew.%, bezogen auf das Gesamtgewicht der Zusammensetzung, aufweist; und/oder die zuckerhaltige Zusammensetzung das hochveresterte lösliche Pektin, das bevorzugt ein hochverestertes lösliches Citruspektin ist, in einem Anteil von 5 bis 30 Gew.%, bevorzugt von 10 bis 20 Gew.%, besonders bevorzugt von 13 bis 17 Gew.% und insbesondere bevorzugt von 15 Gew.%, bezogen auf das Gesamtgewicht der Zusammensetzung, aufweist; und/oder die zuckerhaltige Zusammensetzung den Zucker in einem Anteil von 18 bis 40 Gew.%, bevorzugt von 20 bis 38 Gew.% und besonders bevorzugt von 23 bis 32 Gew.%, bezogen auf das Gesamtgewicht der Zusammensetzung enthält.

5. Verwendung gemäß einem der vorhergehenden Ansprüche, **dadurch gekennzeichnet, dass** die Pflanzenfaser der Zusammensetzung eine oder mehrere der folgenden Eigenschaften aufweist:

a. eine dynamische Weissenbergzahl in einer 2,5 Gew.%igen Suspension von mehr als 4,0, insbesondere mehr als 5,0;
b. eine dynamische Weissenbergzahl in einer 2,5 Gew.%igen Dispersion von mehr als 5,0, insbesondere mehr als 6,0;
c. eine Viskosität von 100 bis 1200 mPas, bevorzugt von 350 bis 950 mPas, und besonders bevorzugt von 380 bis 850 mPas, wobei die Pflanzenfaser in Wasser als 2,5 Gew.%ige Lösung dispergiert wird und die Viskosität mit einer Scherrate von 50 s$^{-1}$ bei 20°C gemessen wird;
d. ein Wasserbindevermögen von 20 bis 34 g/g, bevorzugt von 22 bis 30 g/g, und besonders bevorzugt von 23 bis 28 g/g;
e. eine Festigkeit von mehr 50 g;
f. eine Feuchtigkeit von weniger als 15%, bevorzugt von weniger als 10% und besonders bevorzugt von weniger als 8%;
g. in 1,0 Gew%iger wässriger Suspension einen pH-Wert von 3,10 bis 5,0 und bevorzugt von 3,4 bis 4,6;
h. eine Korngröße, bei der mindestens 90% der Partikel kleiner als 300 pm sind;
i. einen Helligkeitswert L* > 61 für Apfelfaser und L* > 88 für Citrusfaser;
j. einen Ballaststoffgehalt von 80 bis 95 Gew.%;
k. die Pflanzenfaser eine depektinisierte Pflanzenfaser und bevorzugt eine depektinisierte Fruchtfaser ist;
l. die Pflanzenfaser weniger als 10%, bevorzugt weniger als 8 % und besonders bevorzugt weniger als 6% an wasserlöslichem Pektin aufweist.

6. Verwendung gemäß Anspruch 5, **dadurch gekennzeichnet, dass** die Pflanzenfaser eine aktivierte pektinhaltige Citrusfaser ist, die eine oder mehrere der folgenden Eigenschaften aufweist:

a. eine Fließgrenze II (Rotation) in der Fasersuspension von mehr als 1,5 Pa und vorteilhafterweise von mehr als 2,0 Pa;
b. eine Fließgrenze I (Rotation) in der Faserdispersion von mehr als 5,5 Pa und vorteilhafterweise von mehr als 6,0 Pa;
c. eine Fließgrenze II (Cross Over) in der Fasersuspension von mehr als 1,2 Pa und vorteilhafterweise von mehr als 1,5 Pa;
d. eine Fließgrenze I (Cross Over) in der Faserdispersion von mehr als 6,0 Pa und vorteilhafterweise von mehr als 6,5 Pa;
e. eine dynamische Weissenbergzahl in der Fasersuspension von mehr als 7,0, vorteilhafterweise von mehr als 7,5 und besonders vorteilhaft von mehr als 8,0;
f. eine dynamische Weissenbergzahl in der Faserdispersion von mehr als 6,0, vorteilhafterweise von mehr als 6,5 und besonders vorteilhaft von mehr als 7,0;
g. eine Festigkeit in einer 4 Gew.%igen wässrigen Suspension von mindestens 150 g, besonders vorteilhaft von mindestens 220 g;

h. eine Viskosität von mindestens 650 mPas, wobei die Pflanzenfaser in Wasser als 2,5 Gew.%ige Lösung dispergiert wird und die Viskosität mit einer Scherrate von 50 s$^{-1}$ bei 20°C gemessen wird;

i. ein Wasserbindevermögen von mehr als 22 g/g;

j. eine Feuchtigkeit von weniger als 15%, bevorzugt von weniger als 10% und besonders bevorzugt von weniger als 8%;

k. in 1,0 Gew%iger wässriger Suspension einen pH-Wert von 3,1 bis 4,75 und bevorzugt von 3,4 bis 4,2;

l. eine Korngröße, bei der mindestens 90% der Partikel kleiner als 250 $\mu$m, bevorzugt kleiner als 200 $\mu$m und insbesondere kleiner als 150 $\mu$m sind;

m. einen Helligkeitswert L* > 90, bevorzugt von L* > 91 und besonders bevorzugt von L* > 92;

n. einen Ballaststoffgehalt der Faser von 80 bis 95%;

o. die aktivierte pektinhaltige Citrusfaser weniger als 10%, vorteilhaft weniger als 8 % und besonders vorteilhaft weniger als 6% an wasserlöslichem Pektin aufweist.

**7.** Verwendung gemäß Anspruch 5, **dadurch gekennzeichnet, dass** die Pflanzenfaser der Zusammensetzung eine partiell-aktivierte aktivierbare pektinhaltige Citrusfaser ist, die eine oder mehrere der folgenden Eigenschaften aufweist:

a. eine Fließgrenze II (Rotation) der Fasersuspension von 0,1 -1,0 Pa, vorteilhafterweise von 0,3 - 0,9 Pa und besonders vorteilhafterweise von 0,6 - 0,8 Pa;

b. eine Fließgrenze I (Rotation) in der Faserdispersion von 1,0 -4,0 Pa, vorteilhafterweise von 1,5 - 3,5 Pa und besonders vorteilhafterweise von 2,0- 3,0 Pa;

c. eine Fließgrenze II (Cross Over) in der Fasersuspension von 0,1 - 1,0 Pa, vorteilhafterweise von 0,3 - 0,9 Pa und besonders vorteilhafterweise von 0,6 - 0,8 Pa;

d. eine Fließgrenze I (Cross Over) der Faserdispersion von 1,0 -4,5 Pa, vorteilhafterweise von 1,5- 4,0 Pa und besonders vorteilhafterweise von 2,0 - 3,5 Pa;

e. eine dynamische Weissenbergzahl in der Fasersuspension von 4,5 - 8,0, vorteilhafterweise von 5,0 - 7,5 und besonders vorteilhaft von 7,0 -7,5;

f. eine dynamische Weissenbergzahl in der Faserdispersion von 5,0 -9,0, vorteilhafterweise von 6,0 - 8,5 und besonders vorteilhaft von 7,0 - 8,0;

g. eine Festigkeit in einer 4 Gew%igen wässrigen Suspension von zwischen 60 g und 240 g, bevorzugt von zwischen 120 g und 200 g und besonders bevorzugt von zwischen 140 und 180 g;

h. eine Viskosität von 150 bis 600 mPas, bevorzugt von 200 bis 550 mPas, und besonders bevorzugt von 250 bis 500 mPas aufweist, wobei die Pflanzenfaser in Wasser als 2,5 Gew.%ige Lösung dispergiert wird und die Viskosität mit einer Scherrate von 50 s$^{-1}$ bei 20°C gemessen wird;

i. ein Wasserbindevermögen von mehr als 20 g/g, bevorzugt von mehr als 22 g/g, und besonders bevorzugt von mehr als 24 g/g, und insbesondere bevorzugt von zwischen 24 und 26 g/g aufweist;

j. eine Feuchtigkeit von weniger als 15%, bevorzugt von weniger als 10% und besonders bevorzugt von weniger als 8%;

k. in 1,0 Gew%iger wässriger Suspension einen pH-Wert von 3,1 bis 4,75 und bevorzugt von 3,4 bis 4,2;

l. eine Korngröße, bei der mindestens 90% der Partikel kleiner als 450 $\mu$m, bevorzugt kleiner als 350 $\mu$m und insbesondere kleiner als 250 $\mu$m sind;

m. einen Helligkeitswert L* > 84, bevorzugt von L* > 86 und besonders bevorzugt von L* > 88;

n. einen Ballaststoffgehalt der Faser von 80 bis 95%;

o. die aktivierbare Citrusfaser weniger als 10%, vorteilhaft weniger als 8 % und besonders vorteilhaft weniger als 6% an wasserlöslichem Pektin aufweist.

**8.** Verwendung gemäß Anspruch 5, **dadurch gekennzeichnet, dass** die Pflanzenfaser der Zusammensetzung eine aktivierte pektinhaltige Apfelfaser ist, die eine oder mehrere der folgenden Eigenschaften aufweist:

a. eine Fließgrenze II (Rotation) in einer Fasersuspension von mehr als 0,1 Pa, vorteilhafterweise von mehr als 0,5 Pa, und besonders vorteilhafterweise von mehr als 1,0 Pa;

b. eine Fließgrenze I (Rotation) in der Faserdispersion von mehr als 5,0 Pa, vorteilhafterweise von mehr als 6,0 Pa und besonders vorteilhafterweise von mehr als 7,0 Pa;

c. eine Fließgrenze II (Cross Over) in Fasersuspension von mehr als 0,1 Pa, vorteilhafterweise von mehr als 0,5 Pa und besonders vorteilhafterweise von mehr als 1,0 Pa;

d. eine Fließgrenze I (Cross Over) in der Faserdispersion von mehr als 5,0 Pa, vorteilhafterweise von mehr als 6,0 Pa und besonders vorteilhafterweise von mehr als 7,0 Pa;

e. eine dynamische Weissenbergzahl in der Fasersuspension von mehr als 4,0, vorteilhafterweise von mehr als 5,0 und besonders vorteilhaft von mehr als 6,0;

f. eine dynamische Weissenbergzahl in der Faserdispersion von mehr als 6,5 vorteilhafterweise von mehr als 7,5 und besonders vorteilhaft von mehr als 8,5;

g. eine Festigkeit von mehr als 50 g, bevorzugt von mehr als 75 g und besonders bevorzugt von mehr als 100 g, wobei die Pflanzenfaser in Wasser als 6 Gew.%ige Lösung suspendiert wird;

h. eine Viskosität von mehr als 100 mPas, bevorzugt von mehr als 200 mPas, und besonders bevorzugt von mehr als 350 mPas, wobei die Pflanzenfaser in Wasser als 2,5 Gew.%ige Lösung dispergiert wird und die Viskosität mit einer Scherrate von 50 s$^{-1}$ bei 20°C gemessen wird;

i. ein Wasserbindevermögen von mehr als 20 g/g, bevorzugt von mehr als 22 g/g, besonders bevorzugt von mehr als 24 g/g, und insbesondere bevorzugt von mehr als 27,0 g/g;

j. eine Feuchtigkeit von weniger als 15%, bevorzugt von weniger als 8% und besonders bevorzugt von weniger als 6%;

k. in 1,0 Gew%iger wässriger Suspension einen pH-Wert von 3,5 bis 5,0 und bevorzugt von 4,0 bis 4,6;

l. eine Korngröße, bei der mindestens 90% der Partikel kleiner als 400 $\mu$m, bevorzugt kleiner als 350 $\mu$m und insbesondere kleiner als 300 $\mu$m sind;

m. einen Helligkeitswert L* > 60, bevorzugt von L* > 61 und besonders bevorzugt von L* > 62;

n. einen Ballaststoffgehalt der Faser von 80 bis 95%;

o. die Apfelfaser weniger als 10%, vorteilhaft weniger als 8 % und besonders vorteilhaft weniger als 6% an wasserlöslichem Pektin aufweist.

9. Verwendung gemäß einem der Ansprüche 2 bis 8, **dadurch gekennzeichnet, dass** das niederveresterte amidierte lösliche Pektin der Zusammensetzung, das bevorzugt ein niederverestertes amidiertes lösliches Apfelpektin oder Citruspektin ist, eine oder mehrere der folgenden Eigenschaften aufweist:

a. einen Veresterungsgrad von 25 bis 50%, bevorzugt von 29 bis 45%, besonders bevorzugt von 34 bis 40% und insbesondere bevorzugt von 36 bis 37,5%;

b. einen Amidierungsgrad von 6 bis 18%, bevorzugt von 8 bis 17%, besonders bevorzugt von 10 bis 16% und insbesondere bevorzugt von 11 bis 15%;

c. eine Calci um reaktivität von 500 bis 3000 HPE, bevorzugt 700 bis 2500 HPE, besonders bevorzugt von 1000 bis 2000 HPE, insbesondere bevorzugt 1400 bis 1700 HPE.

10. Verwendung gemäß einem der vorhergehenden Ansprüche, **dadurch gekennzeichnet, dass** das hochveresterte lösliche Pektin der Zusammensetzung, das bevorzugt ein hochverestertes lösliches Citruspektin oder lösliches Apfelpektin ist, eine oder mehrere der folgenden Eigenschaften aufweist:

a. einen Veresterungsgrad von 60 bis 80%, bevorzugt von 64 bis 76%, besonders bevorzugt von 66 bis 74% und insbesondere bevorzugt von 68 bis 70%;

b. eine Gelierkraft von 140 bis 280 °USA-Sag, bevorzugt von 160 bis 260 °USA- Sag und besonders bevorzugt von 170 bis 250 °USA-Sag.

11. Verwendung gemäß einem der vorangehenden Ansprüche, wobei die Zusammensetzung als Halberzeugnis eingesetzt wird oder durch getrennte Zugabe von pektinhaltiger Pflanzenfaser und/oder niederverestertem, bevorzugt amidiertem, löslichen Pektin und/oder löslichem hochveresterten Pektin als Zusammensetzung im Endprodukt entsteht.

12. Speiseeis enthaltend eine gemäß den Ansprüchen 1 bis 10 verwendete Zusammensetzung, **dadurch gekennzeichnet, dass** das Speiseeis eine oder mehrere der folgenden Zutaten umfasst:

a. eine wässrige Lösung, die bevorzugt Milch und/oder ein Milcherzeugnis ist, wobei der Wasseranteil in dem Speiseeis von 20 bis 80 Gew.%, bevorzugt von 30 bis 70 Gew.%, besonders bevorzugt von 40 bis 65 Gew.%, und insbesondere bevorzugt von 50 bis 65 Gew.%, bezogen auf das Gesamtgewicht des Speiseeises, beträgt;

b. eine Fettquelle, die pflanzlichen oder tierischen Ursprungs ist, oder einer Kombination hieraus, wobei der Fettgehalt in dem Speiseeis bevorzugt von 0,5 bis 30 Gew.%, besonders bevorzugt von 0,5 bis 20 Gew.%, weiter bevorzugt von 0,5 bis 15 Gew.% und insbesondere bevorzugt von 0,5 % bis 12 Gew.%, bezogen auf das Gesamtgewicht des Speiseeises, beträgt;

c. eine Proteinquelle, die pflanzlichen oder tierischen Ursprungs ist, oder einer Kombination hieraus, wobei der Proteingehalt in dem Speiseeis bevorzugt von 0,5 bis 30 Gew.%, besonders bevorzugt von 1 bis 20 Gew.%,

weiter bevorzugt von 1 bis 10 Gew.%, insbesondere bevorzugt 2 bis 5 Gew.%, bezogen auf das Gesamtgewicht des Speiseeises, beträgt;
d. Zucker und/oder eine Zuckeralternative, wobei der Zuckergehalt in dem Speiseeis bevorzugt von 5 bis 50 Gew.%, besonders bevorzugt von 8 bis 40 Gew.%, weiter bevorzugt von 10 bis 30 Gew.%, insbesondere bevorzugt 12 bis 25 Gew.%, bezogen auf das Gesamtgewicht des Speiseeises, beträgt;

wobei das Speiseeis die Zusammensetzung gemäß einem der Ansprüche 1 bis 10 in einem Anteil von 0,05 bis 1,5 Gew.%, bevorzugt von 0,1 bis 1,0 Gew.%, besonders bevorzugt von 0,15 bis 0,75 Gew.% und insbesondere bevorzugt von 0,2 bis 0,5 Gew.%, bezogen auf das Gesamtgewicht des Speiseeises, enthält.

13. Speiseeis enthaltend eine gemäß den Ansprüchen 1 bis 10 verwendete Zusammensetzung, oder Speiseies gemäß Anspruch 12, **dadurch gekennzeichnet, dass** das Speiseeis eine oder mehrere der folgenden Eigenschaften aufweist:

a. eine Eiskristallwachstumsrate von 0,001 bis 10 $\mu$m/min, bevorzugt von 0,01 bis 8 $\mu$m/min, besonders bevorzugt von 0,03 bis 6 $\mu$m/min, insbesondere bevorzugt von 0,04 bis 2 $\mu$m/min, wobei die Temperatur zur Bestimmung des Eiskristallwachstums -12 °C beträgt;
b. innerhalb eines Zeitraums von 300 min bei einer Temperatur von -12 °C eine Reduktion der Eiskristallanzahl von 1 bis 99 %, bevorzugt von 10 bis 90 %, besonders bevorzugt von 20 bis 90 %, insbesondere bevorzugt von 40 bis 80 %;
c. eine Abschmelzgeschwindigkeit von 0 g/min bis 100 g/ min, bevorzugt von 0 g/min bis 80 g/ min, besonders bevorzugt von 0 g/min bis 50 g/min, insbesondere bevorzugt 0 g/von min bis 10 g/ min, wobei 100 ml Speiseeis auf ein Lochgitter mit Lochdurchmesser 10 mm im Abstand von 2 mm für einen Zeitraum von bis zu 80 min gestellt wird und die Umgebungstemperatur bei dem Abschmelzversuch 23°C beträgt;
d. einen Gefrierpunkt von -0,1 °C bis -15 °C, bevorzugt von -0,1 °C bis -12 °C, besonders bevorzugt von -2 °C bis -10 °C und insbesondere bevorzugt von - 2 °C bis -5 °C;
e. eine Premixviskosität von 50 bis 1200 mPas, bevorzugt von 100 bis 950 mPas, und besonders bevorzugt von 200 bis 500 mPas, wobei die Viskosität des Premixes bei einer Scherrate von 50 s$^{-1}$ bei 4 °C gemessen wird;
f. einen Lufteinschlag von 10% bis 170%, bevorzugt 40% bis 140%, besonders bevorzugt 50% bis 120%, insbesondere bevorzugt 90% bis 110%;
g. einen Anteil an destabilisiertem Fett von 1 bis 50 Gew.%, bevorzugt von 5 bis 35 Gew.%, besonders bevorzugt von 8 bis 25 Gew.%, insbesondere bevorzugt von 10 bis 20 Gew.%, bezogen auf den gesamten Fettgehalt des Speiseeises, wobei der Anteil an destabilisiertem Fett bei einer Einzelwellenlänge von 540 nm gemessen wird;
h. einen mittleren Eiskristalldurchmesser von 0,01 bis 200 $\mu$m, bevorzugt von 0,1 bis 150 $\mu$m, besonders bevorzugt von 0,1 bis 100 $\mu$m, insbesondere bevorzugt von 1 bis 60 $\mu$m.

14. Speiseeis enthaltend eine gemäß den Ansprüchen 1 bis 10 verwendete Zusammensetzung oder Speiseeis gemäß einem der Ansprüche 12 oder 13, **dadurch gekennzeichnet, dass** es ein pflanzliches Speiseeis ist und bevorzugt als Zutaten umfasst:

a) Wasser;
b) eine pflanzliche Fettquelle, wie Kokosfett, Palmfett, Kakaobutter, Nüsse oder Getreide;
c) eine pflanzliche Proteinquelle, wie Erbse, Hanf oder Soja;
d) Zucker und/oder eine Zuckeralternative.

15. Verfahren zur Herstellung eines Speiseeises nach einem der Ansprüche 12 bis 14 mindestens umfassend die Schritte:

a. Bereitstellen einer Zusammensetzung nach einem der Ansprüche 1 bis 10;
b. optionales Bereitstellen einer wässrigen Lösung, die bevorzugt Milch und/oder ein Milcherzeugnis ist;
c. optionales Bereitstellen weiterer Komponenten, insbesondere einer Fettquelle, die pflanzlichen oder tierischen Ursprungs ist, oder einer Kombination hieraus, einer Proteinquelle, die pflanzlichen oder tierischen Ursprungs ist, oder einer Kombination hieraus und/oder eines Zuckers und/oder einer Zuckeralternative;
d. Zusammenführen, insbesondere Mischen, der in Schritt a. bis c. bereitgestellten Komponenten um eine Mischung zu erhalten;
e. Erhitzen der in Schritt d. erhaltenen Mischung auf eine Temperatur von mindestens 60 °C, insbesondere von mindestens 80 °C;
f. Homogenisieren der in Schritt e. erhitzten Mischung, insbesondere durch Druckhomogenisieren;

g. Abkühlen der in Schritt f. homogenisierten Mischung auf 4 °C;

h. Reifen der Mischung bei 4 bis 6°C;

i. Ausfrieren der in Schritt g. abgekühlten Mischung auf eine Temperatur von weniger als -4 °C.

**Claims**

1. Use of a composition for producing ice-cream, low-caloric ice-cream, plant-based ice-cream, or ice-cream comprising insect protein, wherein the composition comprises:

   a. plant fibre having a content of water-soluble pectin of between 2 and 10 wt.%

   b. low-esterified soluble pectin having a degree of esterification of less than 50%;

   c. high-esterified soluble pectin having a degree of esterification of at least 50%; and

   d. optionally sugar.

2. Use according to claim 1, **characterised in that** the low-esterified soluble pectin of the composition is a low-esterified amidated soluble pectin.

3. Use according to either claim 1 or claim 2, **characterised in that** the plant fibre of the composition is selected from the group comprising citrus fibre, apple fibre, sugar beet fibre, carrot fibre, pea fibre, wherein the plant fibre is preferably a citrus fibre or an apple fibre.

4. Use according to claims 1 to 3, **characterised in that** the sugar-containing composition comprises the plant fibre in a fraction of 20 to 50 wt.%, advantageously of 30 to 40 wt.%, and in particular of 34 to 36 wt.%, based on the total weight of the composition; and/or

   the sugar-containing composition comprises the low-esterified soluble pectin, which is preferably a low-esterified amidated pectin and particularly preferably a low-esterified amidated soluble citrus pectin, in a fraction of 10 to 35 wt.%, preferably of 15 to 30 wt.%, particularly preferably of 20 to 25 wt.%, and in particular of 22.5 wt.%, based on the total weight of the composition; and/or the sugar-containing composition comprises the high-esterified soluble pectin, which is preferably a high-esterified soluble citrus pectin, in a fraction of 5 to 30 wt.%, preferably of 10 to 20 wt.%, particularly preferably of 13 to 17 wt.%, and very particularly preferably of 15 wt.%, based on the total weight of the composition; and/or

   the sugar-containing composition contains the sugar in a fraction of 18 to 40 wt.%, preferably of 20 to 38 wt.%, and particularly preferably of 23 to 32 wt.%, based on the total weight of the composition.

5. Use according to any of the preceding claims, **characterised in that** the plant fibre of the composition has one or more of the following properties:

   a. a dynamic Weissenberg number in a 2.5 wt.% suspension of more than 4.0, in particular more than 5.0;

   b. a dynamic Weissenberg number in a 2.5 wt.% dispersion of more than 5.0, in particular more than 6.0;

   c. a viscosity of 100 to 1200 mPas, preferably of 350 to 950 mPas, and particularly preferably of 380 to 850 mPas, wherein the plant fibre is dispersed in water as a 2.5 wt.% solution and the viscosity is measured at a shear rate of 50 s$^{-1}$ at 20 °C;

   d. a water-binding capacity of 20 to 34 g/g, preferably of 22 to 30 g/g, and particularly preferably of 23 to 28 g/g;

   e. a strength of more than 50 g;

   f. a moisture of less than 15%, preferably of less than 10%, and particularly preferably of less than 8%;

   g. in 1.0 wt.% aqueous suspension, a pH of 3.10 to 5.0 and preferably of 3.4 to 4.6;

   h. a grain size at which at least 90% of the particles are smaller than 300 $\mu$m;

   i. a brightness value L* > 61 for apple fibre and L* > 88 for citrus fibre;

   j. a dietary fibre content of 80 to 95 wt.%;

   k. the plant fibre is a depectinised plant fibre and preferably a depectinised fruit fibre;

   l. the plant fibre comprises less than 10%, preferably less than 8%, and particularly preferably less than 6%, water-soluble pectin.

6. Use according to claim 5, **characterised in that** the plant fibre is an activated pectin-containing citrus fibre which has one or more of the following properties:

a. a yield point II (rotation) in the fibre suspension of more than 1.5 Pa and advantageously more than 2.0 Pa;

b. a yield point I (rotation) in the fibre dispersion of more than 5.5 Pa and advantageously more than 6.0 Pa;

c. a yield point II (cross-over) in the fibre suspension of more than 1.2 Pa and advantageously more than 1.5 Pa;

d. a yield point I (cross-over) in the fibre dispersion of more than 6.0 Pa and advantageously more than 6.5 Pa;

e. a dynamic Weissenberg number in the fibre suspension of more than 7.0, advantageously more than 7.5, and particularly advantageously more than 8.0;

f. a dynamic Weissenberg number in the fibre dispersion of more than 6.0, advantageously more than 6.5, and particularly advantageously more than 7.0;

g. a strength in a 4 wt.% aqueous suspension of at least 150 g, particularly advantageously of at least 220 g;

h. a viscosity of at least 650 mPas, wherein the plant fibre is dispersed in water as a 2.5 wt.% solution and the viscosity is measured at a shear rate of 50 s$^{-1}$ at 20°C;

i. a water binding capacity of more than 22 g/g;

j. a moisture of less than 15%, preferably of less than 10%, and particularly preferably of less than 8%;

k. in a 1.0 wt.% aqueous suspension, a pH of 3.1 to 4.75 and preferably of 3.4 to 4.2;

l. a grain size in which at least 90% of the particles are smaller than 250 $\mu$m, preferably smaller than 200 $\mu$m, and in particular smaller than 150 $\mu$m;

m. a brightness value L* > 90, preferably of L* > 91 and particularly preferably of L* > 92;

n. a dietary fibre content of the fibre of 80 to 95%;

o. the activated pectin-containing citrus fibre comprises less than 10%, advantageously less than 8%, and particularly advantageously less than 6%, water-soluble pectin.

7. Use according to claim 5, **characterised in that** the plant fibre of the composition is a partially activated activatable pectin-containing citrus fibre which has one or more of the following properties:

a. a yield point II (rotation) in the fibre suspension of 0.1 - 1.0 Pa, advantageously of 0.3 - 0.9 Pa, and particularly advantageously of 0.6 - 0.8 Pa;

b. a yield point I (rotation) in the fibre dispersion of 1.0 - 4.0 Pa, advantageously of 1.5 - 3.5 Pa, and particularly advantageously of 2.0 - 3.0 Pa;

c. a yield point II (cross-over) in the fibre suspension of 0.1 - 1.0 Pa, advantageously of 0.3 - 0.9 Pa, and particularly advantageously of 0.6 - 0.8 Pa;

d. a yield point I (cross-over) of the fibre dispersion of 1.0 - 4.5 Pa, advantageously of 1.5 - 4.0 Pa, and particularly advantageously of 2.0 - 3.5 Pa;

e. a dynamic Weissenberg number in the fibre suspension of 4.5 - 8.0, advantageously of 5.0 - 7.5, and particularly advantageously of 7.0 - 7.5;

f. a dynamic Weissenberg number in the fibre dispersion of 5.0 - 9.0, advantageously of 6.0 - 8.5, and particularly advantageously of 7.0 - 8.0;

g. a strength in a 4 wt.% aqueous suspension of between 60 g and 240 g, preferably of between 120 g and 200 g, and particularly preferably of between 140 and 180 g;

h. a viscosity of 150 to 600 mPas, preferably of 200 to 550 mPas, and particularly preferably of 250 to 500 mPas, wherein the plant fibre is dispersed in water as a 2.5 wt.% solution and the viscosity is measured at a shear rate of 50 s$^{-1}$ at 20°C;

i. a water binding capacity of more than 20 g/g, preferably of more than 22 g/g, and particularly preferably of more than 24 g/g, and very particularly preferably of between 24 and 26 g/g;

j. a moisture of less than 15%, preferably of less than 10%, and particularly preferably of less than 8%;

k. in a 1.0 wt.% aqueous suspension, a pH of 3.1 to 4.75 and preferably of 3.4 to 4.2;

l. a grain size in which at least 90% of the particles are smaller than 450 $\mu$m, preferably smaller than 350 $\mu$m, and in particular smaller than 250 $\mu$m;

m. a brightness value L* > 84, preferably of L* > 86 and particularly preferably of L* > 88;

n. a dietary fibre content of the fibre of 80 to 95%;

o. the activatable citrus fibre comprises less than 10%, advantageously less than 8%, and particularly advantageously less than 6%, water-soluble pectin.

8. Use according to claim 5, **characterised in that** the plant fibre of the composition is an activated pectin-containing apple fibre which has one or more of the following properties:

a. a yield point II (rotation) in the fibre suspension of more than 0.1 Pa, advantageously of more than 0.5 Pa, and particularly advantageously of more than 1.0 Pa;

b. a yield point I (rotation) in the fibre dispersion of more than 5.0 Pa, advantageously of more than 6.0 Pa, and particularly advantageously of more than 7.0 Pa;

c. a yield point II (cross-over) in the fibre suspension of more than 0.1 Pa, advantageously of more than 0.5 Pa, and particularly advantageously of more than 1.0 Pa;

d. a yield point I (cross-over) of the fibre dispersion of more than 5.0 Pa, advantageously of more than 6.0 Pa, and particularly advantageously of more than 7.0 Pa;

e. a dynamic Weissenberg number in the fibre suspension of more than 4.0, advantageously of more than 5.0, and particularly advantageously of more than 6.0;

f. a dynamic Weissenberg number in the fibre dispersion of more than 6.5, advantageously of more than 7.5, and particularly advantageously of more than 8.5;

g. a strength of more than 50 g, preferably of more than 75 g, and particularly preferably of more than 100 g, wherein the plant fibre is suspended in water as a 6 wt.% solution;

h. a viscosity of more than 100 mPas, preferably of more than 200 mPas, and particularly preferably of more than 350 mPas, wherein the plant fibre is dispersed in water as a 2.5 wt.% solution and the viscosity is measured at a shear rate of 50 $s^{-1}$ at 20°C;

i. a water binding capacity of more than 20 g/g, preferably of more than 22 g/g, particularly preferably of more than 24 g/g, and very particularly preferably of more than 27 g/g;

j. a moisture of less than 15%, preferably of less than 8%, and particularly preferably of less than 6%;

k. in a 1.0 wt.% aqueous suspension, a pH of 3.5 to 5.0 and preferably of 4.0 to 4.6;

l. a grain size in which at least 90% of the particles are smaller than 400 $\mu$m, preferably smaller than 350 $\mu$m, and in particular smaller than 300 $\mu$m;

m. a brightness value L* > 60, preferably of L* > 61 and particularly preferably of L* > 62;

n. a dietary fibre content of the fibre of 80 to 95%;

o. the apple fibre comprises less than 10%, advantageously less than 8%, and particularly advantageously less than 6%, water-soluble pectin.

9. Use according to any of claims 2 to 8, **characterised in that** the low-esterified amidated soluble pectin of the composition, which is preferably a low-esterified amidated soluble apple pectin or citrus pectin, has one or more of the following properties:

a. a degree of esterification of 25 to 50%, preferably of 29 to 45%, particularly preferably of 34 to 40%, and very particularly preferably of 36 to 37.5%;

b. a degree of amidation of 6 to 18%, preferably of 8 to 17%, particularly preferably of 10 to 16%, and very particularly preferably of 11 to 15%;

c. a calcium reactivity of 500 to 3000 HPE, preferably 700 to 2500 HPE, particularly preferably of 1000 to 2000 HPE, very particularly preferably 1400 to 1700 HPE.

10. Use according to any of the preceding claims, **characterised in that** the high-esterified soluble pectin of the composition, which is preferably a high-esterified soluble citrus pectin or soluble apple pectin, has one or more of the following properties:

a. a degree of esterification of 60 to 80%, preferably of 64 to 76%, particularly preferably of 66 to 74%, and very particularly preferably of 68 to 70%;

b. a gelling power of 140 to 280 °USA-Sag, preferably of 160 to 260 °USA-Sag, and particularly preferably of 170 to 250 °USA-Sag.

11. Use according to any of the preceding claims, wherein the composition is used as a semi-finished product or emerges as a composition in the end product by separate addition of pectin-containing plant fibre and/or low-esterified, preferably amidated, soluble pectin and/or soluble high-esterified pectin.

12. Ice-cream containing a composition used according to claims 1 to 10, **characterised in that** the ice-cream comprises one or more of the following ingredients:

a. an aqueous solution, which is preferably milk and/or a milk product, wherein the water content in the ice-cream is 20 to 80 wt.%, preferably 30 to 70 wt.%, particularly preferably 40 to 65 wt.%, and very particularly preferably 50 to 65 wt.%, based on the total weight of the ice-cream;

b. a source of fat which is of plant or animal origin, or a combination thereof, wherein the fat content in the ice-cream is preferably 0.5 to 30 wt.%, particularly preferably 0.5 to 20 wt.%, more preferably 0.5 to 15 wt.% and very particularly preferably 0.5 to 12 wt.%, based on the total weight of the ice-cream;

c. a protein source which is of plant or animal origin, or a combination thereof, wherein the protein content in the ice-cream is preferably 0.5 to 30 wt.%, particularly preferably 1 to 20 wt.%, more preferably 1 to 10 wt.%, very particularly preferably 2 to 5 wt.%, based on the total weight of the ice-cream;

d. sugar and/or a sugar alternative, wherein the sugar content in the ice-cream is preferably 5 to 50 wt.%, particularly preferably 8 to 40 wt.%, more preferably 10 to 30 wt.%, very particularly preferably 12 to 25 wt.%, based on the total weight of the ice-cream;

wherein the ice-cream contains the composition according to any of claims 1 to 10 in a portion of 0.05 to 1.5 wt.%, preferably of 0.1 to 1.0 wt.%, particularly preferably of 0.15 to 0.75 wt.%, and very particularly preferably of 0.2 to 0.5 wt.%, based on the total weight of the ice-cream.

**13.** Ice-cream containing a composition used according to claims 1 to 10, or ice-cream according to claim 12, **characterised in that** the ice-cream has one or more of the following properties:

a. an ice crystal growth rate of 0.001 to 10 $\mu$m/min, preferably of 0.01 to 8 $\mu$m/min, particularly preferably of 0.03 to 6 $\mu$m/min, very particularly preferably of 0.04 to 2 $\mu$m/min, wherein the temperature for determining the ice crystal growth is -12 °C;

b. within a time period of 300 min at a temperature of -12 °C, a reduction of the ice crystal number of 1 to 99%, preferably of 10 to 90%, particularly preferably of 20 to 90%, very particularly preferably of 40 to 80%;

c. a melting speed of 0 g/min to 100 g/min, preferably of 0 g/min to 80 g/min, particularly preferably of 0 g/min to 50 g/min, very particularly preferably 0 g/of min to 10 g/min, wherein 100 ml ice-cream is placed on a perforated grid having a hole diameter of 10 mm at a spacing of 2 mm for a time period of up to 80 min, and the ambient temperature in the melting test is 23 °C;

d. a freezing point of -0.1 °C to -15 °C, preferably of -0.1 °C to -12 °C, particularly preferably of -2 °C to -10 °C, and very particularly preferably of -2 °C to -5 °C;

e. a premix viscosity of 50 to 1200 mPas, preferably of 100 to 950 mPas, and particularly preferably of 200 to 500 mPas, wherein the viscosity of the premix is measured at a shear rate of 50 s$^{-1}$ at 4 °C;

f. an overrun of 10% to 170%, preferably 40% to 140%, particularly preferably 50% to 120%, very particularly preferably 90% to 110%;

g. a content of destabilised fat of 1 to 50 wt.%, preferably of 5 to 35 wt.%, particularly preferably of 8 to 25 wt.%, very particularly preferably of 10 to 20 wt.%, based on the total fat content of the ice-cream, wherein the content of destabilised fat is measured at a single wavelength of 540 nm;

h. an average ice crystal diameter of 0.01 to 200 $\mu$m, preferably of 0.1 to 150 $\mu$m, particularly preferably of 0.1 to 100 $\mu$m, very particularly preferably of 1 to 60 $\mu$m.

**14.** Ice-cream containing a composition used according to claims 1 to 10, or ice-cream according to either claim 12 or claim 13, **characterised in that** it is a plant-based ice-cream and preferably comprises, as ingredients:

a) water;

b) a plant-based source of fat, such as coconut oil, palm oil, cocoa butter, nuts or grain;

c) a plant-based protein source, such as pea, hemp or soya;

d) sugar and/or a sugar alternative.

**15.** Method for producing an ice-cream according to any of claims 12 to 14, at least comprising the steps of:

a. providing a composition according to any of claims 1 to 10;

b. optionally providing an aqueous solution, which is preferably milk and/or a milk product;

c. optionally providing further components, in particular a source of fat which is of plant or animal origin, or a combination thereof, a protein source which is of plant or animal origin, or a combination thereof, and/or a sugar and/or a sugar alternative;

d. combining, in particular mixing, the components provided in step a. to c., in order to obtain a mixture;

e. heating the mixture obtained in step d. to a temperature of at least 60 °C, in particular of at least 80 °C;

f. homogenising the mixture heated in step e., in particular by pressure homogenisation;

g. cooling the mixture, homogenised in step f., to 4 °C;

h. maturing the mixture at 4 to 6 °C;

i. freezing out the mixture, cooled in step g., to a temperature of less than - 4 °C.

**Revendications**

1. Utilisation d'une composition destinée à fabriquer de la crème glacée, de la crème glacée faiblement calorique, de la crème glacée végétale, ou de la crème glacée contenant de la protéine d'insecte, dans laquelle la composition comprend :

   a. une fibre végétale avec une teneur en pectine hydrosoluble entre 2 et 10 % en poids ;
   b. de la pectine soluble faiblement estérifiée avec un degré d'estérification inférieur à 50 % ;
   c. de la pectine soluble hautement estérifiée avec un degré d'estérification d'au moins 50 % ; et
   d. en option du sucre.

2. Utilisation selon la revendication 1, **caractérisée en ce que** la pectine soluble faiblement estérifiée de la composition est une pectine soluble amidée faiblement estérifiée.

3. Utilisation selon la revendication 1 ou 2, **caractérisée en ce que** la fibre végétale de la composition est choisie parmi le groupe présentant de la fibre d'agrume, de la fibre de pomme, de la fibre de betterave, de la fibre de carotte, de la fibre de petit pois, dans laquelle la fibre végétale est de manière préférée une fibre d'agrume ou une fibre de pomme.

4. Utilisation selon la revendication 1 à 3, **caractérisée en ce que** la composition contenant du sucre présente la fibre végétale en une proportion de 20 à 50 % en poids, de manière avantageuse de 30 à 40 % en poids, et en particulier de 34 à 36 % en poids, par rapport au poids total de la composition ; et/ou

   la composition contenant du sucre présente la pectine soluble hautement estérifiée, qui est de manière préférée une pectine amidée faiblement estérifiée et de manière particulièrement préférée une pectine d'agrume soluble amidée faiblement estérifiée, en une proportion de 10 à 35 % en poids, de manière préférée de 15 à 30 % en poids, de manière particulièrement préférée de 20 à 25 % en poids et en particulier de 22,5 % en poids par rapport au poids total de la composition ; et/ou
   la composition contenant du sucre présente la pectine soluble hautement estérifiée, qui est de manière préférée une pectine d'agrume soluble hautement estérifiée, en une proportion de 5 à 30 % en poids, de manière préférée de 10 à 20 % en poids, de manière particulièrement préférée de 13 à 17 % en poids, et en particulier de manière préférée de 15 % en poids, par rapport au poids total de la composition ; et/ou
   la composition contenant du sucre contient le sucre en une proportion de 18 à 40 % en poids, de manière préférée de 20 à 38 % en poids et de manière particulièrement préférée de 23 à 32 % en poids par rapport au poids total de la composition.

5. Utilisation selon l'une quelconque des revendications précédentes, **caractérisée en ce que** la fibre végétale de la composition présente une ou plusieurs des propriétés suivantes :

   a. un nombre de Weissenberg dynamique dans une suspension à 2,5 % en poids supérieur à 4,0, en particulier supérieur à 5,0 ;
   b. un nombre de Weissenberg dynamique dans une dispersion à 2,5 % en poids supérieur à 5,0, en particulier supérieur à 6,0 ;
   c. une viscosité de 100 à 1200 mPas, de manière préférée de 350 à 950 mPas, et de manière particulièrement préférée de 380 à 850 mPas, dans laquelle la fibre végétale est dispersée dans de l'eau en tant que solution à 2,5 % en poids et la viscosité est mesurée avec un taux de cisaillement de 50 $s^{-1}$ à 20 °C ;
   d. une capacité de rétention d'eau de 20 à 34 g/g, de manière préférée de 22 à 30 g/g, et de manière particulièrement préférée de 23 à 28 g/g ;
   e. une solidité supérieure à 50 g ;
   f. une humidité inférieure à 15 %, de manière préférée inférieure à 10 % et de manière particulièrement préférée inférieure à 8 % ;
   g. dans une suspension aqueuse à 1,0 % en poids une valeur pH de 3,10 à 5,0 et de manière préférée de 3,4 à 4,6 ;
   h. une taille de grain, pour laquelle au moins 90 % des particules sont inférieurs à 300 pm ;
   i. une valeur de luminosité L* > 61 pour la fibre de pomme et L* > 88 pour la fibre d'agrume ;
   j. une teneur en fibres alimentaires de 80 à 95 % en poids ;
   k. la fibre végétale est une fibre végétale dépectinisée et de manière préférée une fibre de fruit dépectinisée ;
   l. la fibre végétale présente moins de 10 %, de manière préférée moins de 8 % et de manière particulièrement préférée moins de 6 % en pectine hydrosoluble.

**6.** Utilisation selon la revendication 5, **caractérisée en ce que** la fibre végétale est une fibre d'agrume contenant de la pectine, activée, qui présente une ou plusieurs des propriétés suivantes :

a. une limite d'écoulement II (rotation) dans la suspension de fibres supérieure à 1,5 Pa et de manière avantageuse supérieure à 2,0 Pa ;

b. une limite d'écoulement I (rotation) dans la dispersion de fibres supérieure à 5,5 Pa et de manière avantageuse supérieure à 6,0 Pa ;

c. une limite d'écoulement II (cross over) dans la suspension de fibres supérieure à 1,2 Pa et de manière avantageuse supérieure à 1,5 Pa ;

d. une limite d'écoulement I (cross over) dans la dispersion de fibres supérieure à 6,0 Pa et de manière avantageuse supérieure à 6,5 Pa ;

e. un nombre de Weissenberg dynamique dans la suspension de fibres supérieur à 7,0, de manière avantageuse supérieur à 7,5, et de manière particulièrement avantageuse supérieur à 8,0 ;

f. un nombre de Weissenberg dynamique dans la dispersion de fibres supérieur à 6,0, de manière avantageuse supérieur à 6,5 et de manière particulièrement avantageuse supérieur à 7,0 ;

g. une solidité dans une suspension aqueuse à 4 % en poids d'au moins 150 g, de manière particulièrement préférée d'au moins 220 g ;

h. une viscosité d'au moins 650 mPas, dans laquelle la fibre végétale dans l'eau est dispersée en tant que solution à 2,5 % en poids et la viscosité est mesurée avec un taux de cisaillement de 50 $s^{-1}$ à 20 °C ;

i. une capacité de rétention d'eau supérieure à 22 g/g ;

j. une humidité inférieure à 15 %, de manière préférée inférieure à 10 % et de manière particulièrement préférée inférieure à 8 % ;

k. dans une suspension aqueuse à 1,0 % en poids, une valeur pH de 3,1 à 4,75 et de manière préférée de 3,4 à 4,2 ;

l. une taille de grain, pour laquelle au moins 90 % des particules sont inférieurs à 250 $\mu$m, de manière préférée sont inférieurs à 200 $\mu$m, et en particulier sont inférieurs à 150 $\mu$m ;

m. une valeur de luminosité L* > 90, de manière préférée L* > 91 et de manière particulièrement préférée L* > 92 ;

n. une teneur en fibres alimentaires de la fibre de 80 à 95 % ;

o. la fibre d'agrume activée contenant de la pectine présente une teneur inférieure à 10 %, de manière avantageuse inférieure à 8 % et de manière particulièrement avantageuse inférieure à 6 % en pectine hydrosoluble.

**7.** Utilisation selon la revendication 5, **caractérisée en ce que** la fibre végétale de la composition est une fibre d'agrume contenant de la pectine, pouvant être activée, activée en partie, qui présente une ou plusieurs des propriétés suivantes :

a. une limite d'écoulement II (rotation) de la suspension de fibres de 0,1 - 1,0 Pa, de manière avantageuse de 0,3 - 0,9 Pa et de manière particulièrement avantageuse de 0,6 - 0,8 Pa ;

b. une limite d'écoulement I (rotation) dans la dispersion de fibres de 1,0 - 4,0 Pa, de manière avantageuse de 1,5 - 3,5 Pa et de manière particulièrement avantageuse de 2,0 - 3,0 Pa ;

c. une limite d'écoulement II (cross over) dans la suspension de fibres de 0,1-1,0 Pa, de manière avantageuse de 0,3-0,9 Pa et de manière particulièrement avantageuse de 0,6 - 0,8 Pa ;

d. une limite d'écoulement I (cross over) de la dispersion de fibres de 1,0 - 4,5 Pa, de manière avantageuse de 1,5 -4,0 Pa et de manière particulièrement avantageuse de 2,0 - 3,5 Pa ;

e. un nombre de Weissenberg dynamique dans la suspension de fibres de 4,5 - 8,0, de manière avantageuse de 5,0 - 7,5 et de manière particulièrement avantageuse de 7,0 - 7,5 ;

e. un nombre de Weissenberg dynamique dans la suspension de fibres de 5,0 - 9,0, de manière avantageuse de 6,0 - 8,5, et de manière particulièrement avantageuse de 7,0 - 8,0 ;

f. un nombre de Weissenberg dynamique dans la dispersion de fibres de 5,0 - 9,0, de manière avantageuse de 6,0 - 8,5 et de manière particulièrement avantageuse de 7,0 - 8,0 ;

g. une solidité dans une suspension aqueuse à 4 % en poids entre 60 g et 240 g, de manière préférée entre 120 g et 200 g et de manière particulièrement préférée entre 140 et 180 g ;

h. une viscosité de 150 à 600 mPas, de manière préférée de 200 à 550 mPas, et de manière particulièrement préférée de 250 à 500 mPas, dans laquelle la fibre végétale dans l'eau est dispersée dans l'eau en tant que solution à 2,5 % en poids et la viscosité est mesurée avec un taux de cisaillement de 50 $s^{-1}$ à 20 °C ;

j. une capacité de rétention d'eau supérieure à 20 g/g, de manière préférée supérieure à 22 g/g, et de manière particulièrement préférée supérieure à 24 g/g, et en particulier de manière préférée entre 24 et 26 g/g ;

j. une humidité inférieure à 15 %, de manière préférée inférieure à 10 % et de manière particulièrement préférée inférieure à 8 % ;

k. dans une suspension aqueuse à 1,0 % en poids, une valeur pH de 3,1 à 4,75 et de manière préférée de 3,4 à 4,2 ;

l. une taille de grain, pour laquelle au moins 90 % des particules sont inférieurs à 450 $\mu$m, et de manière préférée sont inférieurs à 350 $\mu$m, et en particulier sont inférieurs à 250 $\mu$m ;

m. une valeur de luminosité L* > 84, de manière préférée L* > 86 et de manière particulièrement préférée L* > 88 ;

n. une teneur en fibres alimentaires de la fibre de 80 à 95 % ;

o. la fibre d'agrume pouvant être activée présente moins de 10 %, de manière avantageuse moins de 8 % et de manière particulièrement avantageuse moins de 6 % en pectine hydrosoluble.

8. Utilisation selon la revendication 5, **caractérisée en ce que** la fibre végétale de la composition est une fibre de pomme activée contenant de la pectine, qui présente une ou plusieurs des propriétés suivantes :

a. une limite d'écoulement II (rotation) dans une suspension de fibres supérieure à 0,1 Pa, de manière avantageuse supérieure à 0,5 Pa, et de manière particulièrement avantageuse supérieure à 1,0 Pa ;

b. une limite d'écoulement I (rotation) dans la dispersion de fibres supérieure à 5,0 Pa, de manière avantageuse supérieure à 6,0 Pa et de manière particulièrement avantageuse supérieure à 7,0 Pa ;

c. une limite d'écoulement II (cross over) dans la suspension de fibres supérieure à 0,1 Pa, de manière avantageuse supérieure à 0,5 Pa et de manière particulièrement avantageuse supérieure à 1,0 Pa ;

d. une limite d'écoulement I (cross over) dans la dispersion de fibres supérieure à 5,0 Pa, de manière avantageuse supérieure à 6,0 Pa et de manière particulièrement avantageuse supérieure à 7,0 Pa ;

e. un nombre de Weissenberg dynamique dans la suspension de fibres supérieur à 4,0, de manière avantageuse supérieure à 5,0 Pa et de manière particulièrement avantageuse supérieur à 6,0 ;

f. un nombre de Weissenberg dynamique dans la dispersion de fibres supérieur à 6,5, de manière avantageuse supérieur à 7,5 et de manière particulièrement avantageuse supérieur à 8,5 ;

g. une solidité supérieure 50 g, de manière préférée supérieure à 75 g et de manière particulièrement préférée supérieure à 100 g, dans laquelle la fibre végétale est mise en suspension dans de l'eau en tant que solution à 6 % en poids ;

h. une viscosité supérieure à 100 mPas, de manière préférée supérieure à 200 mPas, et de manière particulièrement préférée supérieure à 350 mPas, dans laquelle la fibre végétale dans l'eau est dispersée en tant que solution à 2,5 % en poids et la viscosité est mesurée avec un taux de cisaillement de 50 $s^{-1}$ à 20 °C ;

i. une capacité de rétention d'eau supérieure à 20 g/g, de manière préférée supérieure à 22 g/g, de manière particulièrement préférée supérieure à 24 g/g, et en particulier de manière préférée supérieure à 27,0 g/g ;

j. une humidité inférieure à 15 %, de manière préférée inférieure à 8 % et de manière particulièrement préférée inférieure à 6 % ;

k. dans une suspension aqueuse à 1,0 % en poids, une valeur pH de 3,5 à 5,0 et de manière préférée de 4,0 à 4,6 ;

l. une taille de grain, pour laquelle au moins 90 % des particules sont inférieurs à 400 $\mu$m, et de manière préférée sont inférieurs à 350 $\mu$m, et en particulier sont inférieurs à 300 $\mu$m ;

m. une valeur de luminosité L* > 60, de manière préférée L* > 61 et de manière particulièrement préférée L* > 62 ;

n. une teneur en fibres alimentaires de la fibre de 80 à 95 % ;

o. la fibre de pomme présente moins de 10 %, de manière avantageuse moins de 8 % et de manière particulièrement avantageuse moins de 6 % en pectine hydrosoluble.

9. Utilisation selon l'une quelconque des revendications 2 à 8, **caractérisée en ce que** la pectine soluble amidée faiblement estérifiée de la composition, qui est de manière préférée une pectine de pomme ou une pectine d'agrume soluble amidée faiblement estérifiée, présente une ou plusieurs des propriétés suivantes :

a. un degré d'estérification de 25 à 50 %, de manière préférée de 29 à 45 %, de manière particulièrement préférée de 34 à 40 % et en particulier de manière préférée de 36 à 37,5 % ;

b. un degré d'amidation de 6 à 18 %, de manière préférée de 8 à 17 %, de manière particulièrement préférée de 10 à 16 % et en particulier de manière préférée de 11 à 15 % ;

c. une sensibilité au calcium de 500 à 3000 HPE, de manière préférée de 700 à 2500 HPE, de manière particulièrement préférée de 1000 à 2000 HPE, en particulier de manière préférée de 1400 à 1700 HPE.

10. Utilisation selon l'une quelconque des revendications précédentes, **caractérisée en ce que** la pectine soluble hautement estérifiée de la composition, qui est une pectine d'agrume soluble ou une pectine de pomme soluble hautement estérifiée, présente une ou plusieurs des propriétés suivantes :

a. un degré d'estérification de 60 à 80 %, de manière préférée de 64 à 76 %, de manière particulièrement préférée de 66 à 74 % et en particulier de manière préférée de 68 à 70 % ;
b. un pouvoir gélifiant de 140 à 280 °USA-Sag, de manière préférée de 160 à 260 °USA-Sag et de manière particulièrement préférée de 170 à 250 °USA-Sag.

11. Utilisation selon l'une quelconque des revendications précédentes, dans laquelle la composition est employée en tant que produit semi-fini ou se forme par ajout séparé d'une fibre végétale contenant de la pectine et/ou de la pectine soluble, de manière préférée amidée, faiblement estérifiée, et/ou de la pectine soluble faiblement estérifiée en tant que composition dans le produit final.

12. Crème glacée contenant une composition utilisée selon les revendications 1 à 10, **caractérisée en ce que** la crème glacée comprend un ou plusieurs des ingrédients suivants :

   a. une solution aqueuse, qui est de manière préférée du lait et/ou un produit à base de lait, dans laquelle la proportion en eau dans la crème glacée va de 20 à 80 % en poids, de manière préférée de 30 à 70 % en poids, de manière particulièrement préférée de 40 à 65 % en poids, et en particulier de manière préférée de 50 à 65 % en poids, par rapport au poids total de la crème glacée ;
   b. une source lipidique, qui est d'origine végétale ou animale, ou une combinaison de celles-ci, dans laquelle la teneur en lipides dans la crème glacée va de manière préférée de 0,5 à 30 % en poids, de manière particulièrement préférée de 0,5 à 20 % en poids, par ailleurs de manière préférée de 0,5 à 15 % en poids, et en particulier de manière préférée de 0,5 % à 12 % en poids, par rapport au poids total de la crème glacée ;
   c. une source protéique, qui est d'origine végétale ou animale, ou une combinaison de celles-ci, dans laquelle la teneur en protéines dans la crème glacée va de manière préférée de 0,5 à 30 % en poids, de manière particulièrement préférée de 1 à 20 % en poids, par ailleurs de manière préférée de 1 à 10 % en poids, en particulier de manière préférée de 2 à 5 % en poids, par rapport au poids total de la crème glacée ;
   d. du sucre et/ou une alternative au sucre, dans laquelle la teneur en sucre dans la crème glacée va de manière préférée de 5 à 50 % en poids, de manière particulièrement préférée de 8 à 40 % en poids, par ailleurs de manière préférée de 10 à 30 % en poids, en particulier de manière préférée de 12 à 25 % en poids, par rapport au poids total de la crème glacée ;

   dans laquelle la crème glacée contient la composition selon l'une quelconque des revendications 1 à 10 en une proportion de 0,05 à 1,5 % en poids, de manière préférée de 0,1 à 1,0 % en poids, de manière particulièrement préférée de 0,15 à 0,75 % en poids, et en particulier de manière préférée de 0,2 à 0,5 % en poids, par rapport au poids total de la crème glacée.

13. Crème glacée contenant une composition utilisée selon les revendications 1 à 10, ou crème glacée selon la revendication 12, **caractérisée en ce que** la crème glacée présente une ou plusieurs des propriétés suivantes :

   a. un taux de croissance de cristaux de glace de 0,001 à 10 $\mu$m/min, de manière préférée de 0,01 à 8 $\mu$m/min, de manière particulièrement préférée de 0,03 à 6 $\mu$m/min, en particulier de manière préférée de 0,04 à 2 $\mu$m/min, dans laquelle la température destinée à définir la croissance de cristaux de glace est de -12 °C :
   b. dans une période de temps de 300 min à une température de -12 °C, une réduction du nombre de cristaux de glace de 1 à 99 %, de manière préférée de 10 à 90 %, de manière particulièrement préférée de 20 à 90 %, en particulier de manière préférée de 40 à 80 % ;
   c. une vitesse de fonte de 0 g/min à 100 g/min, de manière préférée de 0 g/min à 80 g/min, de manière particulièrement préférée de 0 g/min à 50 g/min, en particulier de manière préférée de 0 g/min à 10 g/min, dans laquelle 100 ml de crème glacée est placée sur une grille trouée avec un diamètre de trou de 10 mm à la distance de 2 mm pendant une durée allant jusqu'à 80 min et la température ambiante est lors de l'essai de fonte de 23 °C :
   d. un point de congélation de -0,1 °C à - 15 °C, de manière préférée de - 0,1 °C à - 12 °C, de manière particulièrement préférée de - 2 °C à - 10 °C et en particulier de manière préférée de - 2 °C à - 5 °C ;
   e. une viscosité de prémélange de 50 à 1200 mPas, de manière préférée de 100 à 950 mPas, et de manière particulièrement préférée de 200 à 500 mPas, dans laquelle la viscosité du prémélange est mesurée à un taux de cisaillement de 50 $s^{-1}$ à 4 °C ;
   f. une inclusion d'air de 10 % à 170 %, de manière préférée de 40 % à 140 %, de manière particulièrement préférée de 50 % à 120 %, en particulier de manière préférée de 90 % à 110 % ;
   g. une proportion en matières grasses déstabilisées de 1 à 50 % en poids, de manière préférée de 5 à 35 % en poids, de manière particulièrement préférée de 8 à 25 % en poids, en particulier de manière préférée de 10 à 20 % en poids, par rapport à la teneur en lipides totale de la crème glacée, dans laquelle la proportion en matières grasses déstabilisées est mesurée à une longueur d'ondes individuelle de 540 nm ;
h. un diamètre de cristaux de glace moyen de 0,01 à 200 $\mu$m, de manière préférée de 0,1 à 150 $\mu$m, de manière particulièrement préférée de 0,1 à 100 $\mu$m, en particulier de manière préférée de 1 à 60 $\mu$m.

**14.** Crème glacée contenant une composition utilisée selon les revendications 1 à 10, ou crème glacée selon l'une quelconque des revendications 12 ou 13, **caractérisée en ce qu'**elle est une crème glacée végétale et comprend de manière préférée en tant qu'ingrédients :

a) de l'eau ;
b) une source lipidique végétale, comme de la graisse de coco, de la graisse de palme, du beurre de cacao, des noix ou des céréales ;
c) une source protéique végétale, comme des petits pois, du chanvre ou du soja ;
d) du sucre et/ou une alternative au sucre.

**15.** Procédé de fabrication d'une crème glacée selon l'une quelconque des revendications 12 à 14, comprenant au moins les étapes :

a. de fourniture d'une composition selon l'une quelconque des revendications 1 à 10 ;
b. de fourniture en option d'une solution aqueuse, qui est de manière préférée du lait et/ou un produit à base de lait ;
c. de fourniture en option d'autres composants, en particulier d'une source lipidique, qui est d'origine végétale ou animale ou une combinaison de celles-ci, d'une source protéique, qui est d'origine végétale ou animale ou une combinaison de celles-ci, et/ou d'un sucre et/ou d'une alternative au sucre ;
d. de regroupement, en particulier de mélange, des composants fournis dans les étapes a. à c. pour obtenir un mélange ;
e. de chauffage du mélange obtenu à l'étape d. à une température d'au moins 60 °C, en particulier d'au moins 80 °C ;
f. d'homogénéisation du mélange chauffé à l'étape e. en particulier par homogénéisation sous pression ;
g. de refroidissement du mélange homogénéisé à l'étape f. à 4 °C ;
h. de maturation du mélange à 4 à 6 °C ;
i. de congélation du mélange refroidi à l'étape g. à une température inférieure à - 4 °C.

**Fig. 1**

## Fig. 2

$10_b$

$20_b$

$30a_b/30b_b$

$35_b$

$40_b$

$50_b$

$60_b$

$70_b$

$80_b$

$100_b$

$110_b$

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 110973415 A
- US 20180192667 A1
- CN 102823657 A
- WO 0040098 A1
- US 6706306 B2
- US 5641533 A
- JP 2016106587 A

- US 20130230631 A
- WO 2009075851 A1
- WO 2019048715 A1
- US 20110268860 A
- DE 102020115526
- DE 102020115527
- DE 102020115501

**In der Beschreibung aufgeführte Nicht-Patentliteratur**

- *Food Technology,* 1959, vol. 13, 496-500

- **WINDHAB E ; MAIER T.** *Lebensmitteltechnik,* 1990, vol. 44, 185